# EUROPEAN PATENT APPLICATION

(11) **EP 4 350 410 A1**
(43) Date of publication of application: **10.04.2024**
(21) Application number: 22827243.1
(22) Date of filing: 17.05.2022
(51) Int. Cl.: G02B 6/44

(54) **OPTICAL DISTRIBUTION DEVICE, AND OPTICAL FIBER SCHEDULING METHOD AND SYSTEM**

(30) Priority: 26.06.2021 CN 202110715296
(71) Applicant: Huawei Technologies Co., Ltd., Shenzhen, Guangdong 518129 (CN)
(72) Inventor: WEN, Yida, Shenzhen, Guangdong 518129 (CN); JIANG, Yongshuo, Shenzhen, Guangdong 518129 (CN); HU, Jian, Shenzhen, Guangdong 518129 (CN)
(74) Representative: Körber, Martin Hans
(86) International application number: PCT/CN2022/093198
(87) International publication number: WO 2022/267745

(57) **Abstract**

Embodiments of this application disclose an optical fiber distribution device, an optical fiber scheduling method, and a system. The optical fiber distribution device includes a distribution area, a plugging apparatus, a storage area and/or a recycling area. The distribution area includes a first port and a second port. An optical path between the first port and the second port is implemented by using a connecting jumper. The plugging apparatus can move between the distribution area and the storage area, and/or between the distribution area and the recycling area. The plugging apparatus can fetch a standby jumper from a jumper storage apparatus in the storage area, and insert the standby jumper into the corresponding first port and second port; and/or the plugging apparatus is configured to: remove the connecting jumper from the corresponding first port and second port, and transport the removed connecting jumper to a jumper recycling apparatus in the recycling area. The optical fiber distribution device provided in this application is small, space-saving, easy to operate, and has advantages of good optical performance and low costs.

## Description

This application claims priority to Chinese Patent Application No. 202110715296.5, filed with the China National Intellectual Property Administration on June 26, 2021, and entitled "OPTICAL FIBER DISTRIBUTION DEVICE, OPTICAL FIBER SCHEDULING METHOD, AND SYSTEM", which is incorporated herein by reference in its entirety.

### TECHNICAL FIELD

This application relates to the field of communication technologies, and in particular, to an optical fiber distribution device, an optical fiber scheduling method, and a system.

### BACKGROUND

With popularization of fiber to the x (Fiber To The X, FTTX), optical fiber resources are more intensively used. In scenarios such as a data center (data center), an optical distribution network (Optical Distribution Network, ODN), and a street cabinet, there is a huge demand for optical fiber scheduling and port-level optical cross-connections. An automated optical distribution frame (Automated Optical Distribution Frame, AODF) is configured to terminate and distribute feeder optical fibers at a central office end in an optical fiber communication system, so that connection, allocation, and scheduling of optical fiber lines are conveniently implemented and can be remotely controlled, and a port is quickly switched. Another optical fiber distribution device or optical fiber management system, for example, an optical distribution frame (Optical Distribution Frame, ODF), also has an optical fiber scheduling requirement.

In an existing technology, a large quantity of adapter ports and a large quantity of optical fibers need to be arranged in an optical fiber distribution device. When an optical path needs to be connected, a corresponding optical fiber needs to be inserted into corresponding adapter ports. Storage of the large quantity of optical fibers occupies large space of the optical fiber distribution device. In addition, an optical fiber scheduling system needs to store a position and information that are of each optical fiber. During invoking, an optical fiber to be used is first positioned, and a process of inserting the optical fiber into corresponding adapter ports also needs to avoid another optical fiber that has been connected to adapter ports. As a result, a process of optical fiber scheduling and distribution is complex, and fiber adjustment operations that need to be performed by personnel of an optical network operator are increasingly heavy.

Therefore, it is necessary to study an optical fiber distribution device that saves space and is easy to operate.

### SUMMARY

Embodiments of this application provide an optical fiber distribution device, an optical fiber scheduling method, and an optical fiber scheduling system, which have advantages of saving space and being easy to operate.

According to a first aspect, this application provides an optical fiber distribution device. The optical fiber distribution device includes a distribution area, a plugging apparatus, a storage area, and/or a recycling area. In an implementation, the storage area and the recycling area may exist in one optical fiber distribution device at the same time. In an implementation, the optical fiber distribution device includes the storage area, but does not include the recycling area. In an implementation, the optical fiber distribution device includes the recycling area, but does not include the storage area. The storage area is configured to dispose a jumper storage apparatus. The jumper storage apparatus is configured to store a plurality of standby jumpers. The recycling area is configured to dispose a jumper recycling apparatus. The jumper recycling apparatus is configured to recycle a discarded jumper. It may be understood that a connecting jumper becomes a discarded jumper after being removed from a first port and a second port, that is, the discarded jumper is a removed connecting jumper. Even if only one connector of the connecting jumper is removed, the connecting jumper is also referred to as a discarded jumper. Subsequently, the discarded jumper is used to represent the removed connecting jumper. The distribution area includes at least the first port and the second port. Both the first port and the second port are adapter ports, and are configured to match with connectors of the connecting jumper, to implement an optical path. The connecting jumper includes two connectors and a cable connected between the two connectors. In an implementation, the connecting jumper has both a function of optical transmission and a function of current transmission. In an implementation, the connector may be an optical fiber connector. Alternatively, in another implementation, the connector may be an optoelectronic connector. Correspondingly, the cable may be an optical fiber, or the cable may include both the optical fiber and an electric wire. In this application, two connectors of a same connecting jumper are inserted into the first port and the second port respectively to implement an optical path.

The plugging apparatus can move between the distribution area and the storage area, and/or between the distribution area and the recycling area. The plugging apparatus can fetch one of the standby jumpers from the jumper storage apparatus, and insert connectors at two ends of the standby jumper respectively into the corresponding first port and second port to implement an optical path. The standby jumper becomes a connecting jumper after being inserted into the first port and the second port; and/or the two connectors of the connecting jumper are removed from the corresponding first port and second port, and the removed connecting jumper is the discarded jumper. The plugging apparatus is configured to transport the discarded jumper to the jumper recycling apparatus.

The optical fiber distribution device provided in this application is a consumable distribution device. The standby jumper is fetched from the jumper storage apparatus by the plugging apparatus. The standby jumper is used as a disposable consumable material. The plugging apparatus connects the standby jumper between the first port and the second port to implement an optical path of a corresponding service port. Because the standby jumper is the disposable consumable material, the standby jumper is stored in the jumper storage apparatus before being connected to the first port and the second port, and is in a natural storage state. After the standby jumper is connected to the first port and the second port, the standby jumper becomes a connecting jumper. The connecting jumper is in an untightened state. To be specific, a cable of the connecting jumper is not subject to any tension. For example, no structure such as a coil spring pulls the connecting jumper for a long period of time. Such a design can ensure mechanical and optical performance of the connecting jumper, and is conducive to ensuring quality (which specifically includes ensuring signal transmission performance and reducing insertion losses) of each optical path. Because mechanical and optical performance of the standby jumper is guaranteed, a communication service does not easily encounter a risk of a signal interruption or poor signal caused by poor quality of the optical fiber. Therefore, this application helps reduce the risk of the optical communication service.

Because the jumper storage apparatus is an independent module, the jumper storage apparatus may be mounted in the optical fiber distribution device through detachable assembly, and a user may configure the jumper storage apparatus based on a demand (based on a required quantity of standby jumpers). When the required quantity is small, a quantity of standby jumpers may be small. After the standby jumpers in the jumper storage apparatus are used up, standby jumpers may be replenished or the jumper storage apparatus may be replaced instead of storing a large quantity of standby jumpers in the jumper storage apparatus. A volume of the jumper storage apparatus may be designed to be miniaturized, so that the optical fiber distribution device can be miniaturized, and costs of the optical fiber distribution device can be reduced.

In a possible implementation, the jumper storage apparatus is directly mounted inside the optical fiber distribution device, and the jumper storage apparatus is detachably connected to a frame (or a housing or a framework) of the optical fiber distribution device, to facilitate replacement. In this implementation, the storage area is an area in which the jumper storage apparatus is mounted. In another implementation, the storage area of the optical fiber distribution device provided in this application may be a window (interface) for the optical fiber distribution device to receive a standby jumper. The optical fiber distribution device does not include the jumper storage apparatus. The jumper storage apparatus is an apparatus independently disposed outside the optical fiber distribution device. The jumper storage apparatus may be transported (or loaded) to the storage area of the optical fiber distribution device by using an external device. That is, the jumper storage apparatus may be used through an external connection.

In a possible implementation, the jumper recycling apparatus is directly mounted inside the optical fiber distribution device, and the jumper recycling apparatus is fastened to a frame (or a housing or a framework) of the optical fiber distribution device. In this implementation, the recycling area is an area in which the jumper recycling apparatus is mounted. In another implementation, the storage area of the optical fiber distribution device provided in this application may be a window (interface) for the optical fiber distribution device to receive a standby jumper. The optical fiber distribution device does not include the jumper recycling apparatus. The jumper recycling apparatus is an apparatus independently disposed outside the optical fiber distribution device. The jumper recycling apparatus may be transported (or loaded) to the recycling area of the optical fiber distribution device by using an external device. That is, the jumper recycling apparatus may be used through an external connection.

In a possible implementation, the optical fiber distribution device includes a first distribution panel and a second distribution panel, the first distribution panel and the second distribution panel are oppositely disposed at an interval in the distribution area, a plurality of first ports are disposed on the first distribution panel, a plurality of second ports are disposed on the second distribution panel, and the first ports face toward the second ports.

In this application, two distribution panels that are independent of each other and that are oppositely disposed at an interval are disposed, and the first ports and the second ports are respectively disposed on the different distribution panels. An area between the two distribution panels is accommodating space for connecting jumpers. This solution is beneficial to increasing quantities of first ports and second ports. More ports may be disposed within limited space, and more optical paths may be integrated.

In a possible implementation, the first distribution panel and the second distribution panel are securely disposed inside the optical fiber distribution device, and the plugging apparatus can extend between the first distribution panel and the second distribution panel, and can be moved to the first port and the second port.

In the solution provided in this implementation, a standby jumper is arranged between the first distribution panel and the second distribution panel by moving the plugging apparatus, and connectors of the standby jumper are respectively inserted into the first port and the second port at fixed positions by using the plugging apparatus. A target position to which the plugging apparatus carrying the connector is to be moved may be defined by using a specific coordinate position of each port, to facilitate distribution management.

In a possible implementation, the first port is one of a plurality of ports that are rotationally symmetrically distributed on the first distribution panel by using a central axis as a center, the second port is one of a plurality of ports that are rotationally symmetrically distributed on the second distribution panel by using the central axis as a center, and the first distribution panel and the second distribution panel can rotate by using the central axis as a center. In a specific implementation, the first port is disposed close to an edge of the first distribution panel, and the first distribution panel may be a circle or a polygon. The second port may also use a same design. In the solution provided in this implementation, the first distribution panel and the second distribution panel are set to a rotatable state, and rotation of the distribution panels and movement of the plugging apparatus are combined to implement insertion of the connector of the standby jumper or removal of the connector of the connecting jumper. Because the plugging apparatus does not need to extend into a position between the two distribution panels, and does not need to move therebetween either, a distance between the two distribution panels may be set to a small value. Therefore, this solution is beneficial to saving space. In this solution, in a distribution process, rotation angles of the first distribution panel and the second distribution panel are greater than or equal to 180 degrees and less than or equal to 360 degrees. The connecting jumper connected between the first port and the second port bypasses the central axis. In this implementation, two oppositely disposed distribution panels are disposed, so that quantities of first ports and second ports on a distribution panels of the optical fiber distribution device can be increased, and a service volume of the optical fiber distribution device can be increased.

In a possible implementation, the first distribution panel and the second distribution panel are securely connected as a whole, and the first distribution panel and the second distribution panel can rotate synchronously by using the central axis as the center. The first distribution panel and the second distribution panel rotate synchronously, so that this solution has a simple driving structure. This is beneficial to saving costs of the optical fiber distribution device.

In another implementation, the first distribution panel and the second distribution panel may alternatively have a connection relationship of relative rotation. To be specific, the first distribution panel and the second distribution panel are not fastened to a same rotating shaft, but each has a rotating shaft. In a distribution process, the first distribution panel and the second distribution panel do not rotate at the same time. In this solution, the two distribution panels may be connected to a same drive motor, and the drive motor is connected between the two panels by using a clutch structure. The drive motor is connected to the first distribution panel or the second distribution panel by switching the clutch structure.

In a possible implementation, the first distribution panel and the second distribution panel are connected by using a fiber routing structure, the fiber routing structure is located at the central axis, and the fiber routing structure is configured to bypass the connecting jumper. In this implementation, the fiber routing structure not only has a function of connecting to the first distribution panel and the second distribution panel, but also has a function of fiber winding. This solution can implement distribution within small space, and helps save space.

In a possible implementation, the optical fiber distribution device includes an integrated distribution panel, a plurality of ports are disposed on the integrated distribution panel, and the plurality of ports include the first port and the second port. When an optical communication service does not need a large quantity of ports, a small size of the optical fiber distribution device becomes a development trend. In this implementation, the first port and the second port are disposed on the integrated distribution panel. This facilitates a miniaturization design of the optical fiber distribution device.

In a possible implementation, the plurality of ports are rotationally symmetrically distributed on the integrated distribution panel by using a central axis as a center.

In a specific implementation, the connecting jumper connected between the corresponding first port and the second port bypasses the central axis. In a specific implementation, the distribution panel includes a planar insertion surface, and the plurality of ports are disposed on the insertion surface and face toward a same direction. In a specific implementation, the distribution panel includes a cylindrical insertion surface, and the plurality of the ports are disposed on the insertion surface and face toward a direction away from the rotation axis. In a specific implementation, the distribution panel includes a cylindrical insertion surface, and the plurality of ports are disposed on the insertion surface and face toward the rotation axis.

In a possible implementation, the integrated distribution panel can rotate around the central axis, and the integrated distribution panel is rotated to implement insertion of the standby jumper or removal of the connecting jumper by the plugging apparatus at a fixed position. In this implementation, a distribution procedure is completed respectively set on the distribution panel and the plugging apparatus, and a design of a structure of the plugging apparatus does not need to be very complex. This is beneficial to saving space.

In a possible implementation, a rotation range of the integrated distribution panel is greater than or equal to 180 degrees and less than or equal to 360 degrees. By limiting the rotation range of the integrated panel, each connecting jumper can bypass the central axis.

In a possible implementation, a first distribution area and a second distribution area are disposed on the integrated distribution panel, the first distribution area and the second distribution area are symmetrically distributed on two sides of a symmetry axis, the symmetry axis intersects the central axis, the first port is located in the first distribution area, and the second port is located in the second distribution area.

In a possible implementation, the plurality of ports are arranged as one or more rows of port groups, and the one or more rows of port groups are of rotational symmetry architectures by using the central axis as a center. An angle of the one or more rows of port groups around the central axis is 360 degrees or less than 360 degrees.

In a possible implementation, lengths of all the connecting jumpers are equal, lengths of all the standby jumpers are equal, and the lengths of the connecting jumpers and the standby jumpers are equal. For example, the lengths of all the connecting jumpers are all L, and a distance between each port and the central axis is R, where 2R≤L≤3R. The equal lengths limited in this implementation may be understood as being approximately equal. For example, based on a design of the equal lengths of the connecting jumpers, a tolerance is allowed for the lengths of individual or some connecting jumpers, and the design of the equal lengths may be understood as being within a preset tolerance range of a standard length.

In a possible implementation, the jumper storage apparatus includes a first area and a second area, the second area is adjacent to the first area, interior space of the first area communicates with interior space of the second area, connectors of the standby jumpers are located in the first area, cables of the standby jumpers are located in the second area, the first area is provided with a jumper fetching window, the jumper fetching window is configured to accommodate the connectors of one of the standby jumpers, and the jumper fetching window is a position at which the plugging apparatus fetches the standby jumper from the jumper storage apparatus.

In a possible implementation, the first area is in a long strip shape, and the connectors of the standby jumpers are arranged in a linear array along an extension direction of the first area, and the connector plugging apparatus jumper storage apparatus is arranged.

In a possible implementation, there is one first area, the second area is adjacent to the first area, there is one jumper fetching window, and the connectors at two ends of the same standby jumper are disposed adjacently in the first area.

In a possible implementation, there are two first areas, each of the first areas has one jumper fetching window, the second area is located between the two first areas, and the connectors at two ends of the same standby jumper are respectively located in the different first areas.

In a possible implementation, the jumper storage apparatus includes an elastic mechanism. The elastic mechanism is connected between the connector of the standby jumper and a housing of the jumper storage apparatus, to provide abutting force in a first direction. The abutting force acts on the connector. When the connector in the jumper fetching window is fetched by the plugging apparatus, the remaining connectors move under an action of the abutting force, to fill a position in the jumper fetching window.

In a possible implementation, the optical fiber distribution device further includes a control system. The control system can monitor consumption of the standby jumpers of the jumper storage apparatus, to remind of replacement of the jumper storage apparatus. The control system is configured to activate a prompt function when no connector is present in the jumper fetching window.

In a possible implementation, the connectors at the two ends of the standby jumper are each provided with a dustproof cap.

In a possible implementation, the jumper storage apparatus includes a limiting structure, the limiting structure is disposed at the jumper fetching window, and the limiting structure is configured to match with the dustproof cap. In a process in which the plugging apparatus removes the connector from the jumper fetching window, the limiting structure can fasten the dustproof cap, so that the dustproof cap is separated from the connector of the standby jumper.

In a possible implementation, the jumper recycling apparatus includes a transmission mechanism and a recycling box. The transmission mechanism is configured to: receive the discarded jumper that is transported to the jumper recycling apparatus by the plugging apparatus, and transport the discarded jumper to the recycling box.

In a possible implementation, the transmission mechanism includes a pair of friction wheels. The discarded jumper is clamped by using the pair of friction wheels, and the discarded jumper is transported to the recycling box by rotating the friction wheels.

In a possible implementation, the transmission mechanism includes a conveyor belt, a jumper fixing structure is disposed on the conveyor belt, and the jumper fixing structure is configured to fasten the discarded jumper to the conveyor belt. The discarded jumper is transported to the recycling box through cooperation of the conveyor belt and the jumper fixing structure.

In a possible implementation, the jumper fixing structure is a bracket that is fastened to the conveyor belt and that is provided with an adapter port, and the discarded jumper is fastened to the conveyor belt by inserting the connector of the discarded jumper into the adapter port.

In a possible implementation, the jumper recycling apparatus further includes a jumper cutting mechanism, the jumper cutting mechanism is configured to cut off one connector of the connecting jumper, and the other connector of the connecting jumper whose connector has been cut off is transported to the jumper recycling apparatus by using the plugging apparatus.

In a possible implementation, connectors at two ends of each connecting jumper are respectively a first plug and a second plug, the first plug matches with the first port, and the second plug matches with the second port. The plugging apparatus removes the first plug first. The jumper cutting mechanism is configured to cut off the first plug. After the first plug is cut off, the plugging apparatus removes the second plug, and transports the second plug to the jumper recycling apparatus.

According to a second aspect, this application provides an optical fiber scheduling method, applied to the optical fiber distribution device according to the first aspect, and the method includes: The plugging apparatus fetches the standby jumper from the jumper storage apparatus, and inserts connectors at two ends of the standby jumper into the corresponding first port and second port respectively to implement an optical path. Alternatively, the plugging apparatus removes connectors at two ends of the connecting jumper from the first port and the second port, and transports the discarded jumper to the jumper recycling apparatus.

In a possible implementation, a process in which the plugging apparatus fetches the standby jumper from the jumper storage apparatus includes: The plugging apparatus fetches one of the connectors of the to-be-fetched standby jumper first from the jumper fetching window, inserts the fetched connector into the first port, then fetches the other connector of the to-be-fetched standby jumper from the jumper fetching window, and inserts the fetched connector into the second port.

In a possible implementation, a process in which the plugging apparatus fetches the standby jumper from the jumper storage apparatus includes: The plugging apparatus fetches the two connectors of the to-be-fetched standby jumper respectively from the two jumper fetching windows, and inserts the two fetched connectors respectively into the corresponding first port and second port.

In a possible implementation, a process in which the plugging apparatus transports the discarded jumper to the jumper recycling apparatus includes: The plugging apparatus transports the discarded jumper to the transmission mechanism, and starts the transmission mechanism to transport the discarded jumper to the recycling box by using the transmission mechanism.

In a possible implementation, before the plugging apparatus transports the discarded jumper to the jumper recycling apparatus, the method includes: The plugging apparatus removes the first plug, and transports the first plug to the jumper cutting mechanism. The jumper cutting mechanism cuts off the first plug. The plugging apparatus removes the second plug, and transports the second plug to the jumper recycling apparatus.

In a possible implementation, a process in which the plugging apparatus transports the discarded jumper to the jumper recycling apparatus includes: The plugging apparatus transports the discarded jumper to the pair of friction wheels. The pair of friction wheels clamp the discarded jumper. The friction wheel is rotated, and the discarded jumper wire is transported to the recycling box by friction force between the pair of friction wheels.

In a possible implementation, a process in which the plugging apparatus transports the discarded jumper to the jumper recycling apparatus includes: The plugging apparatus transports the discarded jumper to the conveyor belt, and fastens the discarded jumper to the conveyor belt, where a position at which the discarded jumper is fastened to the conveyor belt is a first position of the jumper recycling apparatus; starts the conveyor belt, to transport the position at which the discarded jumper is fastened to the conveyor belt to a second position of the jumper recycling apparatus; and releases a fixed connection between the conveyor belt and the discarded jumper, so that the discarded jumper falls into the recycling box.

In a possible implementation, after the fixed connection between the conveyor belt and the discarded jumper is released, the method further includes: The conveyor belt performs reverse transmission, so that the discarded jumper falls into the recycling box through the reverse transmission of the conveyor belt.

In a possible implementation, a process of fastening the discarded jumper to the conveyor belt includes: The plugging apparatus inserts a connector at one end of the discarded jumper into the adapter port on the bracket.

In a possible implementation, a process of releasing the fixed connection between the conveyor belt and the discarded jumper includes: The plugging apparatus removes a connector at one end of the discarded jumper from the adapter port on the bracket.

According to a third aspect, this application provides an optical fiber scheduling system. The system includes a controller and the optical fiber distribution device according to the first aspect, and the controller is configured to perform the optical fiber scheduling method according to the second aspect.

### BRIEF DESCRIPTION OF DRAWINGS

To describe the technical solutions in embodiments of the present invention or in the background more clearly, the following describes the accompanying drawings used in embodiments of the present invention or the background.
FIG. 1 is a schematic diagram of an architecture of a passive optical network, where an optical fiber distribution device provided in this application may be used in the passive optical network;
FIG. 2A is a schematic diagram of an intelligent management system for a cable network, where an optical fiber distribution device provided in this application may be used in the management system;
FIG. 2B schematically describes, by using three stations as an example, an interaction manner between the stations in the management system shown in FIG. 2A;
FIG. 3 is a schematic diagram of a framework of an optical fiber distribution device according to an implementation of this application;
FIG. 4 is a schematic diagram of a distribution area in an optical fiber distribution device according to an implementation of this application;
FIG. 5 is a schematic diagram of a distribution area in an optical fiber distribution device according to another implementation of this application;
FIG. 6 is a three-dimensional schematic diagram of an optical fiber distribution device according to an implementation of this application;
FIG. 7 is a three-dimensional schematic diagram of the optical fiber distribution device shown in FIG. 6 in another direction after a housing is removed;
FIG. 8 is a three-dimensional schematic diagram of the optical fiber distribution device shown in FIG. 6 in another direction after a housing is removed;
FIG. 9 is a schematic diagram of a first distribution panel (without adapter port) in the implementation shown in FIG. 6;
FIG. 10 is a schematic diagram of a plugging apparatus in the optical fiber distribution device according to the implementation shown in FIG. 6;
FIG. 11 is an enlarged view of a part I in FIG. 10, and mainly shows a specific structure of a track base;
FIG. 12 is an enlarged view of a part II in FIG. 10;
FIG. 13 is an enlarged view of a part III in FIG. 10;
FIG. 14 and FIG. 15 are schematic diagrams of a jumper storage apparatus in an optical fiber distribution device according to an implementation of this application;
FIG. 16 is an exploded view of an external interface assembly in the jumper storage apparatus shown in FIG. 14 and FIG. 15;
FIG. 17 is a schematic diagram of partial enlargement of an external interface assembly in the jumper storage apparatus shown in FIG. 14 and FIG. 15;
FIG. 18 and FIG. 19 are schematic diagrams of a transmission mechanism in a jumper recycling apparatus of an optical fiber distribution device according to an implementation of this application;
FIG. 20 and FIG. 21 are schematic diagrams of a jumper cutting mechanism in a jumper recycling apparatus of an optical fiber distribution device according to an implementation of this application;
FIG. 22 is a three-dimensional schematic diagram of an optical fiber distribution device according to an implementation of this application;
FIG. 23 is a schematic diagram of an integrated distribution panel in an implementation of the optical fiber distribution device according to the implementation shown in FIG. 22;
FIG. 24 is a schematic diagram of another direction of the integrated distribution panel shown in FIG. 23;
FIG. 25 is a schematic diagram of an optical fiber distribution device according to a specific implementation of this application;
FIG. 26 is a schematic diagram of a plugging apparatus in the implementation shown in FIG. 25;
FIG. 27 is a three-dimensional schematic diagram of enlargement of an actuator of a plugging apparatus on a fixed track in the implementation shown in FIG. 25;
FIG. 28 is a planer schematic diagram of enlargement of an actuator of a plugging apparatus on a fixed track in the implementation shown in FIG. 25;
FIG. 29 is a three-dimensional schematic exploded view of an actuator of a plugging apparatus and a fixed track in the implementation shown in FIG. 25;
FIG. 30 is a three-dimensional schematic exploded view of an actuator of a plugging apparatus in the implementation shown in FIG. 25;
FIG. 31 is a schematic structural diagram of a first gripper and a second gripper of an actuator of a plugging apparatus in an optical fiber distribution device, and a first panel and a second panel that are distributed on two sides of a fixed track, according to an implementation of this application;
FIG. 32 is a schematic diagram of a jumper cutting mechanism in an optical fiber distribution device according to an implementation of this application;
FIG. 33 is a schematic diagram of a transmission mechanism in a jumper recycling apparatus in an optical fiber distribution device according to an implementation of this application;
FIG. 34 is a schematic diagram of enlargement of a position of a material discharging area of the transmission mechanism shown in FIG. 33, where a shield door is in an open state;
FIG. 35 is a schematic diagram of enlargement of a position of a material discharging area of the transmission mechanism shown in FIG. 33, where a shield door is in a closed state;
FIG. 36A is a schematic diagram of a material discharging area in a state in which the transmission mechanism shown in FIG. 33 does not place a connector of a discarded jumper;
FIG. 36B is a schematic diagram of a material discharging area in a state in which the transmission mechanism shown in FIG. 33 places a connector of a discarded jumper in the material discharging area;
FIG. 36C is a schematic diagram of the transmission mechanism shown in FIG. 33 with a shield door being closed after the plugging apparatus places a connector and exits a material discharging port;
FIG. 37Ais a schematic diagram of a state in which a conveyor belt brings a connector of a discarded jumper into a bottom area after the conveyor belt is started by the transmission mechanism shown in FIG. 33;
FIG. 37B is a schematic diagram showing that the conveyor belt of the transmission mechanism shown in FIG. 33 transports the connector to a material taking area;
FIG. 38 is a schematic diagram of a material taking area of the transmission mechanism shown in FIG. 33, where a plugging apparatus removes a connector of a discarded jumper from a jumper fixing structure and places the connector on a conveyor belt;
FIG. 39 is a schematic diagram showing that the conveyor belt of the transmission mechanism shown in FIG. 33 transports the connector to a material taking area, where the material taking area is located in a bottom area;
FIG. 40 is a schematic diagram of an optical fiber distribution device according to an implementation of this application;
FIG. 41 is a three-dimensional schematic diagram of a distribution panel of an optical fiber distribution device according to an implementation of this application;
FIG. 42 is a three-dimensional schematic exploded view of the distribution panel shown in FIG. 41;
FIG. 43 is a schematic diagram of enlargement of a part I in FIG. 42;
FIG. 44 is a schematic diagram of enlargement of a part II in FIG. 41;
FIG. 45 is a schematic diagram of a distribution panel and a partial plugging apparatus that are of an optical fiber distribution device according to an implementation of this application;
FIG. 46 is a schematic diagram of a jumper storage apparatus in an optical fiber distribution device according to an implementation of this application;
FIG. 47 is a schematic diagram of the jumper storage apparatus shown in FIG. 46 without a part of a housing;
FIG. 48 is a schematic diagram of the jumper storage apparatus shown in FIG. 46 in another direction;
FIG. 49 is a schematic diagram of a connector in a distribution assembly according to an implementation of this application;
FIG. 50 is a sectional view of the connector shown in FIG. 49;
FIG. 51 is a schematic diagram of disposing a standby jumper having the connector shown in FIG. 49 in the jumper storage apparatus shown in FIG. 46;
FIG. 52 is a schematic diagram of a plugging apparatus in an optical fiber distribution device according to an implementation of this application;
FIG. 53 is a schematic diagram of a connection head in the plugging apparatus shown in FIG. 52;
FIG. 54, FIG. 55, FIG. 56, FIG. 57, FIG. 58, FIG. 59, and FIG. 60 illustrate a process in which the plugging apparatus inserts a connector into an adapter port on a distribution panel;
FIG. 61 is a schematic diagram of a process in which a plugging apparatus inserts two connectors of a standby jumper into a corresponding first port and a corresponding second port based on a distribution panel according to an implementation of this application;
FIG. 62 is a schematic diagram of an optical fiber distribution device according to an implementation of this application;
FIG. 63 is a schematic diagram of the optical fiber distribution device shown in FIG. 62 in another direction;
FIG. 64 is a top view of the optical fiber distribution device shown in FIG. 62;
FIG. 65 is a schematic diagram of a position relationship between parts in an optical fiber distribution device according to an implementation of this application;
FIG. 66 is a schematic diagram of a plugging apparatus in an optical fiber distribution device according to an implementation of this application;
FIG. 67, FIG. 68, FIG. 69, and FIG. 70 are schematic diagrams of a distribution process of an optical fiber distribution device according to an implementation of this application;
FIG. 71 is a schematic diagram of a jumper storage apparatus in an optical fiber distribution device according to an implementation of this application;
FIG. 72 is a schematic diagram of enlargement of a part of the jumper storage apparatus shown in FIG. 71;
FIG. 73 is a schematic diagram of the jumper storage apparatus shown in FIG. 71 without a housing;
FIG. 74 is a schematic diagram of a distribution panel in an optical fiber distribution device according to an implementation of this application;
FIG. 75 is a schematic diagram of a distribution panel in an optical fiber distribution device according to an implementation of this application; and
FIG. 76 is a schematic diagram of a distribution panel in an optical fiber distribution device according to an implementation of this application.

### DESCRIPTION OF EMBODIMENTS

The following describes embodiments of the present invention with reference to accompanying drawings in embodiments of the present invention.

An optical fiber distribution device in this application is applied to an optical network technology. The optical network technology refers to a network structure technology that uses optical fiber transmission. The optical network technology is not only a simple optical fiber transmission link, and uses optical and electronic control technologies to implement interconnection and flexible scheduling of multi-node networks based on large-capacity, long-distance, and high-reliability transmission media provided by optical fibers. An optical network usually refers to a wide area network, metropolitan area network, or newly built large-scale local area network that uses optical fibers as main transmission media.

An optical network or an optical fiber scheduling system provided in an implementation of this application is an ODN (optical fiber distribution Network, optical fiber distribution network). The ODN is an FTTH (Fiber-To-The-Home, fiber to the home) cable network based on a PON (Passive Optical Network, passive optical network) device, and provides an optical transmission channel between an OLT (Optical Line Terminal, optical line terminal) and an ONU (Optical Network Unit, optical network unit). In terms of functions, the ODN from a central office to a user side may be divided into four parts: a feeder cable subsystem, a distribution cable subsystem, a drop cable subsystem, and an optical fiber terminal subsystem.

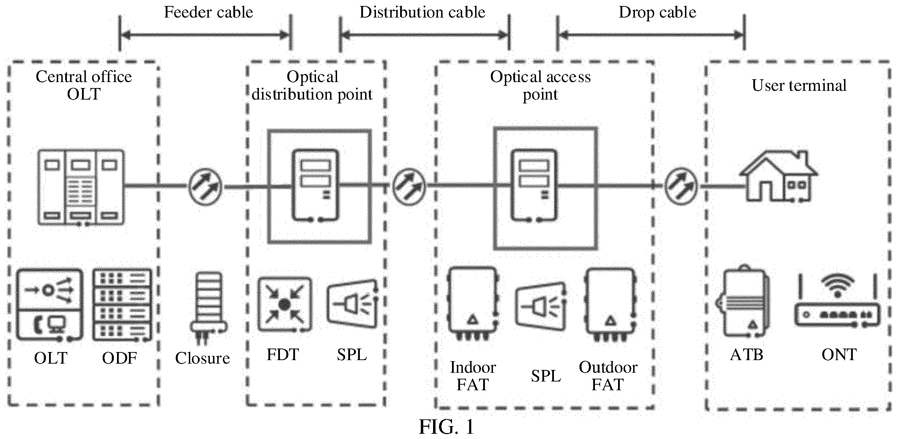

FIG. 1 shows an ODN architecture. Refer to FIG. 1, a central office OLT is a feeder cable subsystem, an optical fiber distribution point is a distribution cable subsystem, an optical access point is a drop cable subsystem, and a user terminal is an optical fiber terminal subsystem. An optical path is implemented between the central office OLT and the optical fiber distribution point through a feeder cable, an optical path is implemented between the optical fiber distribution point and the optical access point through a distribution cable, and an optical path is implemented between the optical access point and the user terminal through a drop cable. Specifically, the feeder cable from an ODF (Optical Distribution Frame, optical distribution frame) of the central office OLT (also referred to as a central office equipment room) to the optical fiber distribution point is used as a backbone cable to implement long-distance coverage. The distribution cable from the optical fiber distribution point to the optical access point is configured to distribute optical fibers to nearby user areas along the feeder cable. The drop cable from the optical access point to the user terminal implements fiber to the home. In FIG. 1, "Closure" is a cable closure, "FDT" is a fiber distribution terminal (that is, fiber distribution terminal, Fiber Distribution Terminal), "SPL" is a splitter (splitter), "FAT" is a fiber access terminal, "ATB" is an access terminal box, and "ONT" is an optical network terminal. The optical fiber distribution device provided in this application may be the ODF disposed in the central office OLT in the optical network shown in FIG. 1, or may be the FDT.

Specifically, the ODF is a distribution connection device between an optical network (for example, a local area network) and an optical communication device or between different optical communication devices. The ODF terminates and distributes a central office backbone cable in an optical communication system, to facilitate implementation of connection, distribution, and scheduling of optical fibers. As a network is increasingly integrated, an optical-digital hybrid distribution frame integrating the ODF, a DDF (Digital Distribution Frame, digital distribution frame), and a power distribution unit emerges, and is suitable for small and medium-sized distribution systems of fiber to the neighborhood, fiber to the building, remote modules, and wireless base stations.

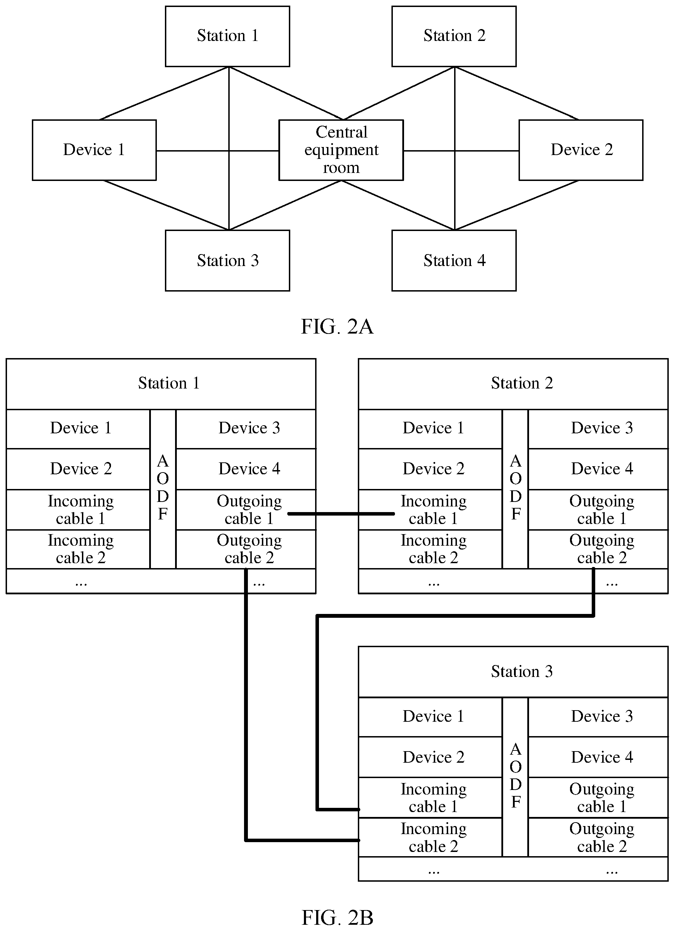

Another specific application scenario of the optical fiber scheduling system provided in this application is applied to an enterprise networking scenario, as shown in FIG. 2A. An intelligent cable network management system includes a central equipment room (which may be understood as a main station management system) deployed in a communication network management system, and a plurality of stations (which may be understood as substation switching systems distributed on network nodes at all levels) and devices (for example, an optical-fiber remote switching device). The central equipment room is a core of the enterprise cable network management system. The central equipment room performs optical communication with each station by using a communication interface module. In a specific implementation, an operation platform, a master station server, and several communication interface modules may be disposed in the central equipment room. FIG. 2A schematically shows four stations: a station 1, a station 2, a station 3, and a station 4. In an actual network deployment process, based on a specific situation, more stations may be included, or only one or two stations may be disposed. Each station may be regarded as a substation interaction system, and an architecture of the substation interaction system may be similar to that of the central equipment room. FIG. 2A schematically shows two devices: a device 1 and a device 2. In an actual network deployment process, a quantity of devices may be adjusted based on a specific situation.

As shown in FIG. 2A, optical communication interaction may exist between the central equipment room and the stations, between the central equipment room and the devices, between the stations, or between the stations and the devices. In FIG. 2B, three stations are used as an example to schematically describe an interaction manner between the stations. Refer to FIG. 2B. The stations (the station 1, the station 2, and the station 3) each includes the device 1, the device 2, a device 3, a device 4, an incoming cable 1, an incoming cable 2, an outgoing cable 1, an outgoing cable 2, and an AODF. The outgoing cable 1 of the station 1 is connected to the incoming cable 1 of the station 2, the outgoing cable 2 of the station 1 is connected to the incoming cable 2 of the station 3, and the outgoing cable 2 of the station 2 is connected to the incoming cable 1 of the station 3. In this way, optical communication between any two stations is implemented.

The AODF in each station in FIG. 2B may be an optical fiber distribution device provided in this application. The optical fiber distribution device provided in this application may be disposed in the central equipment room or each station. Input ports and output ports on a distribution panel of the optical fiber distribution device may implement interaction of optical communication services between the stations, between the devices, or between the stations and the devices. The optical fiber distribution device may implement interconnection between different devices on a same floor. When devices on different floors need to perform service interconnection, a device may be connected to an optical fiber distribution device on a current floor. Then, the optical fiber distribution device on the current floor is connected to an optical fiber distribution device on another floor by using an inter-floor cable. That is, the optical fiber distribution device provided in this application may further implement an optical communication connection to another optical fiber distribution device by using the cable.

In an implementation, the optical fiber distribution device provided in this application can implement automatic fiber adjustment, is also referred to as an automated optical distribution frame (Automated Optical Distribution Frame, AODF), and may be applied to any scenario in which optical fiber scheduling is required. In addition to the optical network systems shown in FIG. 1 and FIG. 2A, the application scenario thereof may further include application scenarios of a data center (data center), a street cabinet, and a fixed network. For example, the optical fiber distribution device provided in this application may be used in a network layout such as an access network, a transport network, wireless fronthaul, or backhaul.

In another implementation, the optical fiber distribution device provided in this application may alternatively be an optical distribution frame (Optical Distribution Frame, ODF) or another optical fiber management device.

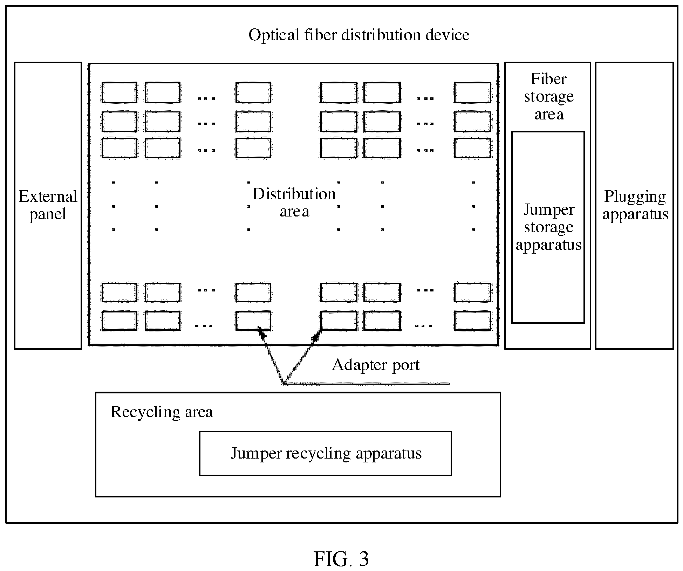

Refer to FIG. 3. The optical fiber distribution device provided in this application includes a distribution area, a plugging apparatus, a storage area, and/or a recycling area. The optical fiber distribution device provided in this application includes three architectures. In a first architecture, the optical fiber distribution device includes the distribution area, the plugging apparatus, the storage area, and the recycling area. In a second architecture, the optical fiber distribution device includes the distribution area, the plugging apparatus, and the storage area, but does not include the recycling area. In a third architecture, the optical fiber distribution device includes the distribution area, the plugging apparatus, and the recycling area, but does not include the storage area.

The distribution area includes a first port and a second port, and connectors at two ends of a connecting jumper are respectively inserted into the first port and the second port to implement an optical path. Both the first port and the second port are adapter ports, where the connectors of the jumper are inserted into the first port and the second port. Specifically, there are both a plurality of first ports and a plurality of second ports. The plurality of first ports may be separately connected to different devices or different networks, and the plurality of second ports may also be connected to the different devices or the different networks. For example, one of the first ports is connected to a device 1, and one of the second ports is connected to a device 2. In this application, a connecting jumper is connected between the first port and the second port, to implement an optical path between the device 1 and the device 2.

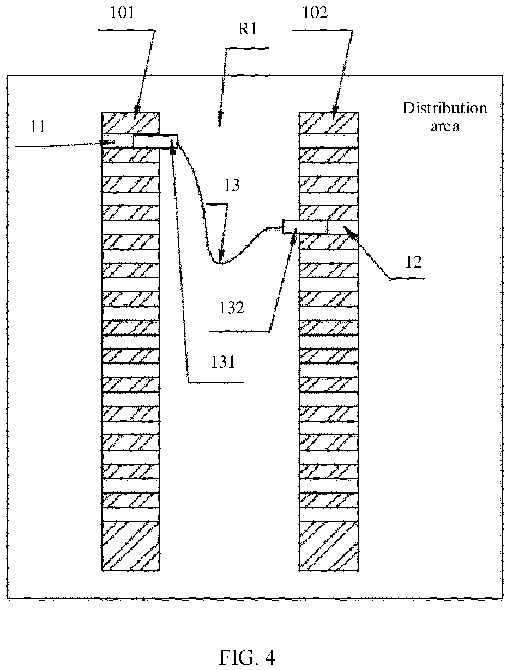

In an implementation, refer to FIG. 4. A first distribution panel 101 and a second distribution panel 102 are disposed in the distribution area. FIG. 4 shows a sectional view of the first distribution panel 101 and the second distribution panel 102. Apart that is not marked with a section line on the first distribution panel 101 is considered as a first port 11, and a part that is not marked with a section line on the second distribution panel 102 is considered as a second port 12. The first distribution panel 101 and the second distribution panel 102 are oppositely disposed at an interval, and jumper accommodating space R1 is formed between the first distribution panel 101 and the second distribution panel 102. A plurality of first ports 11 are disposed on the first distribution panel 101, and a plurality of second ports 12 are disposed on the second distribution panel 102. The first ports 11 face toward the second ports 12. A connector (also referred to as a plug) 131 at one end of a connecting jumper 13 is inserted into one first port 11, and a connector (also referred to as a plug) 132 on the other end is inserted into one second port 12. A cable 133 of the connecting jumper 13 is located in the jumper accommodating space.

Specifically, the connecting jumper 13 includes the two connectors 131 and the cable 132 connected between the two connectors. In an implementation, the connecting jumper 13 has both a function of optical transmission and a function of current transmission. In an implementation, the connector 131 may be an optical fiber connector. Alternatively, in another implementation, the connector 131 may be an optoelectronic connector. Correspondingly, the cable may be an optical fiber, or the cable may include both the optical fiber and an electric wire. For the connector 131 in the connecting jumper provided in this application, an optical fiber connector is used as an example, and is classified based on different transmission media. The connector may be classified into common single-mode and multi-mode connectors of silicon-based optical fibers, and other optical fiber connectors using plastic as transmission media. Based on structures of connection heads, the connectors may have various forms: FC, SC, ST, LC, D4, DIN, MU, MT, and the like. This application provides a connector for connecting jumpers and standby jumpers in addition to the various forms of plug structure described above, but also for a custom bullet type connector having miniaturization.

In an implementation, the connecting jumper provided in this application is a connection optical jumper, which is also referred to as an optical fiber jumper. The optical fiber jumper product is widely used in the fields such as a communication equipment room, fiber to the premises, a local area network, an optical fiber sensor, an optical fiber communication system, an optical fiber connection transmission device, and national defense and combat readiness. The optical fiber jumper is also suitable for a cable television network, a telecommunication network, a compute fiber optic network, and an optical test device.

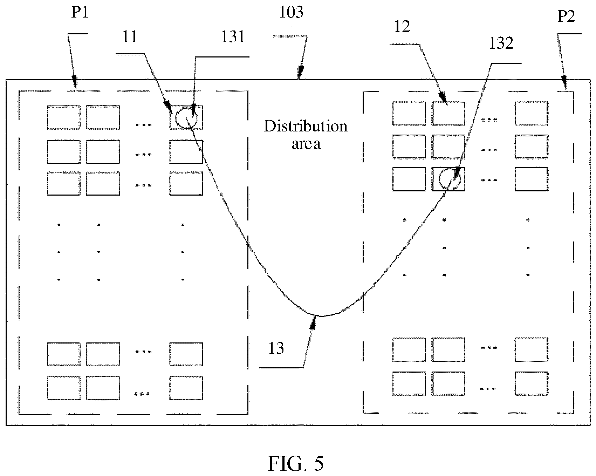

In another implementation, refer to FIG. 5. An integrated distribution panel 103 (where a solid rectangular box in FIG. 5 represents the integrated distribution panel) is disposed in the distribution area. The first ports 11 and the second ports 12 are distributed on the integrated distribution panel 103. This may be understood as: A plurality of ports are disposed on the integrated distribution panel, a part of the ports are the first ports, and the other part of the ports are the second ports. In another implementation, two distribution panels P1 and P2 (where two dashed rectangular boxes in FIG. 5 represent the two distribution panels P1 and P2) facing a same direction may be disposed in the distribution area. The first ports 11 are disposed on the distribution panel P1, and the second ports 12 are disposed on the other distribution panel P2.

The storage area is configured to dispose a jumper storage apparatus. The jumper storage apparatus is configured to store a plurality of standby jumpers. The standby jumper includes one cable and two connectors (which are plugs matched with adapter ports), and the two connectors are respectively connected to two ends of the cable. The standby jumper has a same structure as that of the connecting jumper. When the standby jumper is connected to the distribution panel, the standby jumper becomes a connecting jumper. In an implementation, the standby jumper may be an optical jumper, and a connector of the standby jumper is an optical fiber connector. There may be one or more jumper storage apparatuses. There may be a plurality of standby jumpers in the jumper storage apparatus. A quantity of standby jumpers may be determined based on a demand of a specific application scenario of the optical fiber distribution device. When a service is frequently updated or scheduled, a large quantity of standby jumpers may be configured, or a quantity of jumper storage apparatuses may be increased. When a service is less updated or scheduled, the quantity of standby jumpers in the jumper storage apparatuses may be small, or even only one standby jumper is stored in the jumper storage apparatus. Specifically, in an implementation, all standby jumpers have a same model and a same size, and all the standby jumpers have equal lengths. In another implementation, a difference between lengths of different standby jumpers may fall within a preset range. That is, a concept of "equal length" of the standby jumpers may be understood as that sizes of all the standby jumpers fall within the preset range.

The recycling area is configured to dispose a jumper recycling apparatus. The jumper recycling apparatus is configured to recycle a discarded jumper. A specific meaning of "discarded" refers to a replaced jumper in a service optical path. In an implementation, after being transported to the recycling box, the discarded jumper may include only one connector connected to one end of the cable, and the other connector is cut off in a jumper recycling process to facilitate recycling of the discarded jumper. For example, when the connectors of the connecting jumper have a common SC plug structure, the connecting jumper becomes a discarded jumper after being removed from the distribution panel. To ensure smoothness of the jumper recycling process and prevent a connector at an end of the discarded jumper from be wound or impeded by another connecting jumper in the jumper recycling process, affecting recycling of the jumper, one connector of the discarded jumper needs to be cut off. In another implementation, the discarded jumper may include a cable and two connectors connected to two ends of the cable. The two connectors are of a small size model, for example, customized bullet-shaped connectors. For a small size connector, a shell of the connector is designed to be sleek or sharp. In the jumper recycling process, the shell of the connector is not wound or impeded by a connecting jumper. Such discarded jumper whose connectors have not been cut off may be recycled and reused. Subsequently, the discarded jumper is used to represent a removed connecting jumper.

In a possible implementation, the jumper storage apparatus is directly mounted inside the optical fiber distribution device, and the jumper storage apparatus is detachably connected to a frame (or a housing or a framework) of the optical fiber distribution device, to facilitate replacement. In this implementation, the storage area is an area in which the jumper storage apparatus is mounted. In another implementation, the storage area of the optical fiber distribution device provided in this application may be a window (interface) for the optical fiber distribution device to receive a standby jumper. The optical fiber distribution device does not include the jumper storage apparatus. The jumper storage apparatus is an apparatus independently disposed outside the optical fiber distribution device. The jumper storage apparatus may be transported (or loaded) to the storage area of the optical fiber distribution device by using an external device. That is, the jumper storage apparatus may be used through an external connection.

In a possible implementation, the jumper recycling apparatus is directly mounted inside the optical fiber distribution device, and the jumper recycling apparatus is fastened to a frame (or a housing or a framework) of the optical fiber distribution device. In this implementation, the recycling area is an area in which the jumper recycling apparatus is mounted. In another implementation, the storage area of the optical fiber distribution device provided in this application may be a window (interface) for the optical fiber distribution device to receive a standby jumper. The optical fiber distribution device does not include the jumper recycling apparatus. The jumper recycling apparatus is an apparatus independently disposed outside the optical fiber distribution device. The jumper recycling apparatus may be transported (or loaded) to the recycling area of the optical fiber distribution device by using an external device. That is, the jumper recycling apparatus may be used through an external connection.

The plugging apparatus may be understood as an automatic transporting and executing apparatus provided with a gripper (or a mechanical arm or a robot). The plugging apparatus can move between the distribution area and the storage area, and/or between the distribution area and the recycling area. The plugging apparatus can perform insertion and removal actions in the distribution area, performs a fiber fetching (to be specific, fetches a standby jumper from the jumper storage apparatus) action in the storage area, and performs an action of recycling a discarded jumper in the recycling area. The plugging apparatus can fetch the standby jumper from the jumper storage apparatus, and insert connectors at two ends of the standby jumper into the corresponding first port and second port respectively to implement an optical path; and/or remove connectors at two ends of the connecting jumper respectively from the corresponding first port and the second port, where the removed connecting jumper is the discarded jumper, and the plugging apparatus is configured to transport the discarded jumper to the jumper recycling apparatus.

A conventional optical fiber distribution device includes two distribution panels (or two distribution areas on one panel). One of the distribution panels (or the distribution areas) is configured to dispose connectors (plugs for inserting optical fiber adapters), and all the connectors are connected to optical fibers (also referred to as pigtails). This may be understood that the distribution panel is configured to connect to a large quantity of optical fibers, and these optical fibers are multiplexed optical fibers. To be specific, an optical fiber needs to be repeatedly used to meet different service demands. When an optical fiber needs to be used to connect to an optical path, the optical fiber needs to be removed from one distribution panel by the mechanical arm, transported to the other distribution panel, and inserted into an adapter port of the other distribution panel. When an optical path needs to be disconnected, a corresponding optical fiber needs to be recycled. To be specific, connectors of the optical fiber need to be removed from adapter ports, and returned to original positions. In this architecture, the optical fiber distribution device needs large space to store the optical fibers. Costs are high, and a volume is large. In addition, each optical fiber needs to be managed in sequence, and is in a straightened state in storage space. The optical fiber is in a stretched state for a long period of time. During a jumper insertion and removal process, back and forth pulling of the optical fiber leads to a decrease in a service life of the optical fiber. This may cause, for example, a risk of a signal interruption or a poor signal to an optical communication service.

The optical fiber distribution device provided in this application is a consumable distribution device. The standby jumper is fetched from the jumper storage apparatus by the plugging apparatus. The standby jumper is used as a disposable consumable material. The plugging apparatus connects the standby jumper between the first port and the second port to implement an optical path of a corresponding service port. Because the standby jumper is the disposable consumable material, the standby jumper is stored in the jumper storage apparatus before being connected to the first port and the second port, and is in a natural storage state. After the standby jumper is connected to the first port and the second port, the standby jumper becomes a connecting jumper. The connecting jumper is in an untightened state. To be specific, a cable of the connecting jumper is not subject to any tension. For example, no structure such as a coil spring pulls the connecting jumper for a long period of time. Such a design can ensure mechanical and optical performance of the connecting jumper, and is conducive to ensuring quality (which specifically includes ensuring signal transmission performance and reducing insertion losses) of each optical path. Because mechanical and optical performance of the standby jumper is guaranteed, a communication service does not easily encounter a risk of a signal interruption or poor signal caused by poor quality of the optical fiber. Therefore, this application helps reduce the risk of the optical communication service. Because the jumper storage apparatus is an independent module, the jumper storage apparatus may be mounted in the optical fiber distribution device through detachable assembly, and a user may configure the jumper storage apparatus based on a demand (based on a required quantity of standby jumpers). When the required quantity is small, a quantity of standby jumpers may be small. After the standby jumpers in the jumper storage apparatus are used up, standby jumpers may be replenished or the jumper storage apparatus may be replaced instead of storing a large quantity of standby jumpers in the jumper storage apparatus. A volume of the jumper storage apparatus may be designed to be miniaturized, so that the optical fiber distribution device can be miniaturized, and costs of the optical fiber distribution device can be reduced.

As shown in FIG. 3, the optical fiber distribution device further includes an external panel. The external panel is configured to provide an external port. It may be understood that several external ports are disposed on the external panel, the external ports may include an input port and an output port, and the external port is configured to connect to a terminal device and an external network. Specifically, a cable is connected between the terminal device and the external port, and between the external network and the external port, so that optical communication between different terminal devices or stations can be implemented by using the optical fiber distribution device, or optical communication between the terminal device and the external network can be implemented. Specifically, the external panel may be disposed in the distribution area, and the external port on the external panel and the first port (or the second port) in the distribution area may be integrated on one panel. The external panel may alternatively be outside the distribution area, and a signal at the first port or second port may be led to the external port on the external panel through a cable.

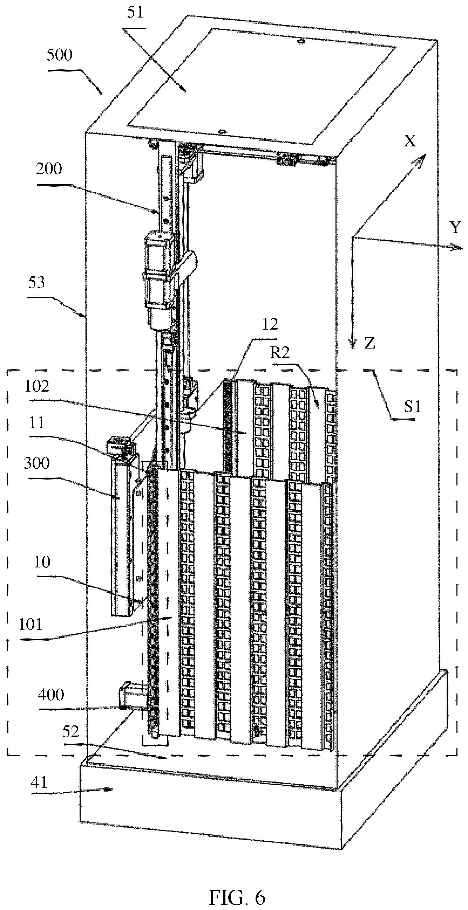

FIG. 6 is a schematic diagram of an optical fiber distribution device according to a specific implementation of this application. In this implementation, a housing 500 of the optical fiber distribution device is in a rectangular box shape. The housing 500 of the optical fiber distribution device includes a top plate 51, a bottom plate 52, and side plates 53 connected between the top plate and the bottom plate. The top plate 51 is configured to mount a plugging apparatus 200. One of the side plates 53 is configured to mount a jumper storage apparatus 300 and a part of a jumper recycling apparatus 400. A distribution area is located inside the housing 500. A recycling box 41 is disposed below the bottom plate 52 as a part of the jumper recycling apparatus 400.

In this implementation, the plugging apparatus 200 having a mechanical arm of three degrees of freedom is matched with two oppositely disposed distribution panels 101 and 102, to perform insertion and removal actions. The plugging apparatus 200 can fetch a standby jumper from the jumper storage apparatus 300, and inserts the standby jumper into corresponding adapter ports on the distribution panels 101 and 102. The plugging apparatus 200 can further remove connectors of a connecting jumper from the distribution panels 101 and 102. The removed connecting jumper becomes a discarded jumper. The plugging apparatus can transport the discarded jumper to the jumper recycling apparatus 400. "Three degrees of freedom" means that the mechanical arm can move in extension directions of X, Y, and Z axes. In the optical fiber distribution device, an extension direction between the first distribution panel 101 and the second distribution panel 102 is an X-axis direction, a vertical extension direction between the top plate 51 and the bottom plate 52 is a Z-axis direction, and a Y-axis extension direction is perpendicular to both the X-axis direction and the Z-axis direction.

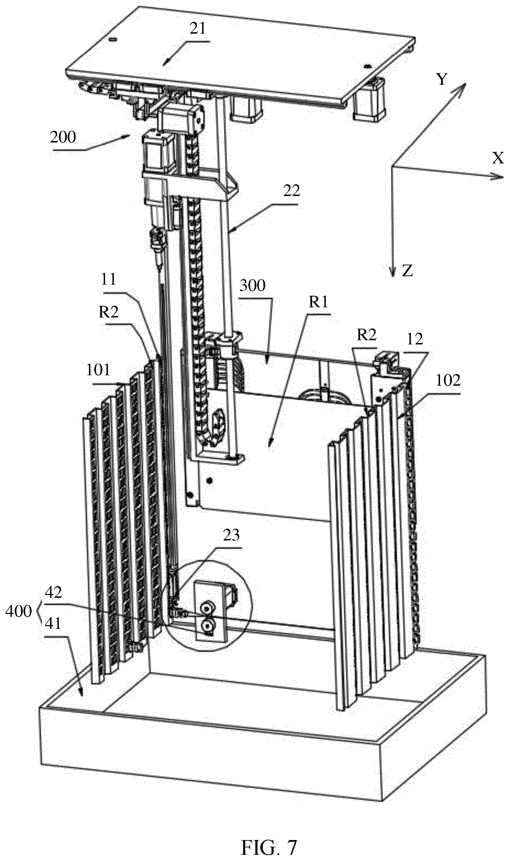

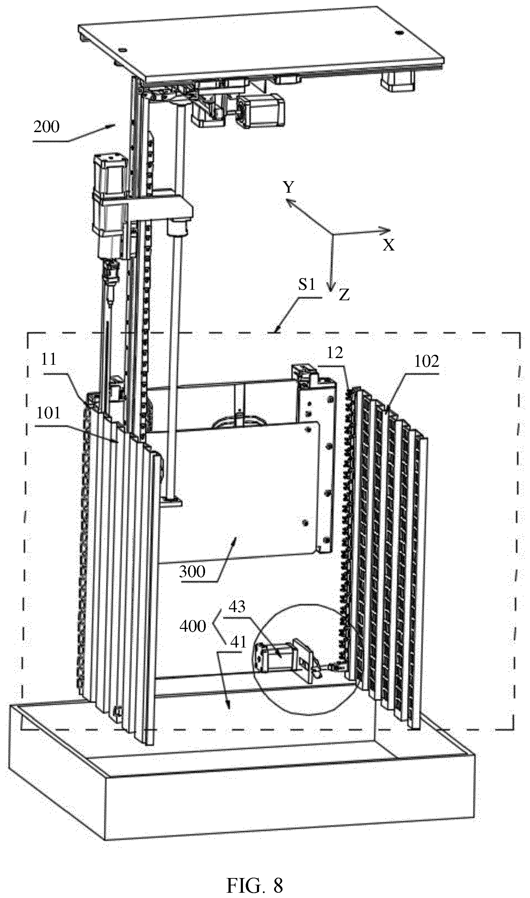

FIGS. 7 and 8 are three-dimensional schematic diagrams of the optical fiber distribution device shown in FIG. 6 in two different directions after the housing is removed. In this implementation, the two oppositely disposed distribution panels 101 and 102 of the optical fiber distribution device are respectively a first distribution panel 101 and a second distribution panel 102, and a jumper accommodating space R1 exists between the first distribution panel 101 and the second distribution panel 102. A first port 11 is disposed on the first distribution panel 101, and a second port 12 is disposed on the second distribution panel 102. Specifically, the first port 11 and the second port 12 are optical fiber adapter ports disposed on the first distribution panel 101 and the second distribution panel 102. A plurality of first ports 11 and a plurality of second ports 12 are arranged into a plurality of rows of port groups 10. In FIG. 6, a row of first ports 11 inside a dashed-line box on the first distribution panel 101 are referred to as a row of port group 10. An insertion and removal interval R2 is disposed between two adjacent rows of port groups 10. The insertion and removal interval R2 is configured to accommodate the mechanical arm of the plugging apparatus 200. The mechanical arm inserts the connector of the standby jumper or removes the connector of the connecting jumper in the insertion and removal interval R2. In FIG. 6 to FIG. 8, a row of port group 10 (where this row of port group 10 includes a plurality of first ports 11) is schematically drawn on the first distribution panel 101, and a row of port group 10 (where this row of port group 10 includes a plurality of second ports 12) is schematically drawn on the second distribution panel 102. An arrangement direction of the ports in the rows of port groups 10 is the Z-axis direction. This may be understood as that a plurality of rows of port groups 10 on the first distribution panel 101 are sequentially arranged at intervals along the Y-axis direction. This may be understood as that a vertical extension direction between two adjacent rows of port groups 10 is the Y-axis direction.

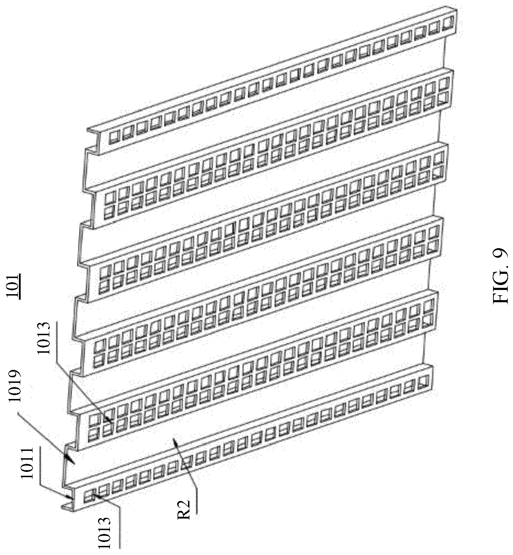

FIG. 9 is a schematic diagram of the first distribution panel 101 (without adapter ports) in the implementation shown in FIG. 6. The first distribution panel 101 and the second distribution panel 102 in the implementation shown in FIG. 6 may have a same structure. Refer to FIG. 9. The first distribution panel 101 is roughly rectangular. The first distribution panel 101 includes a plurality of bar-shaped protruding parts 1011, and an extension direction of each protruding part 1011 is the Z-axis direction. A plurality of protruding parts 1011 are sequentially arranged at intervals in the Y-axis direction. A recessed part 1019 is formed between adjacent protruding parts 1011. The recessed part 1019 and protruding parts 1011 on both sides of the recessed part 1019 together enclose the insertion and removal interval R2. A plurality of through holes 1013 are disposed on each protruding part 1011, and the plurality of through holes 1013 are arranged in one or two rows along the Z-axis direction. As shown in FIG. 9, six protruding parts 1011 arranged along the Y-axis direction are disposed on the first distribution panel 101 in total. In a specific implementation, only one row of through holes 1013 are disposed on two protruding parts 1011 arranged at two edge positions on two sides. Two rows of through holes 1013 are disposed on each of the four protruding parts 1011 arranged in a middle position. A position of each through hole 1013 is used to mount an optical fiber adapter, to obtain the first ports 11.

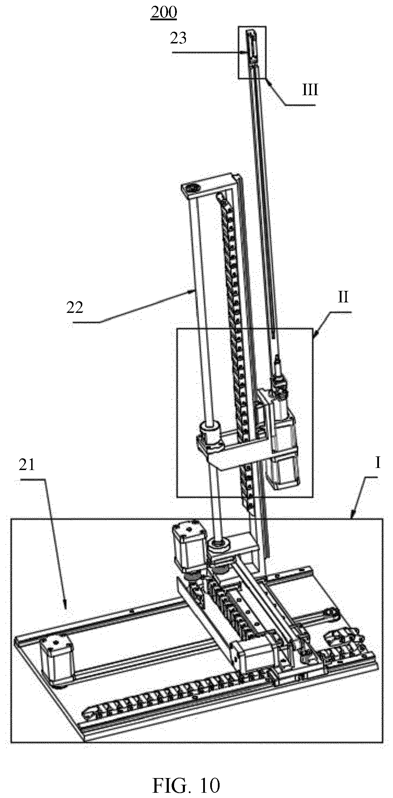

FIG. 10 is a schematic diagram of the plugging apparatus 200 according to the implementation shown in FIG. 6. The plugging apparatus 200 includes a track base 21, a moving slide track 22, and a mechanical arm 23. With reference to FIG. 6 to FIG. 8, the track base 21 of the plugging apparatus 200 is located outside the distribution area S1, and areas in the rectangular boxes represented by using dashed lines in FIG. 6 and FIG. 8 are the distribution area S1. Specifically, as shown in FIG. 6, the track base 21 is mounted on the top plate 51 of the housing 500, the distribution area S1 and the top plate 51 are disposed at an interval, and a distance between the distribution area S1 and the bottom plate 52 is less than a distance between the distribution area S1 and the top plate 51. The moving slide track 22 extends along the Z-axis direction and passes through the distribution area S1, and the mechanical arm 23 is slidably connected to the moving slide track 22.

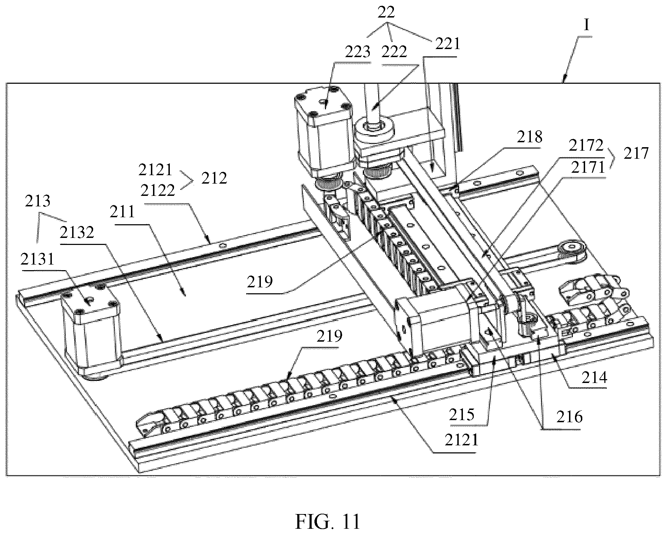

FIG. 11 is an enlarged view of a part I in FIG. 10, and mainly shows a specific structure of the track base 21. The track base 21 includes a first bracket 211, a first track 212, a first drive assembly 213, a first slider 214, a second bracket 215, a second track 216, a second drive assembly 217, and a second slider 218. The first bracket 211 is configured to bear the first track 212 and the first drive assembly 213, the second bracket 215 is configured to bear the second track 216 and the second drive assembly 217, the first slider 214 is configured to be fastened to the second bracket 215 and slidably connected to the first track 212, and the second slider 218 is configured to be fastened to the moving slide track 22 and slidably connected to the second track 216.

The first bracket 211 has a plate-shaped structure, and the first bracket 211 is fastened to the top plate 51 of the optical fiber distribution device. The first track 212 extends along the X-axis direction. The first track 212 includes two first slide tracks 2121 and 2122 that are oppositely disposed at an interval. Specifically, the first bracket 211 has a rectangular plate-shaped structure, and the two first slide tracks 2121 and 2122 are respectively fastened to a pair of long sides of the first bracket 211. Each of the first slide tracks 2121 and 2122 is in a long strip shape and extends in the X-axis direction. One end of the second bracket 215 is fastened to the first slider 214, and is slidably connected to the first slide track 2121 by using the first slider 214. The other end of the second bracket 215 is fastened to the first slider 214, and is slidably connected to the other first slide track 2122 by using the first slider 214. The first drive assembly 213 is located between the two first slide tracks 2121 and 2122, and is configured to drive the second bracket 215 to slide along the first track 212. Specifically, the first drive assembly 213 includes a first motor 2131 and a first synchronous belt 2132. The first motor 2131 drives the first synchronous belt 2132 to move, and the first synchronous belt 2132 drives the second bracket 215 to move on the first track 212.

The second track 216 is fastened to a surface that is of the second bracket 215 and that is away from the first track 212, and extends along the Y-axis direction. The second track 216 and the second bracket slide along the first track 212 together. One end of the moving slide track 22 is slidably connected to the second track 216. Specifically, the second slider 218 is slidably connected to the second track 216, and one end of the moving slide track 22 is fastened to the second slider 218. The second drive assembly 217 is located on the surface that is of the second bracket 215 and that is away from the first track 212. The second drive assembly 217 includes a second motor 2171 and a second synchronous belt 2172. The second motor 2171 is configured to drive the second synchronous belt 2172 to move, and the second synchronous belt 2172 is configured to drive the moving slide track 22 and the second slider 218 to slide on the second track 216.

Each of the first motor 2131 and the second motor 2171 needs to be electrically connected to a control center (not shown) of the optical fiber distribution device by using an electric wire. As shown in FIG. 11, cable management structures 219 are further disposed on the first bracket 211 and the second bracket 215, and the cable arrangement structure 219 is configured to dispose the electric wire.

A third bracket 221 is disposed at one end of the moving track 22, and the third bracket 221 is configured to be fastened to the second slider 218. The moving track 22 includes a lead screw 222 and a third motor 223. The lead screw 222 extends along the Z-axis direction, and one end of the lead screw 222 is rotatably connected to the third bracket 221. The third motor 223 is fastened to the third bracket 221, and the third motor 223 is configured to drive the lead screw 222 to rotate.

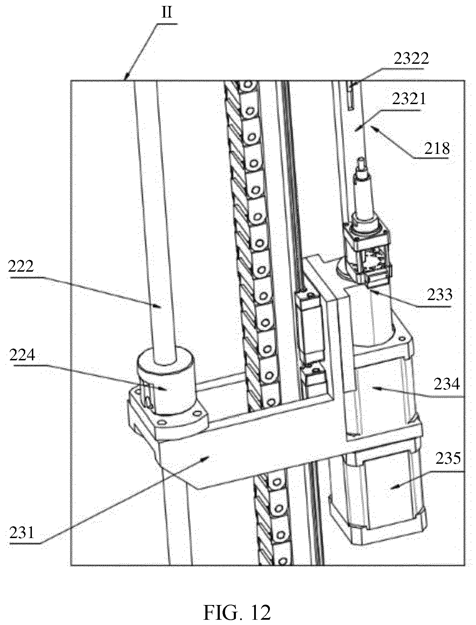

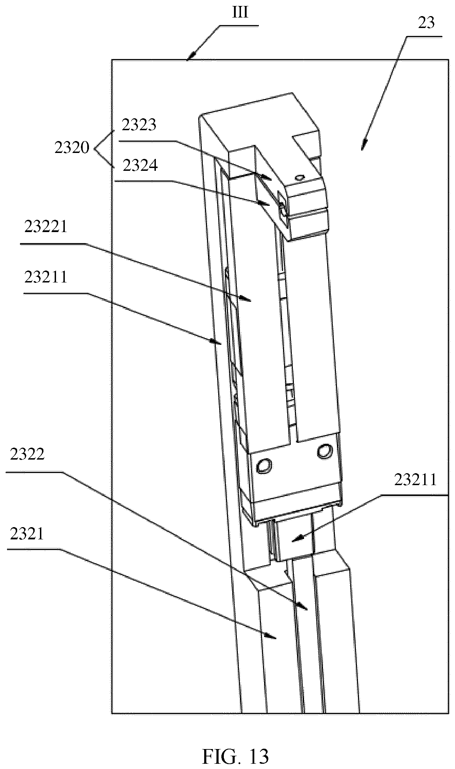

FIG. 12 is an enlarged view of a part II in FIG. 10. The moving slide track 22 further includes a nut structure 224. The nut structure 224 matches with the lead screw 222, and the third motor 223 drives the lead screw 222 to rotate, so that the nut structure 224 can move along the lead screw 222. The mechanical arm 23 includes a mechanical arm bracket 231, a gripper mechanism 232, a rotary pair 233, and a rotary motor 234. The mechanical arm bracket 231 is fastened to the nut structure 224 on the moving slide track 22. Rotation of the lead screw 222 drives the mechanical arm bracket 231 to move along the lead screw 222 in the Z-axis direction. The rotary pair 233 is connected between the gripper mechanism 232 and the mechanical arm bracket 231, and the rotary motor 234 is configured to drive the rotary pair 233 to move, to drive the gripper mechanism 232 to rotate relative to the mechanical arm bracket 231, so that the gripper mechanism 232 can insert and remove a connector in the port groups 10 on both sides of the insertion and removal interval R2 in the insertion and removal interval R2. The mechanical arm 23 further includes a gripper motor 235. The gripper motor 235 is configured to drive the gripper mechanism 232 to clamp or release the connector of the connecting jumper or the connector of the standby jumper. With reference to FIG. 12 and FIG. 13, specifically, the gripper mechanism 232 includes a connecting rod 2321 and a slide rod 2322 slidably connected to the connecting rod 2321. One end of the connecting rod 2321 is fastened to the mechanical arm bracket 231, and the gripper motor 235 is connected to one end of the slide rod 2322, and is configured to drive the slide rod 2322 to slide relative to the connecting rod 2321. FIG. 13 is an enlarged view of a part III in FIG. 10. A first claw portion 2323 is disposed at the other end of the connecting rod 2321. Specifically, an end that is of the connecting rod 2321 and that is away from the mechanical arm bracket 231 includes a first body 23211. A slide track 23212 extending along the Z-axis direction is disposed on the first body 23211. The first claw portion 2323 is located at an end of the first body 23211. The first claw portion 2323 and the first body 23211 may be of an integrally molded structure. A second claw portion 2324 is disposed on one end that is of the slide rod 2322 and that is away from the gripper motor 235. Specifically, the end that is of the slide rod 2322 and that is away from the gripper motor 235 includes a second body 23221. The second body 23221 is slidably connected to the slide track 23212 on the first body 23211. The second claw portion 2324 is located at an end of the second body 23221, and the second claw portion 2324 and the second body 23221 may be of an integrally molded structure. The first claw portion 2323 and the second claw portion 2324 are oppositely disposed and together constitute a gripper 2320. In this implementation, the slide rod 2322 slides relative to the connecting rod 2321 to drive the second body 23221 to slide on a slide track of the first body 23211. A distance between the first claw portion 2323 and the second claw portion 2324 is adjusted to achieve clamping and releasing of the gripper 2320.

The optical fiber distribution device includes a control system. The control system is configured to control the gripper mechanism of the mechanical arm to move along the X-axis direction before and after clamping or releasing the connector of the connecting jumper, to avoid the connectors and cables of the connecting jumpers in the first ports and second ports. Specifically, the control system is configured to control the gripper mechanism of the mechanical arm to move along the X-axis direction before the gripper mechanism moves to the connector of the connecting jumper, that is, the gripper mechanism moves along the X-axis direction from the insertion and removal interval R2 to the connector of to the connecting jumper. Alternatively, the control system is configured to control the gripper mechanism of the mechanical arm to move along the X-axis direction after the connector of the connecting jumper is removed. Specifically, the gripper mechanism carrying the connector of the connecting jumper moves to the insertion and removal interval R2, and transports the connector to the jumper recycling apparatus.

In the implementation shown in FIG. 6, in the Y-axis direction, the jumper storage apparatus 300 is arranged on one side of the distribution area S1, the jumper storage apparatus 300 is mounted on one of the side plates 53, and an inner surface that is of the side plate 53 and on which the jumper storage apparatus 300 is mounted faces the jumper accommodating space R1 between the first distribution panel 101 and the second distribution panel 102. In an implementation, the jumper storage apparatus 300 is detachably connected to the side plate 53. For example, the jumper storage apparatus 300 is detachably connected to the side plate 53 through cooperation between a slide track and a sliding slot. The sliding slot may be disposed on the side plate 53, and the slide track is correspondingly disposed on a housing of the jumper storage apparatus 300. Alternatively, the slide track is disposed on the side plate 53, and the sliding slot is correspondingly disposed on the housing of the jumper storage apparatus 300.

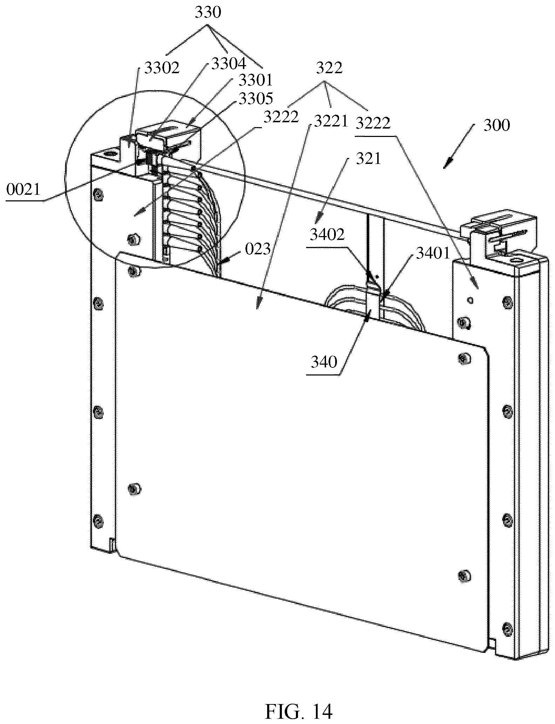

In an implementation, for a specific structure of the jumper storage apparatus 300, refer to FIG. 14 to FIG. 17.

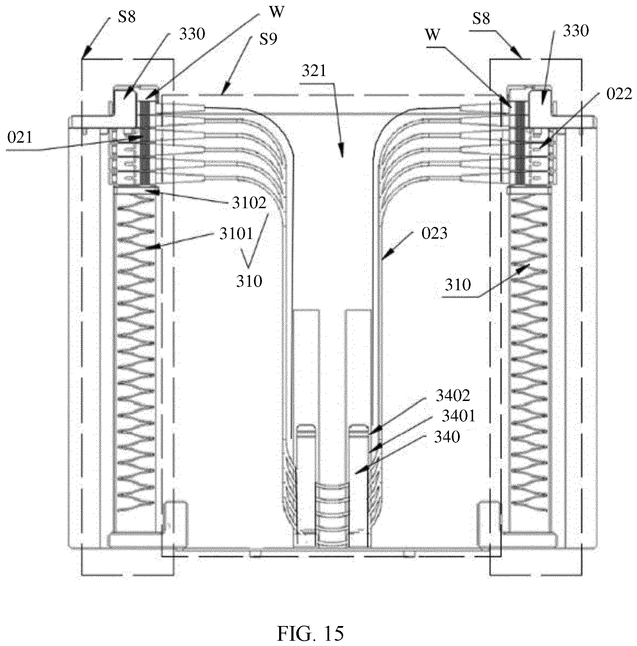

As shown in FIG. 14 and FIG. 15, in an implementation, the jumper storage apparatus 300 provided in this application includes components such as a housing 321, a cover 322, an external interface assembly 330, a first elastic mechanism 310, and a clamping mechanism 340. The cover 322 includes a first plate member 3221 and two second plate members 3222. The two second plate members 3222 are respectively located in two first areas S8, and the first plate member is located in a second area S9. The two second plate members 3222 are connected to two ends of the housing 321. Space enclosed by the two second plate members 3222 and the housing 321 is a storage channel for accommodating connectors 021 and 022 and the first elastic mechanism 310. The housing 321 and the cover 322 constitute a housing assembly. The external interface assembly 330 is located at a top of the storage channel and also at a top of the housing assembly. The external interface assembly 330 and the storage channel are disposed within a range of the first area S8. The storage channel includes hollow space enclosed by the housing 321, the cover 322, and the external interface assembly 330. A cavity of the storage channel may be formed in a plurality of manners. This is not specifically limited herein.

The first elastic mechanism 310 is located in the storage channel, and abuts between a bottom of the housing assembly and the connectors 021 and 022 of a standby jumper. The first elastic mechanism 310 is in an elastically compressed state to provide abutting force acting on the connectors 021 and 022 located in the storage channel. Specifically, the first elastic mechanism 310 includes a spring 3101 and a pressing block 3102. The pressing block 3102 is fastened to one end of the spring 3101, and the pressing block 3102 is configured to bear the connectors 021 and 022. One end that is of the spring 3101 and that is away from the pressing block 3102 is fastened to a bottom of the housing assembly. Specifically, the pressing block 3102 directly abuts the connectors 021 and 022 that are in the storage channel and that are closest to the first elastic mechanism 310. Because the pressing block 3102 has a larger surface area than that of the spring 3101, the pressing block 3102 can more easily support the connectors 021 and 022, to ensure that the connectors 021 and 022 in the storage channel are relatively stable.

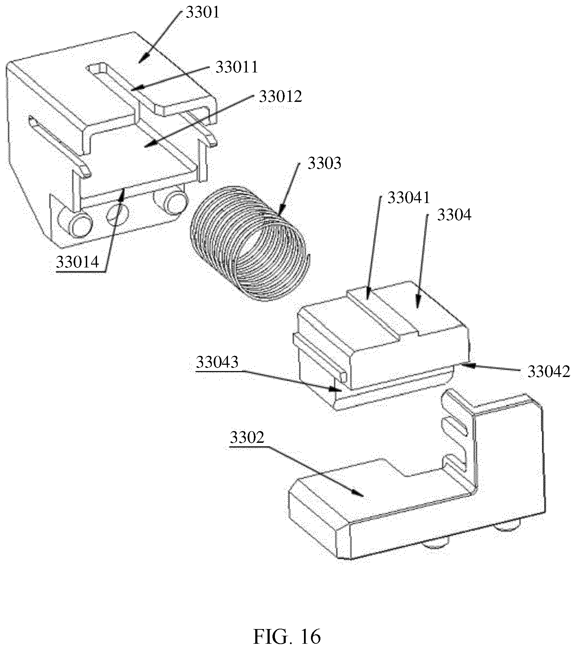

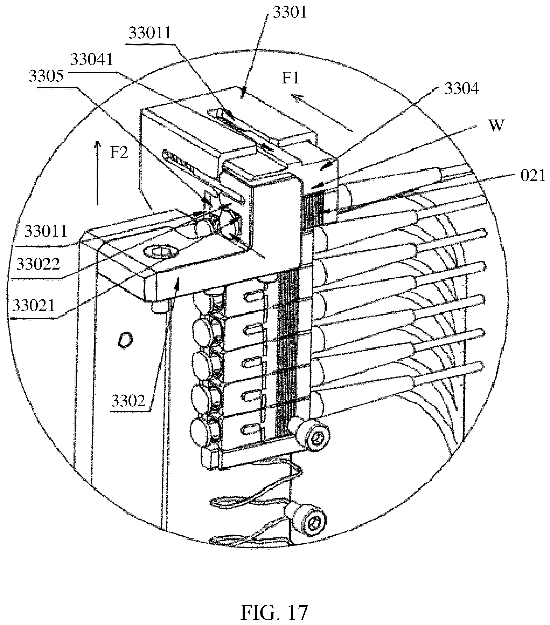

With reference to FIG. 14 and FIG. 16, the external interface assembly 330 includes a first body 3301, a second body 3302, a second elastic mechanism 3303, and a slider 3304. Both the first body 3301 and the second body 3302 are connected to the housing assembly. Specifically, the first body 3301 is connected to a top of the housing 321, and the second body 3302 is connected to a top of the second plate member 3222 of the cover 322. The first body 3301 is provided with enclosed space 33012. The slider 3304 is elastically connected to the first body 3301 by using the second elastic mechanism 3303 in the enclosed space 33012. An opening 33014 of the enclosed space 33012 faces the second body 3302. As shown in FIG. 17, a jumper fetching window W and a standby window 3305 exist between the second body 3302 and the first body 3301. The slider 3304 can slide between the jumper fetching window W and an inside of the enclosed space 33012, and a sliding direction is a first direction F1. In the first direction F1, the standby window 3305 is located between the jumper fetching window W and the enclosed space. A direction in which the connectors are linearly arranged in the first area S8 is a second direction F2. In the second direction F2, the standby window 3305 faces the connector in the storage channel of the first area S8. The second direction F2 is perpendicular to the first direction F1.

Specifically, both the first body 3301 and the second body 3302 are disposed at one end of the housing assembly. The first body 3301 and the second body 3302 each are a semi-enclosed structure with internal space. One end of the second elastic mechanism 3303 is fastened to the first body 3301. The other end of the second elastic mechanism 3303 is fastened to the slider 3304. A portion of the slider 3304 may be accommodated in the enclosed space 33012 of the first body 3301. A sliding slot 33011 may be disposed on one or more side surfaces of the first body 3301. A raised strip 33041 on the slider 3304 may slide on the sliding slot 33011 under elastic force provided by the second elastic mechanism 3303 or under an action of external force.

The slider 3304 may be in a stepped shape. When the slider 3304 is not pressed by external force, as shown in FIG. 17, a space enclosed by the slider 3304 and the second body 3302 together constitutes the jumper fetching window W. As shown in FIG. 16, an outer surface of the slider 3304 includes a first surface 33042 and a second surface 33043, which are connected to each other and may be perpendicular to each other. When the slider 3304 occupies a part of the jumper fetching window W, the first surface 33042 is in contact with the connector 021 located in the jumper fetching window W, and the second surface 33043 abuts against the connector 021 in the jumper fetching window W (where specifically, the slider 3304 abuts against the connector by using elastic force of the second elastic mechanism 3303). In general, in this state, the first body 3301 is in contact with the connector 021 in the jumper fetching window W.

When the slider 3304 is subject to external force, for example, external force from the plugging apparatus pushes the slider 3304 along the first direction F1, the slider 3304 slides and compresses the second elastic mechanism 3303. The first surface 33042 and the second surface 33043 of the slider 3304 leave the connector 021 located in the jumper fetching window W. In this case, the slider 3304 leaves the jumper fetching window W, and a position that is of the jumper fetching window W and that is occupied by the slider 3304 is occupied by the gripper of the plugging apparatus 200. In the jumper fetching window, the second elastic mechanism 3303 is compressed during movement of the slider 3304 until the slider 3304 cannot continue to slide in the first direction F1 due to the force. In this case, new space is formed next to the jumper fetching window W, and is referred to as a standby window 3305 for short herein. The standby window 3305 has three side surfaces: a first surface 33042 and a second surface 33043 that are in a stepped shape and that are formed on the slider 3304, and one side surface of the connector located in the jumper fetching window W. The standby window 3305 does not have the 4^{th} side surface and two bottom surfaces. The standby window 3305 communicates with the storage channel of the first area S8, and the standby window 3305 may also be considered as extension space of the storage channel. When the standby window 3305 is formed, a connector that is closest to the standby window 3305 and that is located in the storage channel is pushed into the standby window 3305 by the first elastic mechanism 310 of the storage channel. In this way, after the connector 021 located in the jumper fetching window W is removed by the plugging apparatus, the elastic force of the second elastic mechanism 3303 acts on the slider 3304, so that the slider 3304 pushes the connector of the standby window 3305 into the jumper fetching window W.

As shown in FIG. 17, the second body 3302 includes a first notch 33021, and the first body 3301 includes a second notch 33011. The second notch 33011 communicates with the first notch 33021, and opening sizes of the second notch 33011 and the first notch 33011 are smaller than maximum sizes of the connector 021 plug and a dustproof cap 026, but are larger than a minimum size of the dustproof cap 026 exposed when the dustproof cap 026 is inserted into a connector plug. In a process in which the plugging apparatus removes the connector 021 from the jumper fetching window W, the connector is removed along a third direction F3. When the connector 021 located in the jumper fetching window W is removed by the plugging apparatus, because the opening size of the first notch 33021 is smaller than the maximum size of the dustproof cap 026, the dustproof cap 026 cannot pass through the first notch 33011. The dustproof cap 026 is removed from the plug of the connector 021. Therefore, the removed connector 021 is a connector without the dustproof cap 026, and may be directly inserted into the port of the distribution panel. In other words, a limiting structure 33022 of the second body 33032 is formed on two sides of the first notch 33021 of the second body 3302, and the limiting structure 33022 is configured to block the dustproof cap 026 in a process in which the plugging apparatus removes the connector from the jumper fetching window W, so that the dustproof cap 026 is detached from the connector.

As shown in FIG. 14 and FIG. 15, the clamping mechanism 340 is disposed in the second area S9, and cable arrangement space 3401 exists between the clamping mechanism 340 and the housing 321. Cables of the jumper may be accommodated in the cable arrangement space 3401 in sequence. A cable outlet 3402 exists between the clamping mechanism 340 and the housing 321, and the cable outlet 3402 communicates with the cable arrangement space 3401 and external space of the jumper storage apparatus. A specific structural form of the clamping mechanism 340 may be an elastic pressing block. The elastic pressing block is in a strip shape. A bottom thereof is fastened to the housing, a cable outlet 3402 exists between a top thereof and the housing, and the cable arrangement space exists between the housing and a sheet-like member between the top and the bottom. A cable may pass through the cable arrangement space. If there are a plurality of cables, the cables need to pass through the cable arrangement space in sequence. That the cables may be accommodated in the cable arrangement space in sequence may be understood as that the cables pass through the cable arrangement space. In addition, a width or diameter of the cable arrangement space is only enough to accommodate storage of one cable. This ensures that the cables are arranged in sequence inside the jumper storage apparatus, but cannot cross each other, to avoid unnecessary winding. A plurality of clamping mechanisms 340 may be disposed as required.

In this implementation, the jumper storage apparatus 300 includes structures of two first areas S8, and the structures of the two first areas S8 are similar. The structures of the two first areas S8 are usually the same. Therefore, the structure of the 2^{nd} first area is not described again. However, it should be noted that when the jumper storage apparatus 300 includes structures of two first areas S8, connectors at two ends of the same standby jumper are respectively located in the different first areas S8, and arrangement sequences of the two connectors in the first areas S8 are the same. In addition, a sequence of cables that are of all the jumpers and that are accommodated in the cable management space in the second area S9 is the same as an arrangement sequence of the connectors connected to the cables in the first area S8. Because the arrangement sequences are the same, when the plugging apparatus fetches the jumpers in sequence, that is, fetches the cables and connectors of the jumpers in sequence, the cables of the jumpers do not interfere with each other. When the jumper storage apparatus 300 includes only a structure of one first area S8, sequences of connectors at two ends of the same standby jumper in the first area S8 are adjacent. Herein, the sequences of the connectors at the two ends of the same standby jumper in the first area S8 are considered as a group of sequences. That is, arrangement sequences of the two connectors in the first area S8 are the same. In this way, a sequence of cables that are of all the jumpers and that are accommodated in the cable management space in the second area S9 is the same as the arrangement sequence of two connectors (one group) connected to each of the cables in the first area S8. Because the arrangement sequences are the same, when the plugging apparatus fetches the jumpers in sequence, that is, fetches the cables and connectors of the jumpers in sequence, the cables of the jumpers do not interfere with each other.

In the implementation shown in FIG. 6, in the Z-axis direction, the jumper recycling apparatus 400 is located at an end that is of the distribution area and that is away from the track base. Specifically, the track base 21 is located above a top of the distribution area S1. The jumper recycling apparatus 400 is located at a bottom of the distribution area S 1. At least part of the jumper recycling apparatus 400 may be located inside the distribution area S1. Refer to FIG. 7 and FIG. 8. The jumper recycling apparatus 400 includes a transmission mechanism 42, a recycling box 41, and a jumper cutting mechanism 43. The recycling box 41 is located just below the bottom of the distribution area S1. The transmission mechanism 42 is disposed in the distribution area S1, and is located in a bottom area of the distribution area S1. The transmission mechanism 42 is configured to receive the discarded jumper transported by the plugging apparatus 200 to the jumper recycling apparatus 400, and transport the discarded jumper to the recycling box 41.

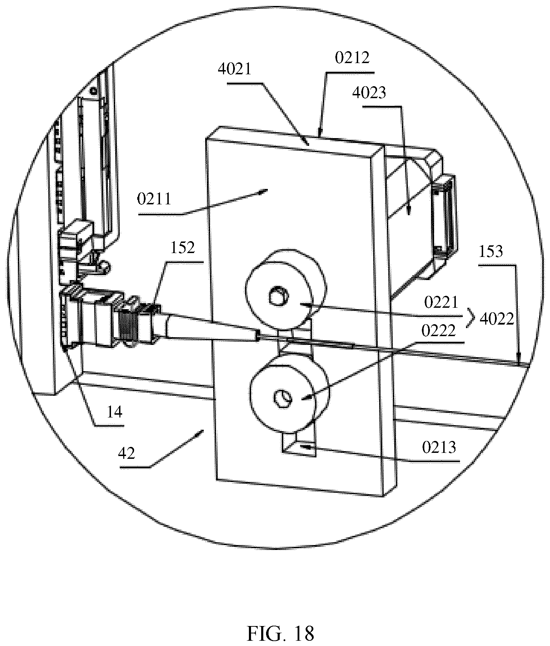

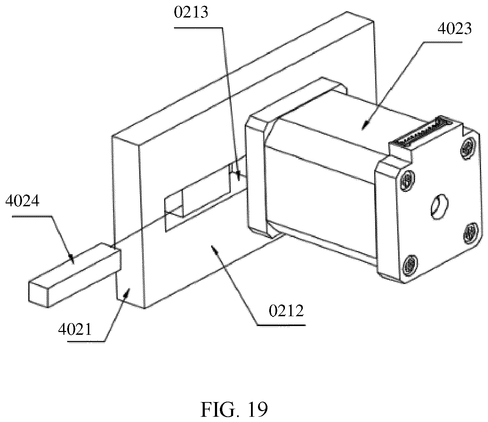

Refer to FIG. 18 and FIG. 19. The transmission mechanism 42 includes a bracket 4021, a pair of friction wheels 4022, a first driving piece 4023, and a second driving piece 4024. The bracket 4021 is fastened inside the optical fiber distribution device, and is configured to mount the friction wheels 4022, the first driving piece 4023, and the second driving piece 4024. The bracket 4021 is of a flat-plate structure, and includes a first surface 0211 and a second surface 0212 that are opposite to each other. The bracket 4021 is provided with a through hole 0213, and the through hole 0213 is in a strip shape. The first driving piece 4023 and the second driving piece 4024 are mounted on the first surface 0211, and the pair of friction wheels 4022 are mounted on the second surface 0212. One of the friction wheels 4022 is a driving wheel 0221, and the other is an auxiliary wheel 0222. The driving wheel 0221 is connected to the first driving piece 4023, and the driving wheel 0221 is rotatably connected to the bracket 4021. The first driving piece 4023 may be a motor. The first driving piece 4023 drives the driving wheel 0221 to rotate. The auxiliary wheel 0222 is mounted in the through hole 0213, and can move relative to the bracket 4021 in the through hole 0213. The auxiliary wheel 0222 can move in directions toward and away from the driving wheel 0221. The second driving piece 4024 is configured to drive the auxiliary wheel 0222 to move in the through hole 0213, so that the pair of friction wheels 4022 move radially opposite to each other or back to back, to clamp or release the discarded jumper.

As shown in FIG. 18, a first parking socket 14 is further provided in the optical fiber distribution device. The first parking socket 14 is adjacent to the transmission mechanism 42, and is configured to match with a connector of the discarded jumper. When the plugging apparatus 200 removes one of the connecting jumpers from the distribution panel, connectors at two ends of the connecting jumper are removed from the corresponding first port and second port, and the connecting jumper in this case is a discarded jumper. The plugging apparatus 200 inserts the connector of the discarded jumper into the first parking socket 14, and a cable of the discarded jumper extends between the pair of friction wheels 4022. When the pair of friction wheels 4022 clamp the discarded jumper, the connector of the discarded jumper at the first parking socket 14 is removed by using the plugging apparatus 200. Then, the driving wheel 0221 is driven to rotate by the first driving piece 4023, and the discarded jumper is transported to the recycling box 41 by using friction force between the pair of friction wheels 4022 and the discarded jumper.

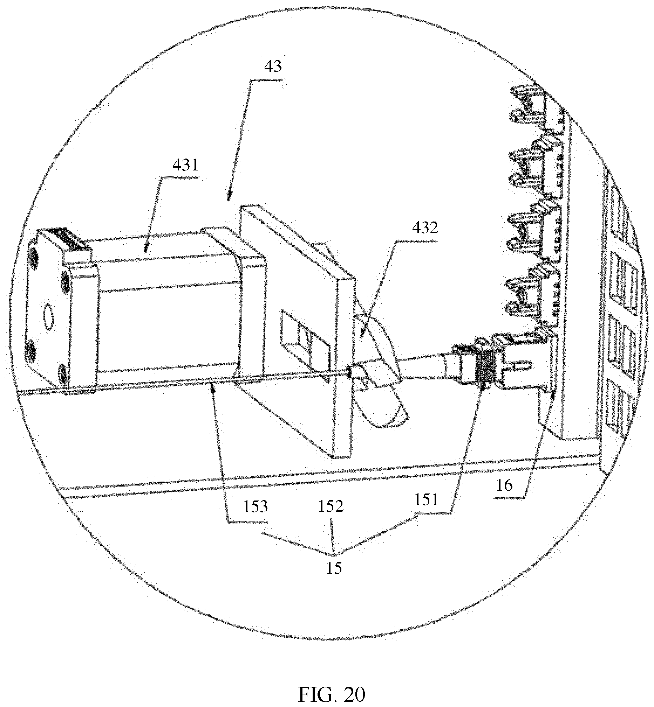

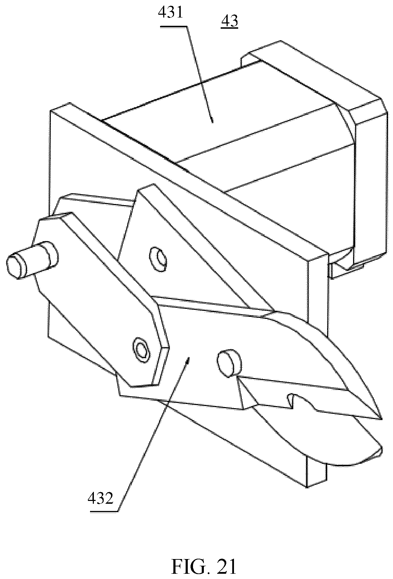

Refer to FIG. 20 and FIG. 21. The jumper cutting mechanism 43 is configured to cut off a connector of the discarded jumper before the discarded jumper is transported to the transmission mechanism 42. Specifically, refer to FIG. 18 and FIG. 20. The discarded jumper 15 includes a first plug 151, a second plug 152, and a cable 153 connected between the first plug 151 and the second plug 152. The jumper cutting mechanism 43 is configured to cut off the first plug 151. The plugging apparatus 200 transports the second plug 152 to the transmission mechanism 42. The optical fiber distribution device is further provided with a second parking socket 16 (where the second parking socket 16 is also referred to as a fixed port, and is configured to fasten the connector of the discarded jumper in an optical fiber cutting process). The second parking socket 16 is adjacent to the jumper cutting mechanism 43, and is configured to match with the first plug 151 of the discarded jumper. The jumper cutting mechanism 43 includes a motor 431 and a scissors structure 432, and the motor 431 may be a motor. When the plugging apparatus 200 inserts the first plug 151 into the second parking socket 16, the cable 153 of the discarded jumper 15 extends into the scissors structure 432, and the motor 431 is started, so that the scissors structure 432 cuts off the first plug 151 of the discarded jumper 15.

In the specific implementation shown in FIG. 6 to FIG. 21, the plugging apparatus having the three degrees of freedom performs an optical fiber distribution process of inserting an optical fiber to the distribution panel and a jumper discarding process of removing the optical fiber from the distribution panel. The optical fiber distribution process and the jumper discarding process are two processes that are independent of each other. The optical fiber distribution device provided in this implementation may have only an optical fiber distribution function, only a jumper discarding function, or both the optical fiber distribution function and the jumper discarding function. The following describes the optical fiber scheduling method provided in this application respectively for the optical fiber distribution process and the jumper discarding process.

For the optical fiber distribution process, the optical fiber scheduling method provided in this application includes:
determining to-be-connected service ports based on a demand, that is, determining target ports into which a connecting jumper is inserted, where the target ports include a first port on a first distribution panel and a second port on a second distribution panel;
manipulating a plugging apparatus, so that a mechanical arm of the plugging apparatus moves to a jumper fetching window of a jumper storage apparatus;
fetching, by the mechanical arm of the plugging apparatus, a connector of a standby jumper from the jumper fetching window;
transporting, by the plugging apparatus, the fetched connector of the standby jumper to the first port on the first distribution panel, and inserting the connector into the first port, where in this case, the other connector of the standby jumper is still in another jumper fetching window of the jumper storage apparatus;
manipulating the plugging apparatus, so that the mechanical arm of the plugging apparatus moves to the another jumper fetching window of the jumper storage apparatus;
fetching, by the mechanical arm of the plugging apparatus, the other connector of the standby jumper from the jumper fetching window, where in this case, the standby jumper completely leaves the jumper storage apparatus; and
transporting, by the plugging apparatus, the fetched connector of the standby jumper to the second port of the second distribution panel, and inserting the connector into the second port, where in this case, the optical fiber distribution process is completed, and the standby jumper in the jumper storage apparatus becomes a connecting jumper connected between the first port and the second port.

In another implementation, there may be only one jumper fetching window in the jumper storage apparatus, and a plugging apparatus successively fetches two connectors of a same standby jumper from the jumper fetching window.

For the jumper discarding process, the optical fiber scheduling method provided in this application includes:
determining a to-be-interrupted service connection based on a demand, and determining target ports that need to be disconnected from an optical path, where the target ports include a first port located on a first distribution panel and a second port located on a second distribution panel that are connected to two ends of a connecting jumper;
controlling a plugging apparatus, so that a mechanical arm of the plugging apparatus moves to the corresponding first port, and removing the connector of the connecting jumper in the first port, where in this case, one end of the connecting jumper has left the first port, and the connecting jumper becomes a discarded jumper;
transporting, by the plugging apparatus, the removed connector to a jumper recycling apparatus, and inserting the connector into the second parking socket 16 shown in FIG. 20;
starting a jumper cutting mechanism to cut off the connector, where the other connector of the discarded jumper with one cut-off connector is inserted into the second port, and the connector in the second parking socket is removed and threw to a recycling box by using the plugging apparatus after the connector is cut off,
moving, by the mechanical arm of the plugging apparatus, to the corresponding second port, and removing the connector that is of the discarded jumper and that is located in the second port;
transporting, by the mechanical arm of the plugging apparatus, the connector removed from the second port to the jumper recycling apparatus, and inserting the connector into the first parking socket 14 shown in FIG. 18;
starting a second driving piece in the jumper recycling apparatus, so that a pair of friction wheels are close to each other to clamp a cable of the discarded jumper;
removing, by the mechanical arm of the plugging apparatus, the connector from the second parking socket; and
starting a first driving piece in the jumper recycling apparatus, so that the friction wheels rotate to transport the discarded jumper to the recycling box.

In another implementation, connectors of a standby jumper and a connecting jumper may be of a small structure, for example, a customized bullet-shaped optical fiber. Such connector has a small size. The connector will not interfere with cables in a jumper recycling process, and can be smoothly removed between the cables in the jumper recycling process. A process of discarding a standby jumper and a connecting jumper that are of this type do not require an optical fiber cutting process. To be specific, an optical fiber cutting mechanism is not required in an optical fiber distribution device, and one connector of the connecting jumper may be directly removed, and the other connector is then removed and transported to a transmission mechanism of a jumper recycling apparatus.

In this application, connectors on two distribution panels may be inserted and removed by a plugging apparatus with three degrees of freedom, and a most structure of the plugging apparatus is placed on a top of a distribution area, so that a mechanical arm extends into the distribution area from the top of the distribution area for operation. When the plugging apparatus does not need to work, the plugging apparatus may stay on the top of the distribution area, so that the distribution area in an optical fiber distribution device has sufficient space to accommodate cables of connecting jumpers. In addition, a jumper storage apparatus and a jumper recycling apparatus are adjacent to the distribution area and integrated in the device. Positions of the modular components achieve higher space utilization of the device. Moreover, processes of distributing optical fibers and discarding jumpers by the optical fiber distribution device provided in this implementation are easy to perform.

In another implementation, the plugging apparatus with three degrees of freedom provided in this application may alternatively include two mechanical arms. For example, based on the solutions shown in FIG. 6 to FIG. 8, there may be two moving guide tracks 22 and two mechanical arms 23 that are disposed in a one-to-one correspondence. Both the moving slide tracks 22 can slide on the track base 21, one of the mechanical arm inserts and removes connectors on the first distribution panel, and the other mechanical arm inserts and removes connectors on the second distribution panel. Alternatively, the distribution area is divided into two parts: upper and lower parts, or left and right parts, and the two mechanical arms respectively insert and remove connectors in the two parts.

In an implementation, the first distribution panel and the second distribution panel are fastened inside the optical fiber distribution device. In processes of distributing an optical fiber and discarding a jumper, the first distribution panel and the second distribution panel are in a static state, and the processes of distributing an optical fiber and discarding a jumper are performed only through movement of the plugging apparatus. In another implementation, the first distribution panel and the second distribution panel may move in the optical fiber distribution device. For example, the first distribution panel and the second distribution panel are slidably connected to the housing of the optical fiber distribution device. The first distribution panel and the second distribution panel slide in the Z-axis direction and/or the Y-axis direction, processes of distributing an optical fiber and discarding a jumper are performed in cooperation with movement of the plugging apparatus.

In an implementation, the optical fiber distribution device includes an external panel. The external panel may be disposed on one side of the first distribution panel, for example, disposed back-to-back with the first distribution panel, or disposed side by side with the first distribution panel. The second port on the second distribution panel is connected to a port on the external panel through a jumper. When connecting the first port and second port to another device or network node, a user need to operate only the external panel.

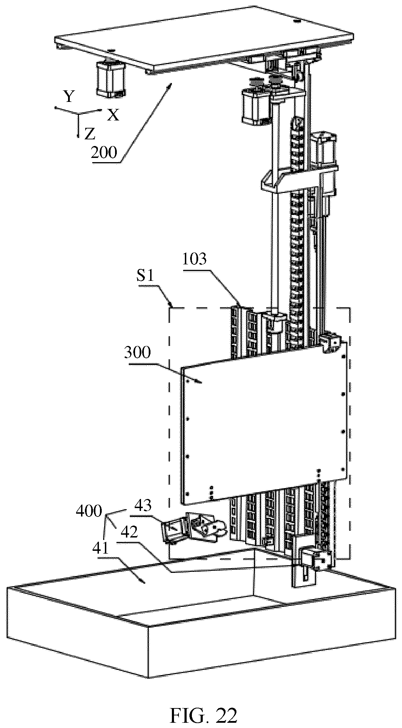

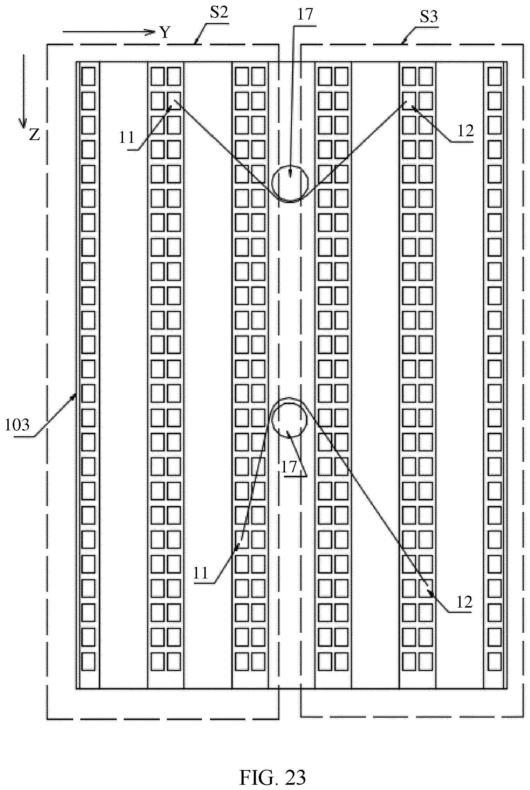

FIG. 22 is a schematic diagram of an optical fiber distribution device according to an implementation of this application. A specific structure of a plugging apparatus 200 in this implementation is the same as a structure of the plugging apparatus of the optical fiber distribution device in the implementation shown in FIG. 6. A main difference between the implementation shown in FIG. 22 and the implementation shown in FIG. 6 lies in a distribution panel. Refer to FIG. 22 and FIG. 23. In this implementation, only one integrated distribution panel 103 is disposed in a distribution area S1, and first ports 11 and second ports 12 are all disposed on the integrated distribution panel 103. It may be understood that a plurality of adapter ports are disposed on the integrated distribution panel 103, a part of the ports are the first ports 11, and the other part of the ports are the second ports 12. An area in which the first ports 11 are located is a first insertion area S2, and an area in which the second ports 12 are located is the second insertion area S3. In the Y-axis direction, the first insertion area S2 is arranged on one side of the second insertion area S3. This partitioning manner may define left and right partitions. In another implementation, an up-down partitioning manner may alternatively be used. To be specific, in the Z-axis direction, the first insertion area is arranged on one side of the second insertion area.

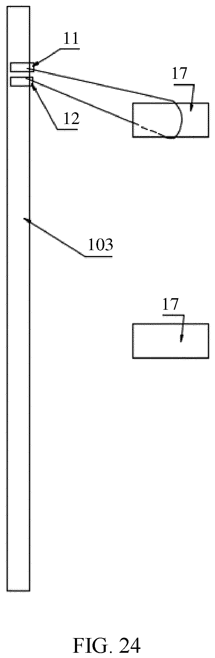

As shown in FIG. 23 and FIG. 24, in this implementation, the optical fiber distribution device further includes a fiber routing structure 17. Tiber winding structure 17 is configured to wind a cable, and the first port 11, the fiber routing structure 17, and the second port 12 are jointly configured to determine an extension path of a connecting jumper. The fiber routing structure 17 may be fastened to the integrated distribution panel 103, or may be independent of the integrated distribution panel 103, but fastened inside a housing of the optical fiber distribution device. FIG. 23 and FIG. 24 schematically show two fiber routing structures 17. There may be one, two, or more fiber routing structures 17. A position of the fiber routing structure 17 may be determined based on a specific arrangement manner of the first ports 11 and the second ports 12. This is not limited in this application. An insertion process of one of the connecting jumpers is used as an example for description as follows: The connecting jumper includes a cable and two connectors located at two ends of the cable. The plugging apparatus first fetches a connector of a standby jumper from a jumper storage apparatus, and inserts the connector into one of the first ports. Then, the plugging apparatus returns to the jumper storage apparatus and fetches the other connector of the standby jumper. In a process in which the plugging apparatus inserts the connector into the second port, the plugging apparatus carrying the connector bypasses the fiber routing structure 17, so that the cable between the two connectors bypasses the fiber routing structure. In this way, a position in a middle part of the cable is located on a periphery of the fiber routing structure. Such a distribution solution facilitates orderly arrangement of the connecting jumpers on the distribution panel, and can avoid a phenomenon that the connecting jumpers are entwined with each other.

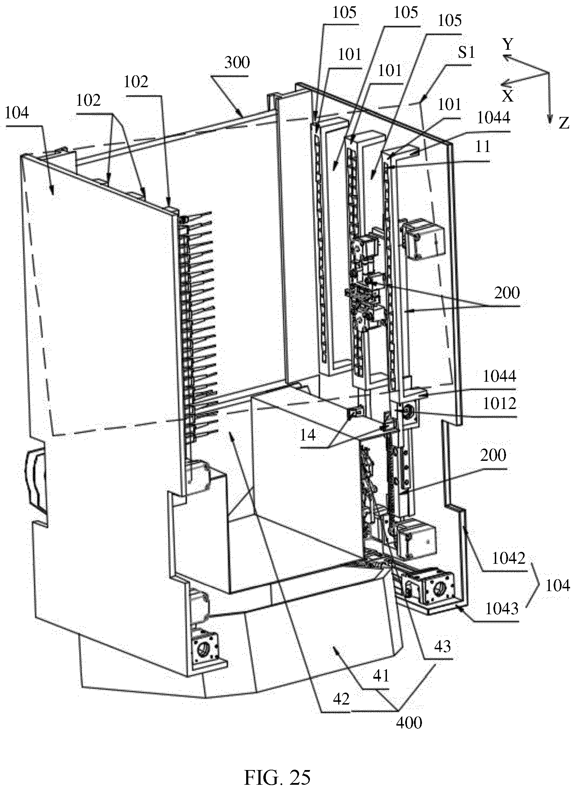

FIG. 25 is a schematic diagram of an optical fiber distribution device according to a specific implementation of this application. In this implementation, the optical fiber distribution device includes distribution panels 101 and 102 located in a distribution area S1, a plugging apparatus 200, a jumper storage apparatus 300, and a jumper recycling apparatus 400. The jumper recycling apparatus 400 includes a recycling box 41, a transmission mechanism 42, and a jumper cutting mechanism 43. Apart of the plugging apparatus 200 is located in the distribution area S1, and the rest of the plugging apparatus 200 is located below the distribution area S1 (specifically, between the recycling box 41 and the distribution area S1). The jumper storage apparatus 300 is adjacent to a side part of the distribution area S1. The transmission mechanism 42 in the jumper recycling apparatus 400 is located below the jumper storage apparatus 300, the recycling box 41 in the jumper recycling apparatus 400 is located below the distribution area S1, and the jumper cutting mechanism 43 in the jumper recycling apparatus 400 is disposed on the plugging apparatus 200.

An optical fiber distribution device provided in an implementation of this application includes two mounting plates 104 that are oppositely disposed. Specifically, each mounting plate 104 includes a plate-shaped body 1042 and a stationary plate 1043 connected to a bottom edge of the body 1042, and the stationary plate 1043 is perpendicular to the body 1042. In the implementation shown in FIG. 25, the two mounting plates 104 have a same structure. At least two distribution panels 101 are disposed on one mounting plate 104, and at least two distribution panels 102 are disposed on the other mounting plate 104. Structures, quantities, and distributions of the distribution panels 101 and the distribution panels 102 may be the same or may be different. The following describes a specific structure of a distribution panel by using the distribution panel 101 as an example. Each distribution panel 101 is in a long strip shape and is provided with a plurality of adapter ports 11, and an extension direction of the distribution panel 101 is a first direction (or a Z-axis direction). On each of the distribution panels 101, the adapter ports 11 are arranged in one or two columns along the extension direction (the first direction or Z-axis direction) of the distribution panel 101. At least two of the distribution panels 101 are oppositely arranged at an interval in a second direction (a Y-axis direction). FIG. 25 schematically shows three distribution panels 101, and the distribution panel 101 in the middle is provided with two columns of adapter ports 11 (referred to as first ports, where adapter ports on the distribution panels 102 on the other mounting plate are referred to as second ports). Each distribution panel 101 is connected to a surface of the body 1042 of the mounting plate 104 by using two connection plates 1044. To be specific, the connection plate 1044 is connected between the distribution panel 101 and the body 1042 of the mounting plate 104. Space exists between the distribution panel 101 and the body 1042 of the mounting plate 104 due to the connection plate 1044. All the distribution panels 101 may be coplanar, and all the distribution panels 101 may be parallel to the body 1042 of the mounting plate 104.

At least two crawling areas 105 are disposed on the mounting plate 104. In the second direction (the Y-axis direction), the at least two crawling areas 105 and at least two distribution panels 101 are alternately arranged, one of the crawling areas 105 is disposed between two adjacent distribution panels 101, and one of the distribution panels 101 is disposed between two adjacent crawling areas 105. An alternate arrangement manner of the crawling areas 105 and the distribution panels 101 is described by using an example. In a solution, the arrangement manner is: one crawling area 105, one distribution panel 101, one crawling area 105, and one distribution panel 101. In this solution, a quantity of crawling areas 105 is the same as a quantity of distribution panels 101. In another solution, the arrangement manner is: one distribution panel 101, one crawling area 105, one distribution panel 101, one crawling area 105, and one distribution panel 101. In this solution, a quantity of distribution panels 101 is one more than a quantity of crawling areas 105.

In this implementation, an area in which the distribution panel 101 and the crawling area 105 are disposed and that is on the body 1042 of the mounting plate 101 is a distribution area S1. The distribution area S1 includes a top, a bottom, and a side part connected between the bottom and the top. A vertical extension direction from the top to the bottom is the first direction (the Z-axis direction), a direction in which the distribution panels 101 are arranged on the mounting plate 104 is the second direction (the Y-axis direction), and a direction perpendicular to the distribution panels may be defined as an X-axis direction. The X direction may be understood as a vertical extension direction between the bodies 1042 of the two mounting plates 104.

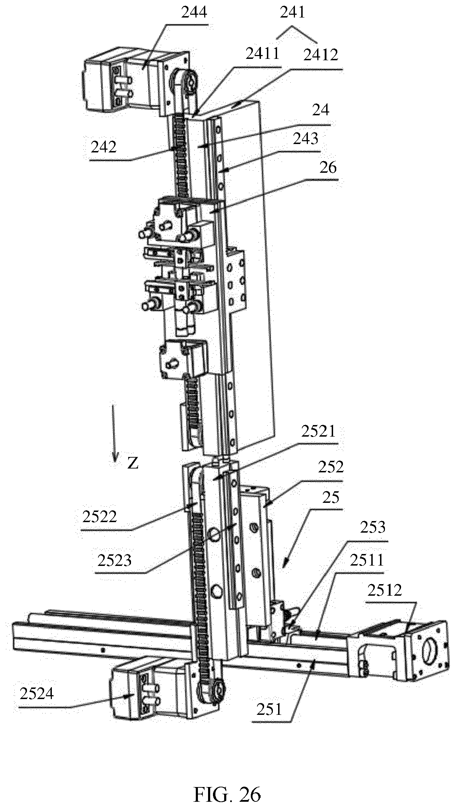

There are two plugging apparatuses 200, which are respectively mounted on the two mounting plates 104. The two plugging apparatuses 200 have a same structure. For the specific structure of each plugging apparatus 200, refer to Fig. 26. The plugging apparatus 200 includes at least two fixed tracks 24, a column change mechanism 25, and an actuator 26, and the at least two fixed tracks 24 each are located in the crawling area 105 and fastened to the body 1042 of the mounting plate 104. FIG. 26 schematically shows only one of the fixed tracks 24. The fixed track 24 extends in the first direction (the Z-axis direction), and provides a movement path of the actuator 26 along the Z-axis direction. Specifically, the fixed track 24 includes a track body 241, a first synchronous belt 242, a first slide track 243, and a first synchronous belt motor 244. Specifically, the track body 241 includes a first plate 2411 and a second plate 2412. The second plate 2412 is connected between the first plate 2411 and the body 1042 of the mounting plate 104, so that space is formed between the first plate 2411 and the body 1042 of the mounting plate 104. The second plate 2412 and the first plate 2411 may both have a flat-plate structure, and are perpendicular to each other. The first plate 2411 may be parallel to the body 1042 of the mounting plate 104. The first synchronous belt 242 is mounted on the first plate 2411, and the first synchronous belt motor 244 is configured to drive the first synchronous belt 242 to move. The first slide track 243 is fastened to the second plate 2412. The first slide track 243 is disposed adjacent to the first plate 2411. In other words, a distance between the first slide track 243 and the first plate 2411 is less than a distance between the first slide track 243 and the main body 1042 of the mounting plate 104.

In an implementation, each fixed track 24 is provided with one first synchronous belt motor 244, that is, first synchronous belts 242 on different fixed tracks 24 each have a drive motor. In another implementation, the optical fiber distribution device includes only one first synchronous belt motor 244, and the first synchronous belt motor 244 simultaneously drives first synchronous belts 242 on all fixed tracks 24 to move.

Refer to FIG. 25 and FIG. 26. The column change mechanism 25 is arranged on one side of the distribution panel 101 in the first direction (or the Z-axis direction). Specifically, the column change mechanism is adjacent to the bottom of the distribution area S1. The column change mechanism 25 includes a main track 251 and a column change track 252, the column change track 252 extends in a same direction as the fixed track 24, and the column change track 252 is slidably connected to the main track 251. The main track 251 is fastened to the stationary plate 1043 of the mounting plate 104, and the column change track 252 is fastened to the body 1042 of the mounting plate 104 and is located between the distribution panel and the stationary plate 1043. A direction in which the main track 251 extends is the second direction (the Y-axis direction). The second direction may be perpendicular to the first direction, or an included angle of less than 90 degrees may exist between the second direction and the first direction. In an implementation, the main track 251 includes a lead screw 2511 and a lead screw motor 2512. The lead screw motor 2512 drives the lead screw 2511 to rotate. The lead screw 2511 extends in the second direction (the Y-axis direction). The column change track 252 is slidably connected to the lead screw 2511. Specifically, the column change track 252 is fastened to a slider 253, and the slider 253 matches with the lead screw 2511 in a threaded manner. The column change track 252 includes a body 2521, a second synchronous belt 2522, a second slide track 2523, and a second synchronous belt motor 2524. The body 2521 is fastened to the slider 253. The second synchronous belt 2522 and the second slide track 2523 are mounted on the body 2521. The second synchronous belt motor 2524 is fastened to the body 2521, and is configured to drive the second synchronous belt 2522 to move. An extension direction of the second synchronous belt 2522 and the second slide track 2523 is the first direction (or the Z-axis direction). Both the second synchronous belt 2522 and the first synchronous belt 242 can match with the actuator 26, and both can drive the actuator 26 to move. Therefore, the second synchronous belt 2522 and the first synchronous belt 242 may have a same structure. For example, specific structures of teeth that are on the second synchronous belt 2522 and the first synchronous belt 242 and that configured to match with the actuator 26 are the same.

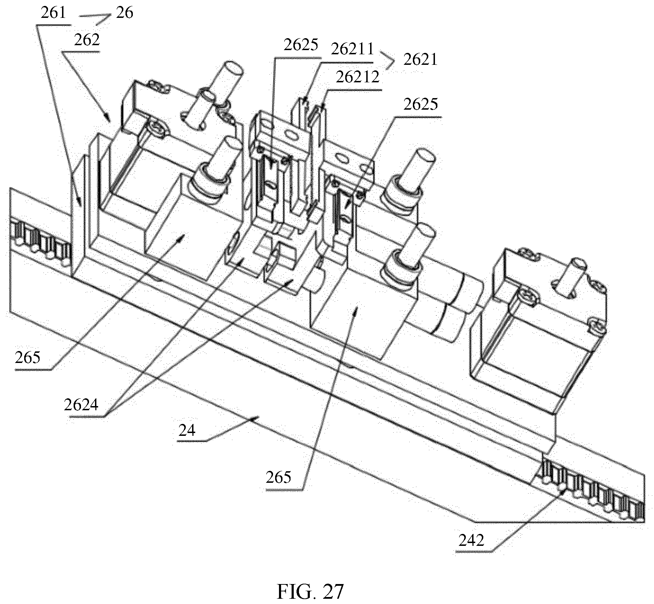

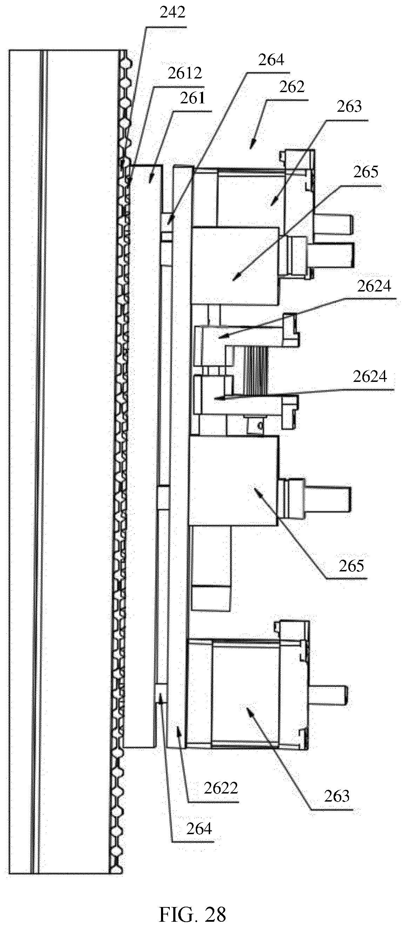

The actuator 26 is configured to slidably match with the fixed track 24 and the column change track 252. In a process in which the column change track 252 slides on the main track 251, the column change track 252 can be connected to each of the fixed tracks 24 to switch a position of the actuator 26. Refer to FIG. 27 and FIG. 28. The actuator 26 includes a bearing plate 261 and a lifting assembly 262. A bottom of the bearing plate 261 is provided with a rack structure 2612 configured to match with the first synchronous belt 242 and the second synchronous belt 2522. Specifically, outer lateral teeth are disposed on surfaces that are of the first synchronous belt 242 and the second synchronous belt 2533 and that are in contact with the actuator 26. As shown in FIG. 28, the first synchronous belt 242 is used as an example. The outer lateral teeth are several tooth structures protruding from an outer surface of the first synchronous belt 242, and tooth space exists between adjacent teeth. The rack 2612 at the bottom of the bearing plate 261 is accommodated in the tooth space, so that the rack 2612 at the bottom of the bearing plate 261 engages with the outer teeth on the first synchronous belt 242. During movement of the first synchronous belt 242, the actuator 26 is enabled to crawl on the first synchronous belt 242 through the engagement of the rack with the outer teeth.

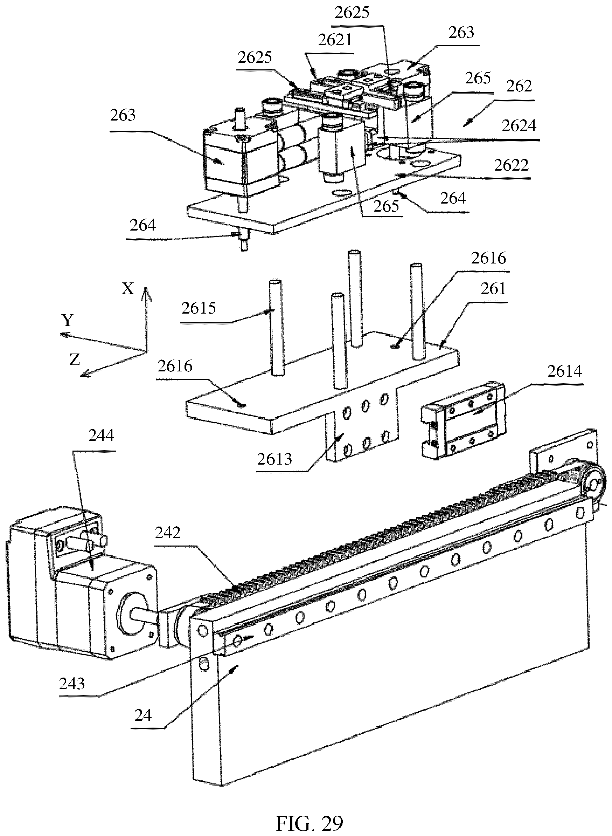

Refer to FIG. 29. The actuator 26 further includes a fixing piece 2613 connected to one side of the bearing plate 261. In an implementation, the fixing piece 2613 is flat, and is fastened to a slider 2614. The slider 2614 is slidably connected to the first slide track 243 of the fixed track 24, and the slider 2614 is also slidably connected to the second slide track 2523 of the column change track 252. In an implementation, the fixing piece 2613 and the bearing plate 261 are of an integrated structure, and are perpendicular to each other.

A top of the bearing plate 261 is provided with a lifting guide track 2615 extending in the X-axis direction. The lifting assembly 262 is slidably connected to the lifting guide track 2615. The lifting assembly 262 includes a clamping structure 2621. The clamping structure 2621 has degrees of freedom of movement in the Z-axis direction and the Y-axis direction. The first direction is the Z-axis direction, and the second direction is the Y-axis direction.

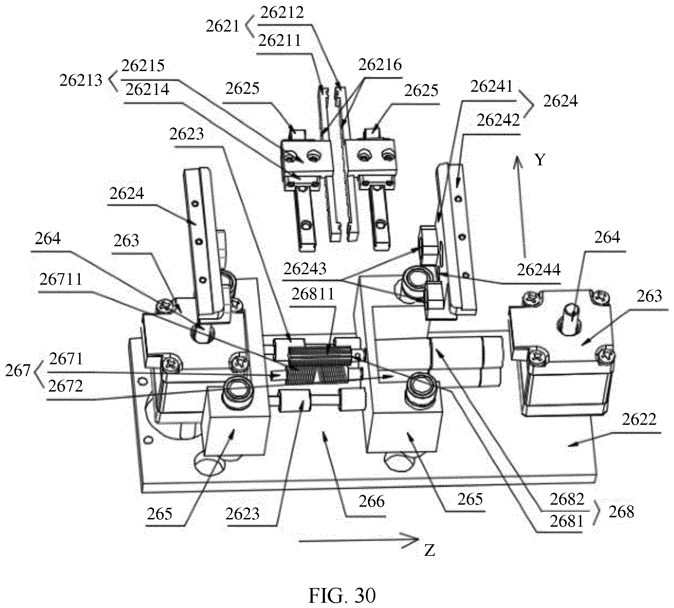

Refer to FIG. 29 and FIG. 30, the lifting assembly 262 further includes a stationary plate 2622, a clamping guide track 2623, a pair of sliding members 2624, and a pair of transverse movable guide tracks 2625. The stationary plate 2622 and the bearing plate 261 are stacked and slidably connected to the lifting guide track 2615. As shown in FIG. 29, the actuator 26 includes a lifting motor 263, and the lifting motor 263 includes a motor shaft 264. The lifting motor 263 is a linear motor, and the lifting motor 263 is fastened to the stationary plate 2622 by using a flange. Specifically, the lifting motor 263 is fastened to a surface of the stationary plate 2622 away from the bearing plate 261. The motor shaft 264 passes through the stationary plate 2622, and an end of the motor shaft 264 is fastened to the bearing plate 261. Specifically, the bearing plate 261 is provided with a through hole 2616. The end of the motor shaft 264 includes a shoulder and a screw rod portion protruding from an end face of the shoulder. The screw rod portion passes through the through hole 2616, and the shoulder is fastened to a surface of the bearing plate 261 facing toward the stationary plate 2622. A side that is of the bearing plate 261 and that is away from the stationary plate 2622 is fastened to the screw rod by using a screw nut, and the nut is fastened to the screw rod, so that the bearing plate 261 is securely connected between the nut and the shoulder at a beginning of the motor shaft. When the lifting motor 263 is started, the motor shaft 264 moves axially and linearly, so that a distance between the stationary plate 2622 and the bearing plate 261 changes. That is, the lifting assembly 262 moves along the lifting guide track 2615. Specifically, the lifting motor 263 having the motor shaft 264 may be understood as a lifting drive assembly of the actuator 26. In this application, a lifting drive assembly of another type may also be used to drive the lifting assembly to move relative to the bearing plate in the X-axis direction, for example, coordination of a gear and a rack, or a cylinder driving structure. In an implementation, there are two lifting motors 263 that are symmetrically distributed on opposite sides of a central position of the stationary plate 2622, so that the lifting assembly 262 can smoothly rise and fall.

The clamping guide track 2623 is fastened to a side of the stationary plate 2622 away from the bearing plate 261, the clamping guide track 2623 extends in the first direction (the Z-axis direction), and the pair of sliding members 2624 are slidably connected to the clamping guide track 2623. Specifically, refer to FIG. 30. The actuator 26 includes a pair of fixing pieces 265. The pair of fixing pieces 265 are located on a side of the stationary plate 2622 away from the bearing plate 261. The pair of fixing pieces 265 are oppositely disposed at an interval, and are fastened to the stationary plate 2622. Accommodation space 266 exists between the pair of fixing pieces 265. The clamping guide track 2623, the pair of sliding members 2624, the transverse movable guide track 2625, and the clamping structure 2621 are located in the accommodating space 266. One end of the clamping guide track 2623 is fastened to one of the fixing pieces 265, and the other end of the clamping guide track 2623 is fastened to the other fixing piece 265. In this implementation, there are two clamping guide tracks 2623.

The pair of sliding members 2624 are slidably connected to the clamping guide track 2623 in the accommodating space 266. Specifically, one of the sliding members 2624 is used as an example to describe a specific structure of the sliding member 2624, and the structures of the two sliding members 2624 may be the same. The sliding member 2624 includes a driving portion 26241 and a connecting portion 26242 located at a top of the driving portion 26241. The connecting portion 26242 is configured to fasten the transverse movable guide track 2625. The driving portion 26241 is provided with a pair of through holes 26243. The two clamping guide tracks 2623 respectively pass through the pair of through holes 26243, so that the sliding members 2624 are slidably connected to the clamping guide tracks 2623. A quantity of through holes 26243 corresponds to a quantity of clamping guide tracks 2623. When the quantity of clamping guide tracks 2623 is 1, the quantity of through holes 26243 is also 1. The driving portion 26241 is further provided with a threaded hole 26244. This threaded hole 26244 is configured to match with a drive shaft 2671 in a clamping drive assembly 267, to drive the sliding member 2624 to move along the clamping guide track 2623 through rotation of the drive shaft 2671.

Specifically, the actuator 26 includes the clamping drive assembly 267, and the clamping drive assembly 267 includes a clamping drive motor 2672 and the drive shaft 2671. The clamping drive motor 2672 is configured to drive the drive shaft 2671 to rotate. Specifically, the clamping drive motor 2672 is fastened to a side of one of the sliding members 2624 away from the accommodating space 266. The drive shaft 2671 passes through the sliding member 2624, and extends into the accommodating space 266. An extension direction of the drive shaft 2671 is the same as an extension direction of the clamping guide track 2623. Both the directions are the first direction (the Z-axis direction). An outer surface of the drive shaft 2671 is provided with a screw structure 26711. The screw structure 26711 matches with the threaded hole 26244 of the driving portion 26241 of the sliding member 2624. Specifically, there are two screw structures 26711 on the outer surface of the drive shaft 2671, and screw directions of the two screw structures 26711 are opposite. The two screw structures 26711 are respectively engaged with the threaded holes 26244 of the pair of sliding members 2624, so that the pair of sliding members 2624 move in a same direction or opposite directions when the drive shaft 2671 rotate.

In another implementation, only one of the sliding members 2624 may alternatively be provided with the threaded hole 26244, and there is one screw structure 26711 on the drive shaft 2671. That is, the drive shaft 2671 drives only one sliding member 2624 to move, and the other sliding member 2624 is fastened, so that the sliding member 2624 may also move close to or away from the other sliding member 2624.

The pair of transverse movable guide tracks 2625 are respectively fastened to the connecting portions 26242 of the pair of sliding members 2624. The pair of transverse movable guide tracks 2625 extend in the Y-axis direction. The clamping structure 2621 includes a first claw portion 26211 and a second claw portion 26212. The first claw portion 26211 is slidably connected to one of the transverse movable guide tracks 2625, and the second claw portion 26212 is slidably connected to the other transverse movable guide track 2625. Specifically, the actuator 26 includes a connection structure 26213 connected between the first claw portion 26211 and one of the transverse movable guide tracks 2625. The connection structure 26213 includes a slider 26214 and a stationary plate 26215. The slider 26214 is fastened to the stationary plate 26215. The slider 26214 is slidably connected to the transverse movable guide track 2625. The first claw portion 26211 is fastened to the stationary plate 26215. A connection structure between the second claw portion 26212 and the other transverse movable guide track 2625 may be the same as this connection structure.

The actuator 26 further includes a transverse movable drive assembly 268. The transverse movable drive assembly 268 includes a transverse movable motor 2682 and a drive rod 2681. The transverse movable motor 2682 is located on a side of one of the sliding members 2624 away from the accommodating space 266. The transverse movable motor 2682 is fastened to the bearing plate 261. Specifically, the transverse movable motor 2682 and the clamping drive motor 2672 are located on the same side of the accommodating space 266. The drive rod 2681 passes through the sliding member 2624, and extends into the accommodating space 266. An outer surface of the drive rod 2681 is provided with drive teeth 26811. The first claw portion 26211 and the second claw portion 26212 each are provided with a rack structure 26216, and an extension direction of the rack structure 26216 is the same as the extension direction of the transverse movable guide track 2625. When the transverse movable motor 2682 drives the drive rod 2681 to rotate, through engagement of the drive teeth 26811 with the rack structures 26216, the first claw portion 26211 and the second claw portion 26212 can be driven to move synchronously along the transverse movable guide tracks 2625.

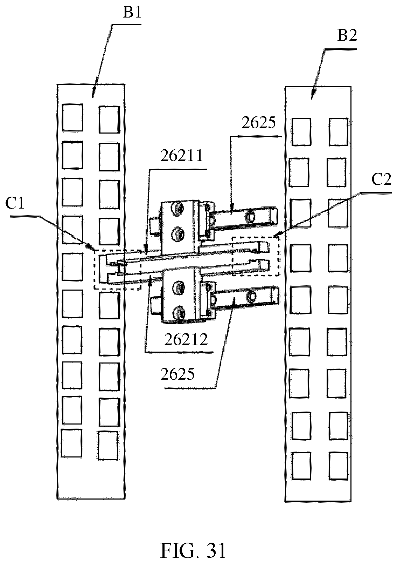

Refer to FIG. 31. One end of the first claw portion 26211 and one end of the second claw portion 26212 are oppositely disposed and constitute a first gripper C1 (where a part in the left dashed box in FIG. 31 represents the first gripper C1), and the other end of the first claw portion 26211 and the other end of the second claw portion 26212 are oppositely disposed and constitute a second gripper C2 (where a part in the right dashed box in FIG. 31 represents the second gripper C2). When the actuator 26 is located on one of the fixed tracks 24, the distribution panels 101 distributed on two sides of the fixed track 24 are respectively a first panel B1 and a second panel B2, and other parts of the fixed track and the actuator 26 are omitted in FIG. 31. Only the first claw portion 26211, the second claw portion 26212, the transverse movable motor 2682, and the first panel B1 and the second panel B2 located on the two sides are schematically shown. The first gripper C1 is configured to clamp and avoid the connector of the adapter port on the first panel B1, and the second gripper C2 is configured to clamp and avoid the connector of the adapter port on the second panel B2. Clamping refers to a clamping action in a process in which the gripper inserts or removes the connector at the adapter port. Avoiding means that in a process of removing the connector from the adapter port, the connector needs to be clamped and removed from the adapter port, then the connector is moved along the transverse movable guide track to bring the connector into the crawling area, and the actuator carrying the connector moves along the fixed track, to prevent the connector from interfering with another connector on the distribution panel. In this solution, two grippers are simultaneously arranged in the direction of the transverse movable guide track, and the two grippers are slidably connected to the transverse movable guide track, so that the distribution panels on two sides of the crawling area can be clamped and avoided in the crawling area. This reduces a quantity of fixed tracks, to save space and reduce costs.

A working process in which the plugging apparatus 200 provided in this implementation inserts and removes the connector on the distribution panel is as follows: The actuator 26 moves along the main track 251 on the column change track 252, so that the actuator 26 can fetch the connector of the standby jumper from the jumper fetching window of the jumper storage apparatus 300. In addition, the actuator 26 carrying the connector moves to a position corresponding to the crawling area adjacent to the corresponding target adapter port (for example, one of the first ports 11 on the first distribution panel 101). In this case, the actuator 26 is on the column change track 252, and the column change track 252 is aligned with the fixed track 24, so that the actuator 26 can move from the column change track 252 to the fixed track 24, and move along the fixed track 24 to the target adapter port. In this case, the first claw portion 26211 and the second claw portion 26212 are in the crawling area 105. By starting the lifting motor 263, the lifting assembly 262 is driven to move along the lifting guide track 2615, so that the first claw portion 26211 and the second claw portion 26212 carrying the connector move in the X-axis direction. Next, the transverse movable motor 2682 is driven, so that the drive rod 2681 is rotated and drives the first claw portion 26211 and second claw portion 26212 carrying the connector to move along the transverse movable guide track 2625 to the corresponding target adapter port. In this case, the connector is aligned with the target adapter port, and the lifting motor 263 is started, to drive the first claw portion 26211 and the second claw portion 26212 to insert the connector into the target adapter port. Then, the clamping drive motor 2672 is driven, so that the pair of sliding members 2624 are oppositely far away from each other. In this way, the first claw portion 26211 and the second claw portion 26212 are oppositely far away from each other to release the connector. The first claw portion 26211 and the second claw portion 26212 are driven back to the crawling area 105 by driving the transverse movable motor 2682.

When the connector on the target adapter port needs to be removed, the actuator 26 is driven to cooperate with the column change track 252, the main track 251, and the fixed track 24, so that the actuator 26 moves to a position corresponding to the target adapter port in the crawling area 105. The lifting motor 263 and the transverse movable motor 2682 are started, so that the first claw portion 26211 and the second claw portion 26212 are moved to the connector, and the first claw portion 26211 and the second claw portion 26212 are respectively located on opposite sides of the connector. In this case, the clamping drive motor 2672 is driven, so that the first claw portion 26211 and the second claw portion 26212 move close to each other and clamp the connector. Then, the transverse movable motor 2682 is driven to drive the connector carried by the first claw portion 26211 and the second claw portion 26212 to move to the crawling area 105, so that the connector avoids other connectors on the distribution panel, and the connector is further transported to the jumper recycling apparatus 400.

Refer to FIG. 25. The optical fiber distribution device further includes a connector parking port 141. The connector parking port 141 is configured to match with a connector of a standby jumper or connecting jumper. When the first gripper C1 of the actuator clamps the connector, the connector can be inserted into the corresponding target adapter port (the first port or the second port) only after the second gripper C2 clamps the connector. In this case, the actuator inserts the connector into the connector parking port 141. Then, the second gripper C2 is aligned with the connector parking port 141 and clamps the connector through column change by the actuator, that is, movement of the actuator along the main track on the column change track. In this way, the gripper of the actuator is changed. Specifically, the connector parking port 141 is disposed on an extension plate 1012 of the first distribution panel 101. As shown in FIG. 25, the extension plate 1012 is located at the bottom of the distribution panel, and space also exists between the extension plate 1012 and the body 1042 of the mounting plate 104. This space is passed through by the column change mechanism. In another implementation, the connector parking port 141 may alternatively be disposed on the distribution panel 101. For example, a first port 11 on the distribution panel 101 is used as the connector parking port. In the implementation shown in FIG. 25, a quantity of connector parking ports 141 on one of the mounting plates 104 is set to two. In another implementation, there may be only one connector parking port 141 on one mounting plate 104. It may be understood that the other mounting plate 104 is also provided with a connector parking port, which may also be disposed on an extension plate of the second distribution panel 102 or disposed on the second distribution panel 102.

Refer to FIG. 25. The jumper storage apparatus 300 is disposed on one side of the mounting plate 104, and a crawling area 105 is formed among the jumper storage apparatus 300 and the distribution panels 101 and 102 arranged at edges of the mounting plate 104. The crawling area 105 is also provided with a fixed track 24 of the plugging apparatus 200. When the actuator 26 is on the fixed track 24 of the crawling area 105, a standby jumper can be fetched from the jumper storage apparatus 300. A specific structure of the jumper storage apparatus 300 may be similar to a specific structure of the jumper storage apparatus in the implementation shown in FIG. 14 to FIG. 17. Details are not described again in this implementation.

Refer to FIG. 25 and FIG. 26. The transmission mechanism 42 in the jumper recycling apparatus 400 is located below the jumper storage apparatus 300. When the actuator 26 is on the column change track 252, the actuator 26 is moved to the transmission mechanism 42 on the main track 251 through the column change track 252, to transport a discarded jumper carried by the actuator 26 to the transmission mechanism 42. In an implementation, when connectors of a connecting jumper connected to the distribution panels 101 and 102 have large sizes, after the actuator 26 removes one of the connectors of the connecting jumper, the connecting jumper becomes a discarded jumper. The connectors at two ends of the discarded jumper are respectively a first plug and a second plug. In this application, a jumper cutting mechanism 43 is disposed. The jumper cutting mechanism 43 is configured to cut off the first plug at one end of an optical fiber cable of the discarded jumper. After the first plug is cut off, the actuator 26 removes the second plug, and transports the discarded jumper whose first plug is cut off to the transmission mechanism 42. As shown in FIG. 25, the jumper cutting mechanism 43 is fastened to the column change track 252, and moves on the main track 251 synchronously with the column change track 252. In this way, an optical fiber may be cut off at any position on the main track 251.

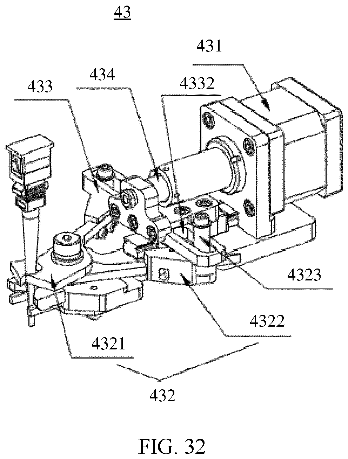

Refer to FIG. 32. In an implementation, the jumper cutting mechanism 43 includes a motor 431, scissors 432, a sliding structure 433, and a telescopic rod 434. The sliding structure 433 is fastened to the telescopic rod 434. The telescopic rod 434 is driven by the motor 431 to telescopically drive the sliding structure 433 to move back and forth. A pair of sliding slots 4332 are disposed on the sliding structure 433. An extension direction of the pair of sliding slots 4332 is perpendicular to an extension direction of the telescopic rod 434. The scissors 432 include a shearing portion 4321 and operation portions 4322. The operation portions 4322 include a pair of handles. The operation portions 4322 are respectively positioned in the pair of sliding slots 4332 by using positioning pins 4323. When the sliding structure 433 is driven by the telescopic rod 434 to move, the operation portions 4322 can be driven to implement opening and closing actions, and the shearing portion 4321 implements opening and closing actions simultaneously, to perform a jumper cutting function. In this implementation, one end of the motor 431 away from the telescopic rod 434 is slidably connected to the main track 251 of the column change mechanism 25.

In an implementation, a specific structure of the transmission mechanism 42 in the jumper recycling apparatus 400 provided in this application is described as follows.

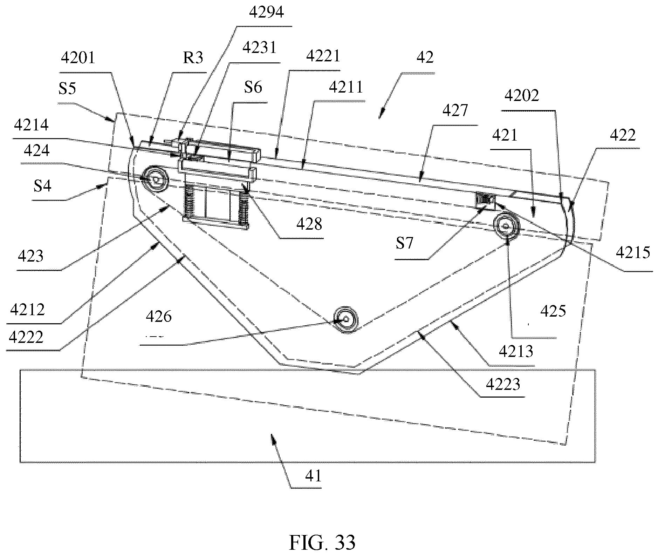

Refer to FIG. 33. The transmission mechanism 42 shown in FIG. 33 may be used in the optical fiber distribution device provided in the implementation shown in FIG. 25, and may also be used in the optical fiber distribution device provided in the implementation shown in FIG. 6. In a vertical direction, the transmission mechanism 42 is located above the recycling box 41. The transmission mechanism 42 includes a bottom area S4 and a top area S5. The bottom area S4 is located between the top area S5 and the recycling box 41. In FIG. 33, an area indicated by a large dashed-line box is the bottom area S4, and an area indicated by a small dashed-line box is the top area S5. The transmission mechanism 42 includes a first baffle 421, a second baffle 422, a conveyor belt 423, a first driving wheel 424, a second driving wheel 425, and a third driving wheel 426. The first baffle 421 and the second baffle 422 are oppositely disposed, and jumper receiving space R3 is formed between the first baffle 421 and the second baffle 422. Specifically, both the first baffle 421 and the second baffle 422 are of a flat structure, and the first baffle 421 and the second baffle 422 may be parallel to each other. The first baffle 421 includes a first side 4211 in the top area S5 and a second side 4212 and a third side 4213 that are in the bottom area S4. The second baffle 422 includes a fourth side 4221 in the top area S5 and a fifth side 4222 and sixth side 4223 in the bottom area S4. The first side 4211 and the fourth side 4221 are oppositely disposed. Specifically, the first side 4211 and the fourth side 4221 are connected to each other by using a top plate 427. The second side 4212 and the fifth side 4222 are disposed oppositely, and space between the second side 4212 and the fifth side 4222 are open, so that the jumper receiving space R3 directly communicates with the recycling box 41. Similarly, the third side 4213 and the sixth side 4223 are disposed oppositely, and space between the third side 4213 and the sixth side 4223 are also open, so that the jumper receiving space R3 directly communicates with the recycling box 41.

The conveyor belt 423 forms a transporting path in the jumper receiving space R3. The first driving wheel 424, the second driving wheel 425, and the third driving wheel 426 are all connected between the first baffle 421 and the second baffle 422, and are configured to mount and drive the conveyor belt 423. The first driving wheel 424 and the second driving wheel 425 are located at a boundary of the top area S5 and the bottom area S4. Apart that is of the conveyor belt 423 and that is located in the top area S5 is connected between the first driving wheel 424 and the second driving wheel 425. The third driving wheel 426 is located in the bottom area S4, and the third driving wheel 426 may be located in the recycling box 41. The third driving wheel 426, the first driving wheel 424, and the second driving wheel 425 constitute a triangular structure. Specifically, the first driving wheel 424, the second driving wheel 425, and the third driving wheel 426 are spaced apart from each other, and are three apexes of the triangular structure. The conveyor belt 423 is wound around the first driving wheel 424, the second driving wheel 425, and the third driving wheel 426, so that the conveyor belt 423 constitutes a triangular transporting path in the jumper receiving space R3.

The first driving wheel 424 is a drive wheel. It may be understood that the transmission mechanism 42 includes a drive motor, the drive motor is connected to the first driving wheel 424 and drives the first driving wheel 424 to rotate, and the first driving wheel 424 drives the conveyor belt 423 to move. The second driving wheel 425 and the third driving wheel 426 are auxiliary wheels, and the second driving wheel 425 and the third driving wheel 426 are rotated by friction force between the second driving wheel 425 and third driving wheel 426 and the conveyor belt 423.

In another implementation, the third driving wheel 426 may alternatively be eliminated, and only two driving wheels may be required to define the transporting path of the conveyor belt 423. Certainly, four driving wheels may alternatively be disposed. It may be understood that two third driving wheels are disposed in the bottom area S4, and a size of the transporting path of the conveyor belt 423 may be adjusted by increasing a quantity of driving wheels to meet different application demands. For example, when the standby jumper has a long size, the transporting path of the conveyor belt may be expanded in limited space by increasing the quantity of driving wheels to match with the long size of the standby jumper, so that the standby jumper is smoothly brought into the recycling box 41.

In the top area S5, a bearing surface of the conveyor belt 423 is away from the recycling box 41. In the bottom area S4, the bearing surface of the conveyor belt 423 faces toward the recycling box 41.

The transmission mechanism 42 includes a material discharging area S6 and a material taking area S7. The conveyor belt 423 is configured to constitute a closed-loop transporting path between the material discharging area S6 and the material taking area S7. The material discharging area S6 is located in the top area S5. The material taking area S7 may be located in the top area S5, or may be located in the bottom area S4. The material discharging area S6 is used by the plugging apparatus 200 to place the discarded jumper on the conveyor belt 423. In the material discharging area S6, the connector of the discarded jumper is fastened to the conveyor belt 423. The material taking area S7 is used by the plugging apparatus 200 to release the fixed relationship between the connector of the discarded jumper and the conveyor belt 423. After the fixed relationship is released, the discarded jumper can be dropped into the recycling box 41.

In a specific implementation, in a horizontal direction, the transmission mechanism 42 includes a first end 4201 and a second end 4202 that are oppositely disposed. An extension direction from the first end 4201 to the second end 4202 is the X-axis direction, and a direction perpendicular to the first baffle is the Y-axis direction. The material discharging area S6 is adjacent to the first end 4201, and the material discharging area S7 is located in the top area S5 and adjacent to the second end 4202. When the connector of the discarded jumper is transported by the conveyor belt 423 to the material taking area S7, after the plugging apparatus 200 releases the fixed relationship between the connector of the discarded jumper and the conveyor belt, through reverse movement of the conveyor belt 423, the discarded jumper falls into the recycling box 41 due to gravity.

The conveyor belt 423 is provided with a jumper fixing structure 4231, and the jumper fixing structure 4231 is configured to fasten the connector of the discarded jumper to the conveyor belt 423. In a specific implementation, the jumper fixing structure 4231 is a bracket that is fastened to the conveyor belt 423 and that is provided with an adapter port, and the discarded jumper is fastened to the conveyor belt 423 by inserting the connector of the discarded jumper into the adapter port. Specifically, when the jumper fixing structure 4231 is located in the material discharging area S6, the adapter port of the bracket faces toward the material discharging area S7.

In another implementation, the jumper fixing structure 4231 may alternatively be a clamping structure. For example, two oppositely disposed elastic grippers are fastened to the conveyor belt 423. The two elastic grippers are configured to obtain the clamping structure, and the connector of the discarded jumper is clamped in the clamping structure. When the jumper fixing structure 4231 is located in the discharging area S6, the plugging apparatus 200 is configured to fasten the connector of the discarded jumper to the jumper fixing structure 4231. When the jumper fixing structure 4231 carrying the connector moves to the material taking area S7, the plugging apparatus 200 is configured to release a fixed connection between the jumper fixing structure 4231 and the connector.

In this implementation, the plugging apparatus 200 moves in a direction perpendicular to the first baffle 421, so that the plugging apparatus 200 operates the connector of the discarded jumper in the discharging area S6 and the material taking area S7. Specifically, the first baffle 421 is provided with a material discharging port 4214 and a material taking port 4215. The material discharging port 4214 is located in the material discharging area S6, and the material taking port 4215 is located in the material taking area S7. The plugging apparatus 200 can carry the connector of the discarded jumper and enter into the jumper receiving space R3 from the material discharging port 4214, and insert the connector into the jumper fixing structure 4231. The plugging apparatus 200 can extend into the jumper receiving space R3 from the material taking port 4215, remove the connector from the jumper fixing structure 4231, leave the removed connector in the jumper receiving space R3, and place the connector on the conveyor belt 423.

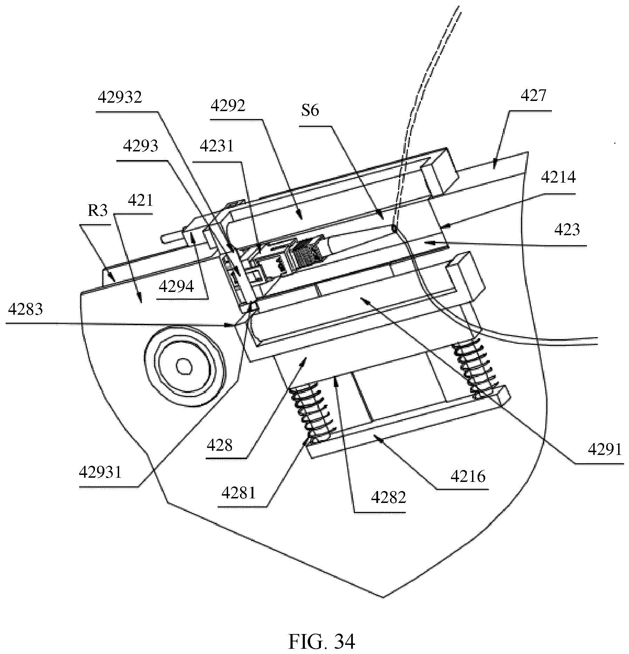

Refer to FIG. 33 and FIG. 34. The transmission mechanism further includes a shield door 428. The shield door 428 is mounted at the material discharging port 4214, and is slidably connected to the first baffle 421. The shield door 428 can block or open the material discharging port 4214, so that the plugging apparatus 200 extends into the material discharging area S6. Specifically, the first baffle 421 includes an inner surface and an outer surface that are oppositely disposed. The inner surface is a surface facing toward the jumper receiving space R3, and the shield door 428 is mounted on the outer surface. A mounting portion 4216 is protruded from the outer surface. The shield door 428 is slidably connected to the first baffle 421, and an elastic element 4281 is disposed between the shield door 428 and the mounting portion 4216. The elastic element 4281 may be a linear spring. The sliding connection structure between the shield door 428 and the first baffle 421 may be a fitting structure of a sliding slot and a slider. For example, the slider is disposed on a surface on which the shield door 428 is in contact with the first baffle 421, and the sliding slot is disposed on the outer surface of the first baffle 421. The slider cooperates with the sliding slot to implement a sliding connection between the shield door 428 and the first baffle 421. The shield door 428 includes a bottom 4282 and a top 4283. The bottom 4282 faces toward the mounting portion 4216, and is configured to abut against the elastic element 4281. The top 4283 faces toward the material discharging port 4214. In this application, the shield door 428 is driven by the plugging apparatus 200 to move. When the connector of the discarded jumper needs to be placed into the material discharging area S6, the plugging apparatus 200 is placed on the top 4283 of the shield door 428, and pushes the shield door 428 toward the mounting portion 4216, so that the shield door 428 moves toward the mounting portion 4216 until the material discharging port 4214 is open, and the plugging apparatus 200 can enter the jumper receiving space R3 from the material discharging port 4214. After placing the connector, the plugging apparatus 200 moves out of the jumper receiving space R3, and the shield door 428 automatically returns under the action of the elastic element 4281 to block the material discharging port 4214. In this state, the shield door 428 does not completely block the material discharging port 4214. There is still a gap between the shield door 428 and the first side 4211 at the top of the first baffle 421 or between the shield door 428 and the top plate 427, which is used to accommodate the cords that have been discarded. Because the cable portion of the discarded jumper is still outside the transmission mechanism 42 when the connector of the discarded jumper is in the jumper receiving space R3, the cable is continuously pulled into the jumper receiving space R3 during movement of the conveyor belt 423 of the transmission mechanism 42.

In this solution, the material discharging port is disposed, and the shield door is disposed at the material discharging port, so that other cables in the optical fiber distribution device can be prevented from being brought into the material discharging area in the jumper recycling process. In a process of being transported in the transmission mechanism, the discarded jumper sent by the transmission mechanism to the recycling box may rub against another cable outside the optical fiber distribution device, and friction force may pull the other cable. If no shield door is disposed at the material discharging port, the other cable may be brought into the material discharging area.

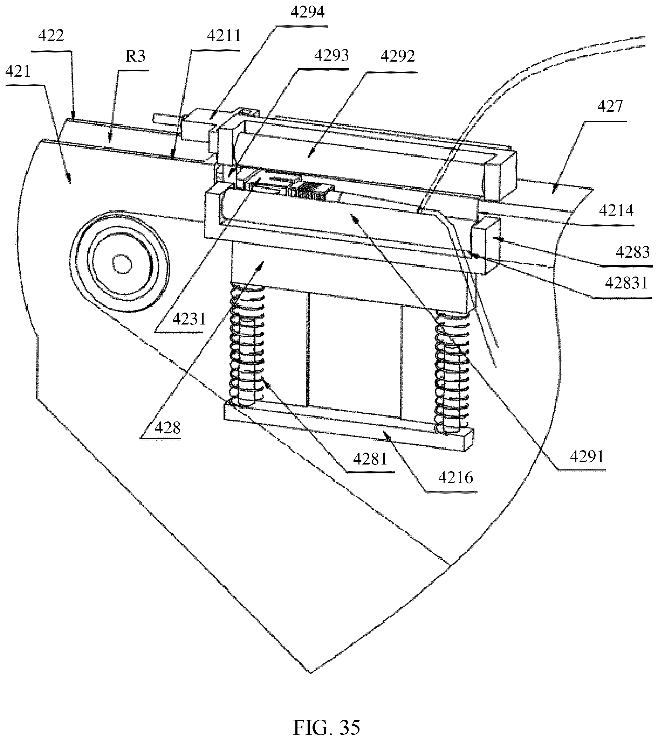

Refer to FIG. 34 and FIG. 35. To ensure smoothness of a process in which the cable of the standby jumper enters into the jumper receiving space, in an implementation, the transmission mechanism 42 further includes a first pulley 4291, and the first pulley 4291 is rotatably connected to the top 4283 of the shield door 428. When the shield door 428 blocks the material discharging port 4214, the first pulley 4291 is configured to lap the cable of the discarded jumper, so that the cable smoothly enters into the jumper receiving space R3 by sliding the first pulley 4291. Specifically, accommodating space 42831 is disposed at the top 4283 of the shield door 428, and the first pulley 4291 is rotatably connected to the shield door 428 along two ends in an axial direction by using a rotating shaft. Specifically, the material discharging port 4214 is rectangular. A direction extending along the first side 4211 is a length direction, and a direction perpendicular to the first side 4211 is a width direction. A size of the material discharging port 4214 in the length direction is larger than a size in the width direction. The axial direction of the first pulley 4291 is consistent with the length direction of the material discharging port 4214. A size of the first pulley 4291 extending in the length direction of the material discharging port 4214 is greater than or equal to the size in the length direction of the material discharging port 4214. That is, in the length direction of the material discharging port 4214, the first pulley 4291 completely blocks the material discharging port.

Before entering into the jumper receiving space R3, the cable of the standby jumper may alternatively be located above the top of the first baffle 421. As shown in FIG. 35, it may be understood that the cable is located above the top plate 427. In this case, in a process in which the cable enters into the jumper receiving space R3, the cable enters into the jumper receiving space R3 along an edge of the top plate 427. In an implementation, the transmission mechanism 42 further includes a second pulley 4292, and the second pulley 4292 is located between the first baffle 421 and the second baffle 422. Specifically, the second pulley 4292 is rotatably connected to the top plate 427. When the shield door 428 blocks the material discharging port 4214, a gap exists between the second pulley 4292 and the first pulley 4291. The gap is used for the cable to pass through. An area enclosed by the first pulley 4291, the second pulley 4292, and the conveyor belt 423 is configured to place the connector of the discarded jumper. An axial direction of the second pulley 4292 may be the same as the axial direction of the first pulley 4291. In the length direction of the material discharging port 4214, the second pulley 4292 may completely shield the material discharging port 4214. This solution facilitates smooth entry of the cable into the jumper receiving space R3. The cable can be prevented from being blocked. Sliding of the first pulley 4291 and the second pulley 4292 can also reduce the friction force between the cable and the transmission mechanism 42, and improve smoothness of jumper recycling.

The transmission mechanism 42 further includes a third pulley 4293. The third pulley 4393 is mounted in the material discharging port 4214 of the first baffle 421, and an axial direction of the third pulley 4293 is consistent with the width direction of the material discharging port 4214. It may also be understood as that the axial direction of the third pulley 4293 is perpendicular to the axial direction of the first pulley 4291. Specifically, the third pulley 4293 includes a first end 42931 and a second end 42932 that are oppositely disposed in an axial direction of the third pulley 4293. The first end 42931 is rotatably connected to the first baffle 421, and the second end 42932 is rotatably connected to the top plate 427. For the material discharging port 4214, an inner wall of the material discharging port 4214 facing toward the top plate is a bottom wall, the material discharging port 4214 has an opening on the first side, and a side wall in the material discharging port 4214 is connected between the bottom wall and the opening. In the process in which the cable enters into the jumper receiving space, the first pulley 4291 is configured to prevent the cable from being in contact with and rubbing with the bottom wall or the shield door 428 to produce f, the second pulley 4292 is configured to prevent the cable from being in contact with and rubbing with the top plate 427, and the third pulley 4293 is configured to prevent the cable from being in contact with and rubbing with the side wall of the material discharging port 4214.

In an implementation, the transmission mechanism 42 further includes a sensor 4294 and a controller (not shown). The sensor 4294 is fastened in the material discharging area S6, and the sensor 4294 is configured to sense a position of the jumper fixing structure 4231. When the jumper fixing structure 4231 moves to the material discharging area S6, the sensor 4294 sends a first signal to the controller. After receiving the first signal, the controller controls the conveyor belt 423 to stop moving. When the plugging apparatus 200 fastens the connector of the discarded jumper to the jumper fixing structure 4231, the controller receives a second signal, and starts the conveyor belt 423. The controller controls, based on a stroke or time for movement of the conveyor belt 423 or a coordinate position of the jumper fixing structure 4231, the conveyor belt 423 to stop moving, so that the jumper fixing structure 4231 stops in the material discharging area S7.

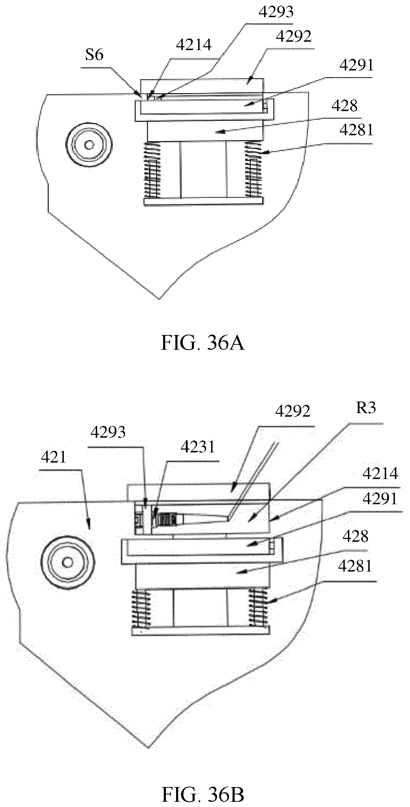

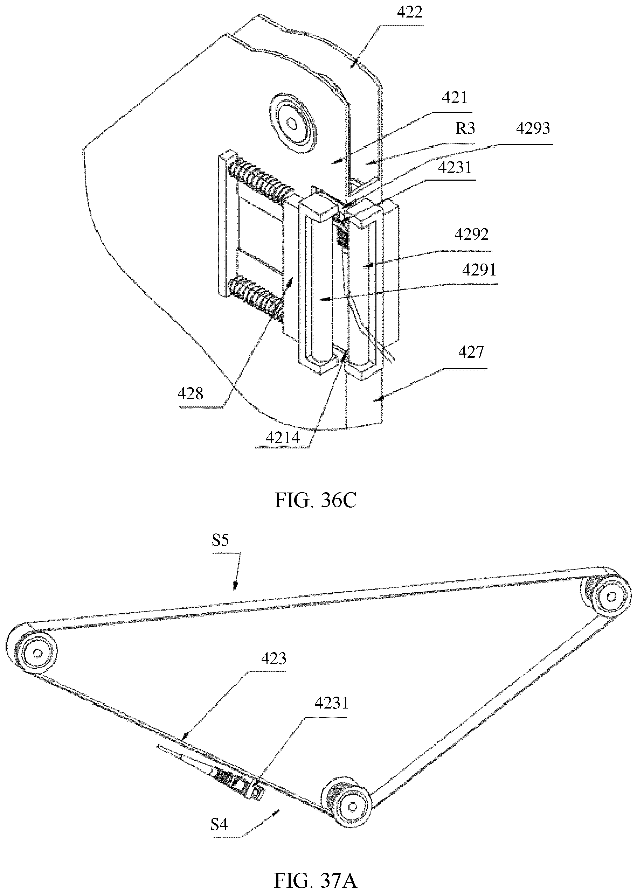

FIG. 36Ais a schematic diagram of the material discharging area S6 of the transmission mechanism 42 in a state in which the connector of the discarded jumper is not placed. In this state, the shield door 428 is at a closed position. Due to an elastic abutment action of the elastic element 4281, the shield door 428 blocks the material discharging port 4214.

FIG. 36B is a schematic diagram of the material discharging area S6 of the transmission mechanism 42 in a state in which the connector of the discarded jumper is placed in the material discharging area S6. It may be understood that the plugging apparatus 200 clamps the connector, the plugging apparatus 200 moves to the top of the shield door 428 shown in FIG. 36A, and the plugging apparatus 200 moves downward to push down the shield door 428, so that the shield door 428 is in an open position, and the material discharging port 4214 is not blocked. The plugging apparatus 200 and the connector can enter the jumper receiving space R3 through the material discharging port 4214, and the plugging apparatus 200 can insert the connector into the adapter port of the jumper fixing structure 4231.

FIG. 36C is a schematic diagram of closing the shield door 428 after the plugging apparatus 200 places the connector and exits the material discharging port 4214. When the plugging apparatus 200 releases the connector and moves out of the transmission mechanism 42 through the material discharging port 4214, the shield door 428 may automatically close.

FIG. 37A is a schematic diagram of a state in which the conveyor belt brings the connector of the discarded jumper into the bottom area S4 after the conveyor belt 423 is started. In this state, the cable of the discarded jumper has not completely entered the jumper receiving space R3. A related structure of the cable, the first baffle, the second baffle, and the shield door is omitted in FIG. 37A. In this state, the conveyor belt 423 needs to continue moving.

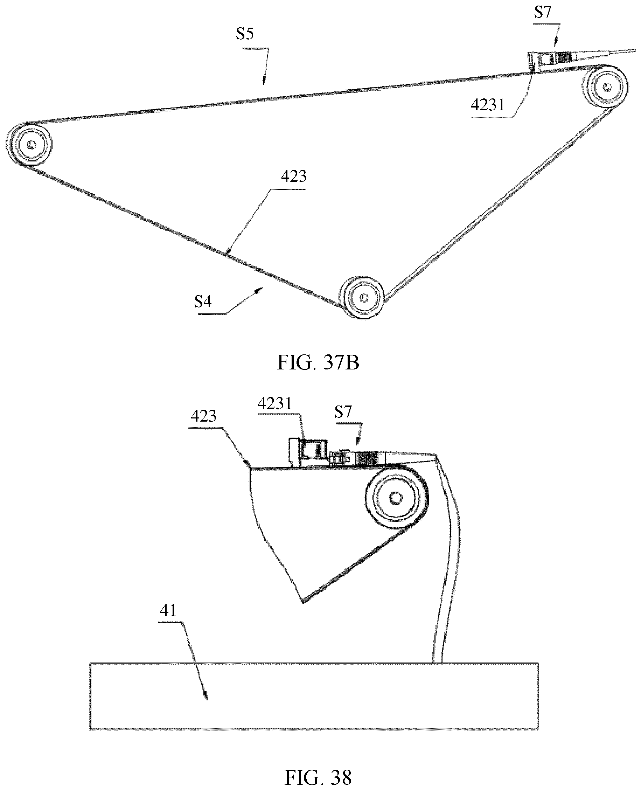

FIG. 37B is a schematic diagram showing that the conveyor belt 423 transports the connector to the material discharging area S7. In this state, the driving of the conveyor belt 423 is stopped, and the cable of the discarded jumper has completely entered the jumper receiving space R3. In addition, due to gravity, the cable freely drops into the recycling box 41. However, because the connector of the discarded jumper is still fastened to the jumper fixing structure 4231, the discarded jumper cannot enter the recycling box.

FIG. 38 is a schematic diagram showing that in the material discharging area S7, the plugging apparatus 200 removes the connector of the discarded jumper from the jumper fixing structure 4231 and places the connector on the conveyor belt 423. In this state, the conveyor belt 423 is driven to reverse, so that the connector falls into the recycling box 41 due to the gravity, and the discarded jumpers is recycled. In this implementation, the material taking area S7 is disposed in the top area S5 of the transmission mechanism 42 and is adjacent to the second end 4202, so that the transmission mechanism 42 has a small size. The material discharging area S6 may be located at the first end 4201 of the top area S5. Alternatively, the material discharging area S6 may be located at a middle position of the top area S5.

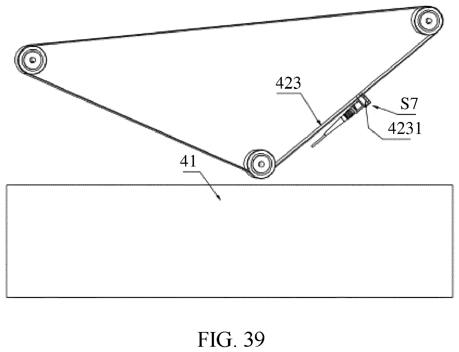

In another implementation, the material taking area S7 may be located in the bottom area S4 of the transmission mechanism 42. FIG. 39 is a schematic diagram showing that the conveyor belt 423 transports the connector to the material taking area S7. In this case, provided that the plugging apparatus 200 removes the connector of the discarded jumper from the jumper fixing structure 4231 and releases the connector after removing the connector, the connector freely drops into the recycling box 41. In this implementation, the discarded jumper can fall into the recycling box 41 without the reverse movement of the conveyor belt 423.

In the optical fiber distribution device shown in FIG. 25, the jumper storage apparatus includes two first areas and a second area sandwiched between the two first areas. The first area is strip-shaped, and extends in the first direction, the second area is adjacent to the first area, and internal space of the first space communicates with internal space of the second area. The connectors at two ends of the standby jumper are respectively accommodated in the two first areas, and arranged in a linear array along the first direction. The optical fiber cable connected between the connectors at the two ends of the standby jumper is accommodated in the second area. Each first area is provided with a jumper fetching window. The jumper fetching window is configured to accommodate one of the connectors, and the jumper fetching window is a position at which the plugging apparatus fetches the standby jumper from the fiber storage module. The fiber storage module may be detachably connected inside the optical fiber distribution device, for example, slidably connected to the mounting plate.

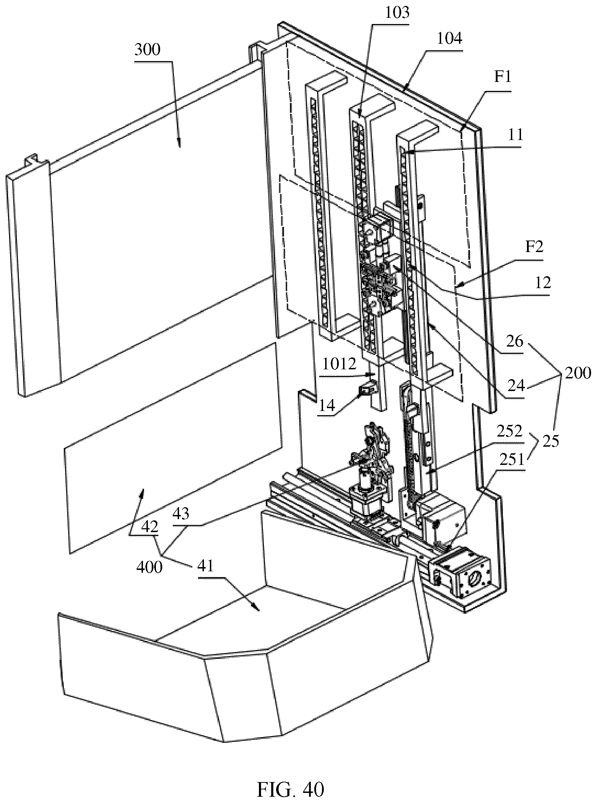

FIG. 40 is a schematic diagram of an optical fiber distribution device according to an implementation of this application. A difference between this implementation and the optical fiber distribution device shown in FIG. 25 lies in different quantities of mounting plates 104 and plugging apparatuses 200 and a different specific structure of a jumper storage apparatus 300. In this implementation, the optical fiber distribution device includes a mounting plate 104, a plugging apparatus 200, a jumper storage apparatus 300, and a jumper recycling apparatus 400. Adapter ports on an integrated distribution panel 103 disposed on the mounting plate 104 may be disposed through division. Some of the adapter ports are first ports 11, and the other adapter ports are second ports 12. In this case, two ends of a connecting jumper are respectively inserted into the first port 11 and the second port 12, to implement an optical path. As shown in FIG. 40, a division method is upper and lower division. In the figure, a dashed-line box F1 is represented as a first distribution area F 1, an adapter port in the first distribution area F1 is the first port 11, a dashed-line box F2 is represented as a second distribution area F2, and an adapter port in the second distribution area F2 is the second port 12.

In this implementation, the jumper storage apparatus 300 includes a jumper fetching window. Specifically, the jumper storage apparatus includes a first area and a second area. The first area is adjacent to the second area, and internal space of the first area communicates with internal space of the second area. Connectors at two ends of a standby jumper are accommodated in the first area and are arranged in a linear array in an extension direction of the first area. An optical fiber cable connected between the connectors at the two ends of the standby jumper is accommodated in the second area. The jumper fetching window is disposed in the first area. The jumper fetching window is configured to accommodate a connector head of the standby jumper. The jumper fetching window is a position at which the plugging apparatus fetches the standby jumper from the jumper storage apparatus. In this implementation, in the first area, connectors at two ends of a same standby jumper are disposed adjacently. A fiber storage module may be detachably connected inside the optical fiber distribution device, for example, slidably connected to the mounting plate.

FIG. 40 schematically represents a transmission mechanism 42 by using a quadrilateral frame structure. For a specific structure of the transmission mechanism 42, refer to the structure of the transmission mechanism 42 shown in Fig. 33. In an implementation, when the transmission mechanism 42 shown in FIG. 33 is used in this implementation, a material discharging port is placed close to the distribution panel, so that an actuator of the plugging apparatus can move to the material discharging port along the main track 251 of the column change mechanism, and place connectors of a discarded jumper on a jumper fixing structure. In an implementation, a track may be designed in the optical fiber distribution device, and the track is connected to the main track of the column change mechanism and extends in a different direction. The actuator may move along the track to the material discharging port and the material taking port of the transmission mechanism 42, to perform corresponding operations.

In the implementation shown in FIG. 40, the optical fiber distribution device further includes a connector parking port 141 and an extension plate 1012 of the first distribution panel 101, and the connector parking port 141 is disposed on the extension plate 1012. The connector parking port 141 may act as a hand-changing action for first and second grippers. Further, the connector parking port 141 may also cooperate with a jumper cutting mechanism 43. When a connector of the discarded jumper needs to be cut off and the jumper is recycled, the actuator removes the connector from the distribution panel and inserts the connector into the connector parking port 141, and starts the jumper cutting mechanism 43 to cut off the connector.

In this implementation, a part of the plugging apparatus 200 is integrated in a crawling area 105 between distribution panels by using a fixed track 24, so that the actuator 26 performs operations such as fiber fetching, distribution, and jumper discarding by changing columns. Due to a design in which the part of the plugging apparatus 200 is integrated between the distribution panels, a distribution process is faster and more accurate, and distribution efficiency of an optical fiber distribution design can be improved.

In an implementation, a plurality of ports on a distribution panel of an optical fiber distribution device provided in this application are arranged in at least one rotational symmetry architecture. The port is an adapter port, and is configured to match with a connector of a connecting jumper, to implement an optical path. A central axis of the rotational symmetry architecture is used as a rotation center. The plurality of ports include a plurality of first ports and a plurality of second ports. Connectors at two ends of the connecting jumper are respectively inserted into a corresponding first port and a corresponding second port, to implement an optical path. Each connecting jumper bypasses the central axis. The first port, the central axis, and the second port jointly determine an extension path of the connecting jumper. In this implementation, the plurality of ports are arranged in the rotational symmetry architecture, and the connecting jumpers all bypass the central axis, so that distribution can be implemented by using the connecting jumpers of equal length (or nearly equal length). In this way, the connecting jumpers have orderly distribution management. Therefore, the optical fiber distribution device does not need large space to store the connecting jumpers, and the optical fiber distribution device has advantages of a small size and low costs.

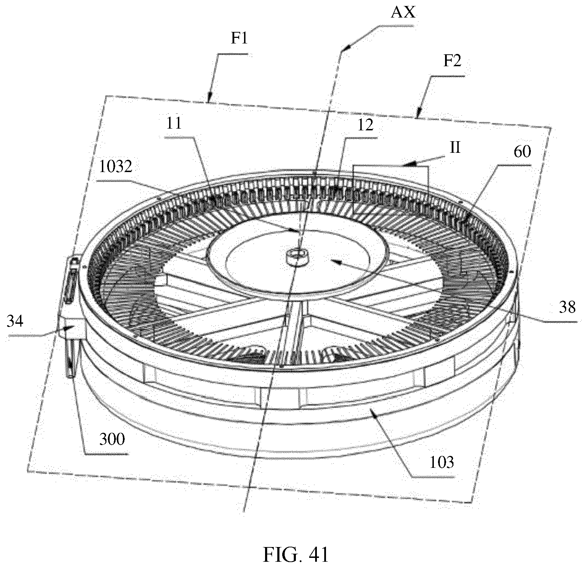

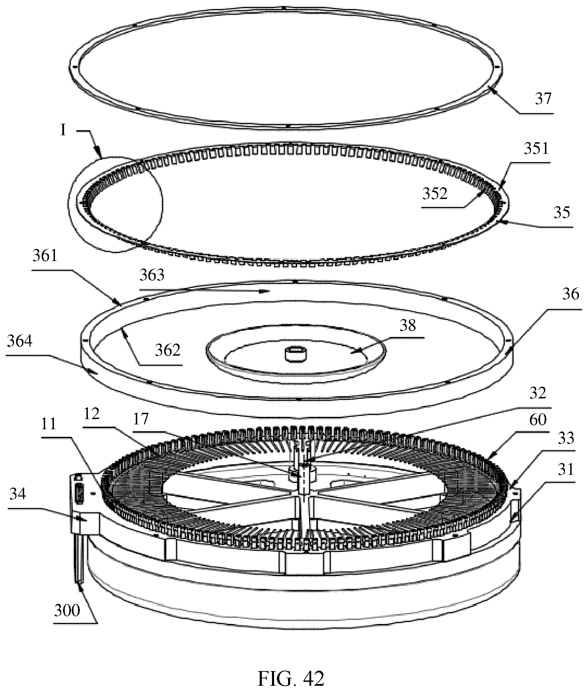

FIG. 41 and FIG. 42 are a three-dimensional diagram and a three-dimensional exploded view of a distribution panel of an optical fiber distribution device according to an implementation of this application. In this implementation, the distribution panel of the optical fiber distribution device is an integrated distribution panel 103. Specifically, the integrated distribution panel 103 is in a disk shape, and a central axis 1032 is disposed at a center of the integrated distribution panel 103. A plurality of adapter ports are rotationally symmetrically distributed around the central axis 1032. In an implementation, the plurality of adapter ports are distributed on a same circumference, that is, distances from all the adapter ports to the central axis are equal. The plurality of adapter ports may form a circle, a semicircle, or an arc around the central axis 1032. Some of the adapter ports are first ports 11, and some of the adapter ports are second ports 12. In a specific implementation, a first distribution area F1 and a second distribution area F2 are disposed on the integrated distribution panel 103, and the first distribution area F 1 and the second distribution area F2 are symmetrically distributed on two sides of a symmetry axis AX. The symmetry axis AX intersects the central axis 1032. All the first ports 11 are distributed in the first distribution area F1, and all the second ports 12 are distributed in the second distribution area F2. In another implementation, both a quantity of first distribution areas F1 and a quantity of second distribution areas F2 on the integrated distribution panel 103 may be two or more, and the first distribution areas F1 and the second distribution areas F2 are alternately arranged at intervals in a circumferential direction. The plurality of ports may alternatively be arranged in another manner on the integrated distribution panel 103. This is not limited in this application.

In this implementation, the integrated distribution panel 103 includes a panel body 31, an elastic pressing member 35, a support member 36, a fixing piece 37, and a pressing plate 38. The panel body 31 includes a distribution surface 33. As shown in FIG. 42, the distribution surface 33 is a top surface of the panel body 31, and the distribution surface 33 is planar. The plurality of adapter ports (the first ports 11 and the second ports 12) are disposed on the distribution surface 33. The central axis AX of the distribution panel 103 is perpendicular to the distribution surface 33. The plurality of adapter ports (the first ports 11 and the second ports 12) extend from the distribution surface 33 to the inside of the panel body 31, and an extension direction is perpendicular to the distribution surface 33. This may also be understood as: The direction in which the adapter ports extend from the distribution surface 33 to the inside of the panel body 31 is parallel to a direction of the central axis AX of the distribution panel 103. The distribution surface 33 may be of a planar structure, or may be of a multi-planar structure. For example, the distribution body includes a step-shaped distribution surface. This may be understood that a part of the distribution surface (first surface for short) corresponds to a first axial position, and a part of the distribution surface (second plane for short) corresponds to a second axial position. The first axial position is different from the second axial position. That is, the two parts of the distribution surface correspond to different positions on the central axis AX. For example, the first port 11 is disposed on a first plane, and the second port is disposed on a second plane. Specifically, the panel body 31 is a cylindrical structure with a large cross section and a small axial size. The distribution surface 33 is a top end face of the panel body 31. An outer side surface may be understood as an outer peripheral surface connected between the top end face and a bottom end face of the panel body 31. The outer side surface may be a cylindrical surface, or may be a polygonal cylinder.

A bracket 34 is disposed on the outer side surface of the panel body 31. The bracket 34 is configured to fasten a jumper storage apparatus 300. In an implementation, a top surface of the bracket 34 is coplanar with the distribution surface 33 of the panel body 31. In the implementation shown in FIG. 42, there is one bracket 34 and one jumper storage apparatus 300. In another implementation, a plurality of brackets 34 may be disposed on the outer side surface of the panel body 31, the plurality of brackets 34 may be disposed at intervals in a circumferential direction around the distribution panel 103, and one jumper storage apparatus 300 may be mounted in each bracket 34. In another implementation, a plurality of jumper storage apparatuses 300 may alternatively be mounted in each bracket 34, and the plurality of jumper storage apparatuses 300 may be stacked in a radial direction of the distribution panel 103.

The support member 36 is configured to: enclose cabling space on the distribution surface 33, and determine a mounting position of the elastic pressing member 35 above the distribution surface 33. The support member 36 is fastened to the distribution surface 33, and surrounds a periphery of the adapter ports. The adapter ports are arranged on a circumference of the distribution surface 33, and the support member 36 is located at an edge position of the distribution surface 33. The support member 36 includes a top end face 361, a bottom end face 362, and an inner side surface 363 and an outer side surface 364 that are connected between the bottom end face 362 and the top end face 361. The bottom end face 362 of the support member 36 is in contact with the distribution surface 33 of the panel body 31. The top end face 361 of the support member 36 is configured to mount the elastic pressing member 35. Space surrounded by the inner side surface 363 of the support member 36 is cabling space for connecting jumpers.

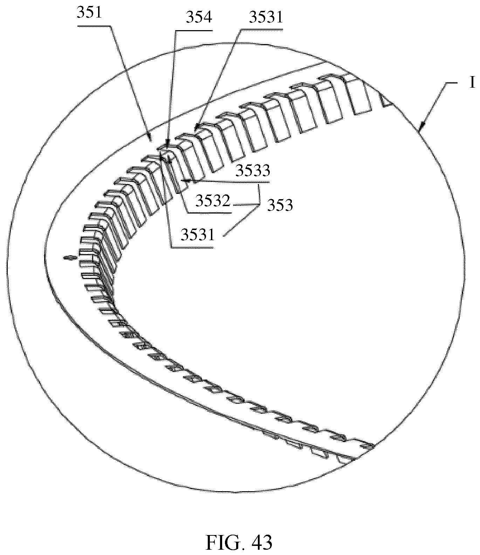

Refer to FIG. 42 and FIG. 43. The elastic pressing member 35 is of an integrated structure. The elastic pressing member 35 includes a fixing piece 351 and an elastic portion 352. The fixing piece 351 is in a ring shape, and the fixing piece 351 is mounted on the top end face 361 of the support member 36. The fixing piece 37 is in a ring shape. The fixing piece 37 and the fixing piece 351 of the elastic pressing member 35 are stacked, and the fixing piece 351 may be fastened between the fixing piece 37 and the support member 36 through screw fixing. The elastic portion 352 includes a plurality of spring sheets 353. The plurality of spring sheets 353 and the plurality of adapter ports are disposed in a one-to-one correspondence. One end of each spring sheet 353 is connected to the fixing piece 351, and the other end of the spring sheet 353 faces toward the adapter port and is configured to abut against a connector inserted in the adapter port. In an implementation, the elastic pressing member 35 is of an integrally formed metal spring sheet structure. The elastic portion 352 has a comb-shaped structure at an inner edge of the fixing piece 351, and the comb-shaped structure is a three-dimensional structure. A part of the comb-shaped structure is located on a plane where the fixing piece 351 is located, and a part of the comb-shaped structure extends in an oblique and bent manner from the plane on which the fixing piece 351 is located to the distribution surface 33.

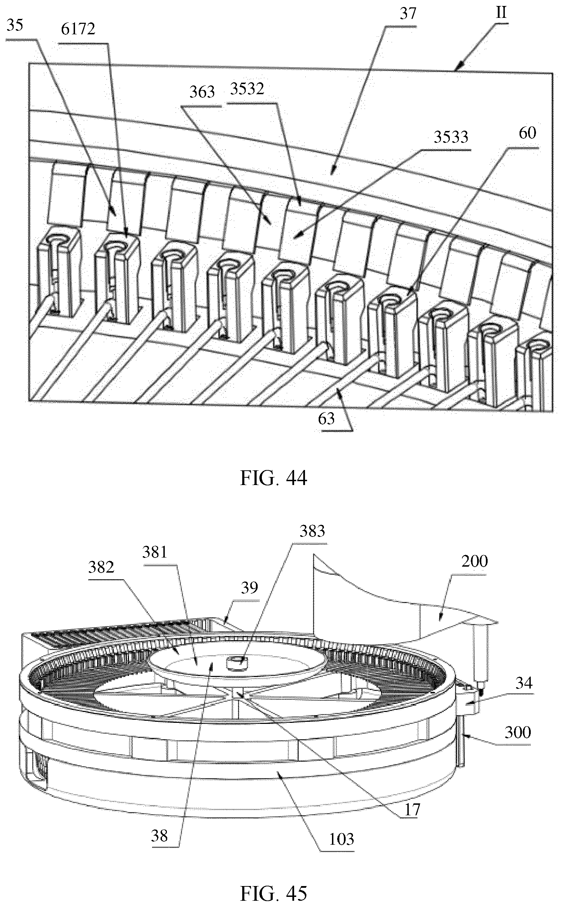

Specifically, refer to FIG. 43 and FIG. 44. FIG. 43 is a schematic diagram of enlargement of a part I in FIG. 42, and FIG. 44 is a schematic diagram of enlargement of a part II in FIG. 41. The plurality of spring sheets 353 in the elastic portion 352 have a same structure. A specific structure of each spring sheet is as follows: The spring sheet 353 includes a connecting portion 3531, a bending portion 3532, and an abutting portion 3533 that are sequentially connected. The connecting portion 3531 is connected to an edge of the fixing piece 351. The connecting portion 3531 and the fixing piece 351 are coplanar. A gap 354 is formed between adjacent connecting portions 3531. The bending portion 3532 extends in a bent manner from an edge of the connecting portion 3531 away from the fixing piece 351. Specifically, the bending portion 3532 is in an arc shape. The abutting portion 3533 extends from an edge of the bending portion 3532 away from the connecting portion 3531 toward the adapter port on the distribution surface 33. The abutting portion 3533 is located in the cabling space surrounded by the inner side surface 363 of the support member 36. When the spring sheet 353 is in a natural state, a gap is provided between the abutting portion 3533 and the inner side surface 363 of the support member 36. A vertical projection of the abutting portion 3533 on the distribution surface 33 is located outside a range of the adapter ports. That is, a free end of the abutting portion 3533 does not fall within the range directly above the adapter ports. In this case, in a process of inserting the connector (namely, a plug of the connecting jumper) into the adapter port, the spring sheet 353 does not block a front end of the connector. Because the front end of the connector is a ferrule, the ferrule can be prevented from touching the spring sheet 353, and the ferrule is protected. An insertion direction in which the connector is inserted in the adapter port is a first direction. The first direction is perpendicular to the distribution surface 33. An extension direction of the spring sheet 353 of the abutting portion 3533 from the edge of the bending portion 3532 to a free open end of the abutting portion 3533 is a second direction. An included angle between the second direction and the first direction is less than 90 degrees. That is, the abutting portion 3533 is set in an inclined state. In the process of inserting the connector in the adapter port, a housing of the connector interferes with the abutting portion 3533 of the spring sheet 353. To be specific, the housing of the connector applies force in the first direction to the abutting portion 3533. Because the abutting portion 3533 is in the inclined state, the force in the first direction can cause the abutting portion 3533 to elastically deform and approach the inner side surface 363 of the support member 36. Consequently, the gap between the abutting portion 3533 and the inner side surface 363 becomes smaller or zero.

Specifically, the spring sheets 353 are obtained by bending strip-shaped metal sheet structures having an equal width. The elastic pressing member 35 is of a ring-shaped metal sheet structure. A part of material is cut from an inner edge of the elastic pressing member 35 to obtain a comb structure. The comb structure is bent to obtain the spring sheets 353.

Refer to FIG. 45. In an implementation, the jumper storage apparatus 300 is disposed at a periphery of the distribution panel 103, and an optical fiber is obtained from the jumper storage apparatus 300 by using a plugging apparatus 200. Specifically, there are a plurality of jumper storage apparatuses 300. A bracket 34 and a storage box 39 are disposed at the periphery of the distribution panel. The bracket 34 is configured to fasten one jumper storage apparatus 300. The storage box 39 is configured to place the plurality of jumper storage apparatuses 300. Specifically, the plurality of jumper storage apparatuses 300 are arranged side by side inside the storage box 39. When distribution is required, the plugging apparatus 200 fetches a standby jumper from the jumper storage apparatus 300 on the bracket 34. When there is no standby jumper in the jumper storage apparatus 300 on the bracket 34, the jumper storage apparatus 300 is fetched from the bracket 34, and a new jumper storage apparatus 300 is fetched from the storage box 39 and fastened to the bracket 34. Only one storage box 39 may be disposed at the periphery of the distribution panel 103. There may be one or more brackets 34 at the periphery of the distribution panel 103.

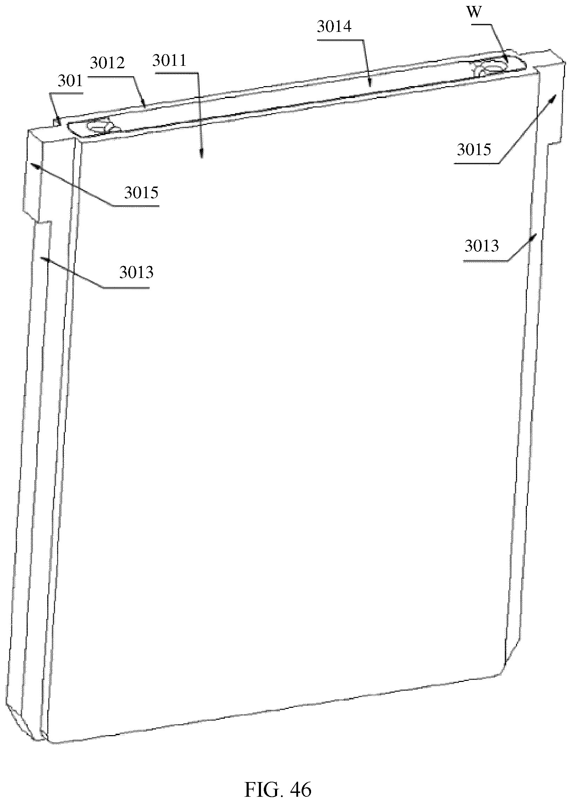

For a specific structure of the jumper storage apparatus 300 in this implementation, refer to FIG. 46, FIG. 47, and FIG. 48. For the jumper storage apparatus 300, only one standby jumper may be stored in one jumper storage apparatus 300. The jumper storage apparatus 300 includes a housing 301. The housing 301 includes a first plate 3011 and a second plate 3012 that are oppositely disposed and a pair of side plates 3013 that are connected between the first plate 3011 and the second plate 3012 and that are oppositely disposed. The first plate 3011, the second plate 3012, and the pair of side plates 3013 jointly for hollow space inside the housing 301. A bottom of the housing 301 is closed, and an opening 3014 is disposed on a top of the housing 301. The opening 3014 enables the hollow space inside the housing 301 to communicate with the outside. A positioning block 3015 is protruded from an outer surface of the side plate 3013. The positioning block 3015 is configured to cooperate with corresponding positioning structures in the bracket 34 and the storage box 39, to position the jumper storage apparatus 300 in the bracket 34 or the storage box 39. The hollow space in the housing 301 includes two connector accommodating areas 3016 and one cable accommodating area 3017. The connector accommodating areas 3016 are respectively located on two opposite sides of the cable accommodating area 3017, and the connector accommodating areas 3016 are respectively adjacent to the pair of side plates 3013. The connector accommodating area 3016 is configured to accommodate a connector of the standby jumper, and the cable accommodating area 3017 is configured to accommodate a cable of the standby jumper. A jumper fetching window W of the jumper storage apparatus 300 provided in this implementation is located at a top opening position of the connector accommodating area 3016. That is, the top opening 3014 of the housing is facing the connector accommodating area 3016. In this implementation, the jumper storage apparatus 300 includes two jumper fetching windows W, and the two jumper fetching windows Ware distributed at positions adjacent to the two side plates 3013 of the housing 301.

In an implementation, in the connector accommodating area 3016, the housing 301 includes a bottom wall 161 facing the opening 3014, a first side wall 162 connected between the bottom wall 161 and an edge of the opening 3014, and a pair of second side walls 163 that are oppositely disposed. The first side wall 162 is a part of the side plate 3013. The pair of second side walls 163 are respectively a part of the first plate 3011 and a part of the second plate 3012. The first side wall 162 is connected to one end of the pair of second side walls 163, and the other end of each of the pair of second side walls 163 is connected to a positioning surface 164. The positioning surfaces 164 are opposite to the first side wall 162. Moreover, the two positioning surfaces 164 form a passage for communicating the connector accommodating area 3016 and the cable accommodating area 3017. The bottom wall 161 is provided with a socket 165. The socket 165 extends from the bottom wall 161 to the bottom of the housing 301. The socket 165 is configured to accommodate a ferrule of the connector. The first side wall 162, the pair of second side walls 163, and the pair of positioning surfaces 164 are jointly in contact with the housing of the connector of each fiber, and the connector can be positioned in the circumferential direction. The connector does not rotate in the connector accommodating area 3016. The connector can only be moved into or out of the connector accommodating area 3016 relative to the housing 301 through reciprocating motion in a direction extending between the opening 3014 and the bottom wall 161.

In the implementations shown in FIG. 41, FIG. 42, and FIG. 44, a connector 60 is disposed in each adapter port. Each connector 60 is connected to another connector by using a cable of the connector 60, to form a connecting jumper. Two ends of the connecting jumper are plugs matching with the adapter ports. This plug is the connector 60. In this implementation, the first port 11 and the second port 12 on the integrated distribution panel 103 are connected by using the connecting jumper, to implement an optical path. A specific structure of the connector 60 provided in an implementation of this application is as follows.

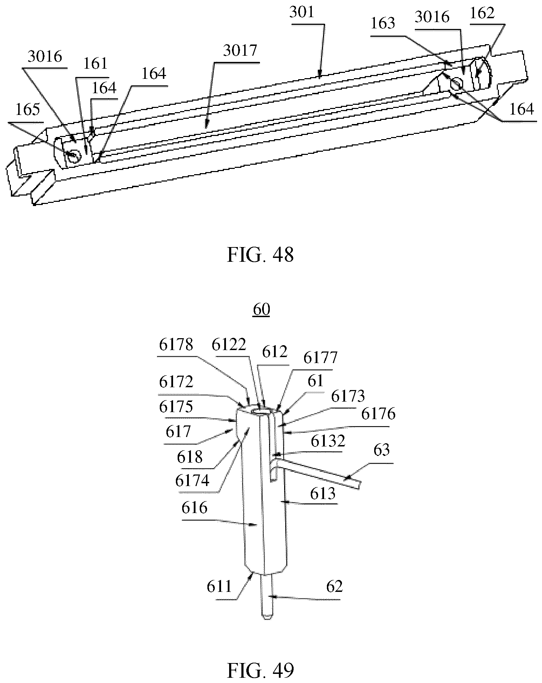

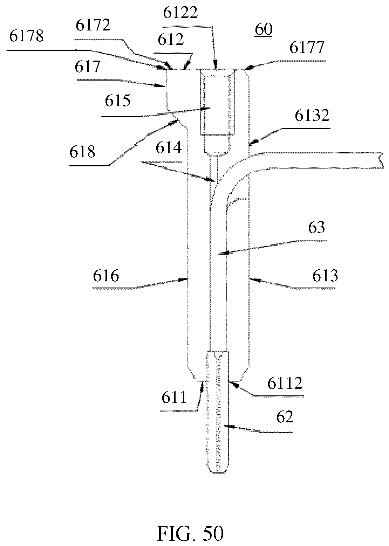

Refer to FIG. 49 and FIG. 50. The connector 60 includes a housing 61, a ferrule 62, and a cable 63. The housing 61 includes a front end face 611 and a rear end face 612 that are oppositely disposed, and a side wall 613 between the front end face 611 and the rear end face 612. An optical channel 614 is disposed inside the housing 61. The optical channel 614 has a first opening 6112 on the front end face 611, and the optical channel 614 has a second opening 6132 on the side wall 613. A part of the ferrule 62 extends into the optical channel 614 from the first opening 6112, so that the ferrule 62 is mount to the housing 61. Apart of the cable 63 extends into the optical channel 614 from the second opening 6132. In the optical channel 614, the ferrule 62 is fastened to the cable 63. The housing 61 is provided with accommodating space 615. In an implementation, the accommodating space 615 is a threaded hole. The accommodating space 615 has a third opening 6122 on the rear end face 612. The third opening 6122 is configured to allow a connection head of the plugging apparatus 200 to extend into the accommodating space 615. In this implementation, the optical channel 614 communicates with the accommodating space 615, the second opening 6132 communicates with the third opening 6122, and the second opening 6132 communicates with the accommodating space 615. The second opening 6132 on the side wall 613 is in a cut shape extending from the rear end face 612 to a center position of the side wall 613. Such a design facilitates mounting of the cable 63. In this case, the mounting of the cable 63 is convenient and efficient, and also increases bending space for the cable 63. The cable 63 is not squeezed at the second opening 6132, so that the cable 63 is not bent at a large angle, and optical signal transmission performance of the cable 63 can be maintained. In another implementation, the optical channel 614 and the accommodating space 615 may be space independent of each other (that is, the optical channel 614 does not communicate with the accommodating space 615).

An axial direction of the ferrule 62 is an axial direction of the connector 60. The cable 63 of the connector 60 is in a non-linear shape in the optical channel 614, or has a curved section. One end of the cable 63 needs to be fastened to the ferrule 62 along the axial direction of the connector 60, and a part of the cable 63 leading out of the housing needs to be bent. The cable 63 of the connector 60 provided in this application is led out from the side wall 613 of the housing 61, and a structure in which the connector 60 provided in this application is combined with the connection head of the plugging apparatus 200 is the accommodating space 615. An opening position of the accommodating space 615 is the third opening 6122 on the rear end face 612 of the housing 61. That is, the connection head of the plugging apparatus is inserted into the housing 61 from the rear end face 612 of the housing 61, and is fastened to the housing 61. Therefore, in an application process of the connector 60 provided in this application, no operating space needs to be reserved at a periphery of the connector 60 for the plugging apparatus. This has an advantage of saving space. When this application is applied to the optical fiber distribution device, no operating space needs to be reserved at a periphery of an optical fiber adapter disposed on the distribution panel for the plugging apparatus either. In this way, high-density configuration of adapter ports of the distribution panel can be implemented, and more adapter ports can be disposed within a limited area of the distribution surface on the distribution panel. Therefore, designs of the connector 60 and the distribution panel 103 provided in this application enable the optical fiber distribution device to have advantages of small size, space saving, and low costs.

The housing 61 has a long columnar structure. The housing 61 includes a first section 616 and a second section 617. The first section 616 is adjacent to the front end face 611, and the second section 617 is adjacent to the rear end face 612. An outer surface of the first section 616 is a non-cylindrical surface. In an implementation, an outer surface of a side wall of the first section 616 is a square cylindrical surface, that is, includes four planes that are sequentially connected and that are opposite to each other. The first section 616 is configured to match the adapter port. To be specific, accommodating space in the adapter port corresponding to the connector 60 is also a square cylinder. After the first section 616 is inserted into the adapter port, an outer surface of the housing 61 of the connector 60 is in contact with an inner surface of the adapter port. The connector 60 and the adapter port may be fastened in the circumferential direction. That is, after the connector 60 is inserted into the adapter port, the connector 60 cannot rotate in the adapter port. In this implementation, an outer surface of the second section 617 includes a pressing surface 6172. The pressing surface 6172 and the rear end face 612 may be coplanar, or the pressing surface 6172 is a part of the rear end face 612. The pressing surface 6172 is configured to cooperate with the elastic pressing member 35 (as shown in FIG. 44). The elastic pressing member 35 presses against the pressing surface 6172, so that the connector 60 can be prevented from moving out of the adapter port, and implement locking between the connector 60 and the adapter port. The pressing surface and the rear end face may alternatively be located on different surfaces. For example, the pressing surface is disposed on a surface of the protruding part of the side wall. The pressing surface and the rear end face a same direction, and both can cooperate with the elastic pressing member.

Specifically, the side wall of the second section 617 includes a first surface 6173, a second surface 6174, a third surface 6175, and a fourth surface 6176 that are sequentially connected. The second opening 6132 is disposed on the first surface 6173. The second surface 6174 and the fourth surface 6176 are oppositely disposed, and the third surface 6175 and the first surface 6173 are disposed oppositely. A boundary line between the first surface 6173 and the rear end face 612 is a first line 6177, and a boundary line between the third surface 6175 and the rear end face 612 is a second line 6178. A distance between the first line 6177 and a central position of the third opening 6122 is less than a distance between the second line 6178 and the central position of the third opening 6122, and the central position of the third opening 6122 may be a position of a central axis of the connector 60. A part of the rear end face 612 between the second line 6178 and the third opening 6122 may be the pressing surface 6172. The accommodating space 615 is disposed inside the second section 617. An outer surface of the side wall 613 of the housing 61 further includes an inclined surface 618 connected to a side that is of the third surface 6175 and that is away from the rear end face 612, and an included angle between the inclined surface 618 and the third surface 6175 is greater than 90 degrees. During insertion of the connector 60 into the adapter port, the inclined surface 618 is configured to abut against the elastic pressing member 35.

The connector, the distribution panel, and the plugging apparatus in the optical fiber distribution device provided in this implementation form a distribution assembly. In an implementation, the distribution assembly having the connectors shown in FIG. 14 and FIG. 15 has advantages of high distribution density and a small size. In another implementation, the connector in the distribution assembly provided in this application may alternatively be a connector of another type. The plugging apparatus may be provided with a gripper. The connector is inserted, removed, and transported by using the gripper to clamp the outer surface of the connector, and distribution of a consumable type may be implemented.

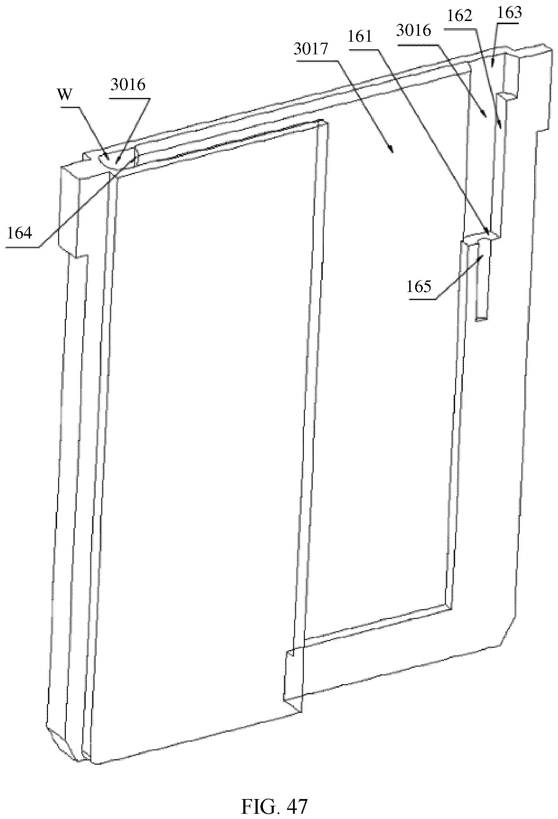

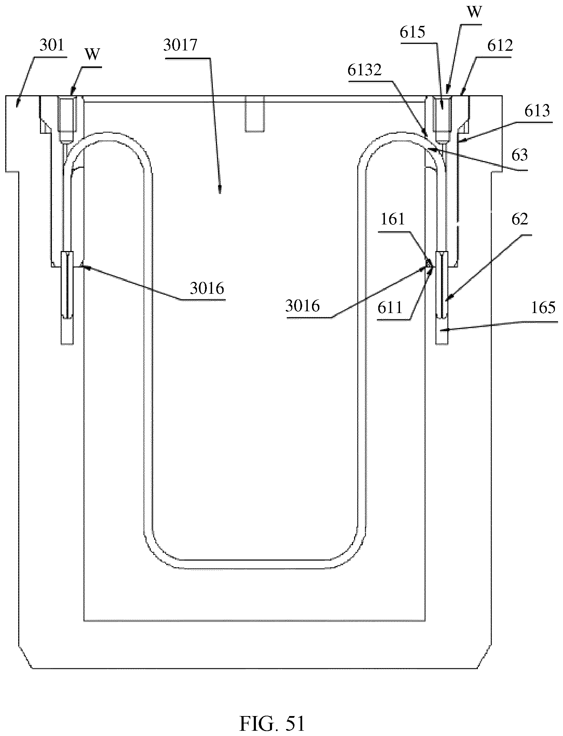

Referring to FIG. 47 and FIG. 51, in the jumper storage apparatus 300 provided in this application, one standby jumper includes two connectors 60 and a cable connected between the two connectors. When the connector 60 of the standby jumper is inserted into the connector accommodating area 3016 in the housing 301 of the jumper storage apparatus 300, the rear end face 612 of the connector 60 is exposed at the position of the jumper fetching window W of the jumper storage apparatus 300. That is, the rear end face 612 is located in the top opening 3014 of the housing, and faces the connector accommodating area 3016. The ferrule of the connector 60 is inserted into the socket 165, the front end face 611 of the housing 61 of the connector 60 is in contact with the bottom wall 161, and the side wall 613 of the housing 61 cooperates with the first side wall 162, the second side wall 163, and the positioning surface 164, to position the connector 60 in the connector accommodating area 3016. When the connector 60 is positioned in the connector accommodating area 3016, the second opening 6132 of the connector 60 faces toward the cable accommodating area 3017, so that the cable 63 can directly extend into the cable accommodating area 3017 from the passage between the two positioning surfaces 164.

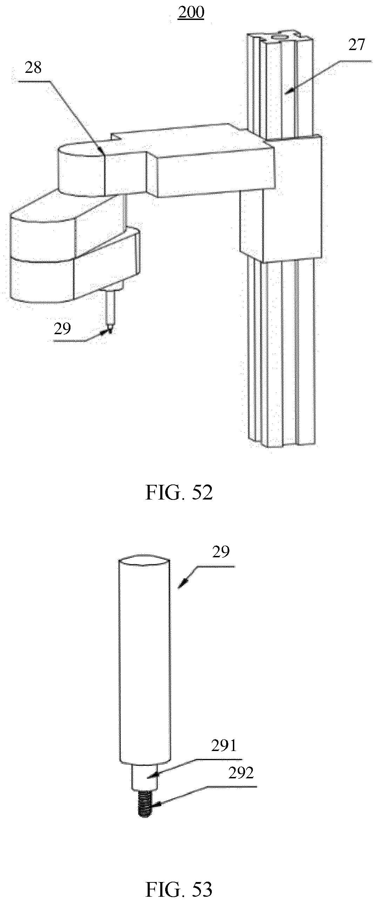

In this application, the connector 60 is fetched from the jumper storage apparatus 300 by using the plugging apparatus 200. For the plugging apparatus 200 provided in an implementation, refer to FIG. 52 and FIG. 53. The plugging apparatus 200 includes a lifting track 27, a swing arm 28, and a connection head 29. The swing arm 28 is slidably connected to the lifting track 27, and the connection head 29 is fastened to an end of the swing arm 28. Through movement of the swing arm 28 relative to the lifting track 27, the connection head 29 may move in a Z-axis direction. By using rotation connection structures between branches of the swing arm 28, the swing arm 28 can drive the connection head 29 to move arbitrarily in a plane where an X axis and a Y axis are located. As shown in FIG. 53, the connection head 29 of the plugging apparatus 200 includes a pluggable body 291 and a matching portion 292. In an implementation, the matching portion 292 is fastened to the accommodating space of the housing 61 of the connector 60 in a rotating manner. Specifically, the matching portion 292 is a screw rod provided with external threads, and the accommodating space is a threaded hole. One end of the matching portion 292 is connected to an end face of the pluggable body 291. Specifically, the matching portion 292 is located at a central position of the pluggable body 291, and the pluggable body 291 may be cylindrical. The connection head 29 is connected to a revolving pair (not shown in the figure). The connection head 29 may be driven to rotate by using a motor. Therefore, in this application, the connection head 29 extends into the accommodating space of the connector 60 by using screw-thread fit in the rotating manner, and is fastened to the housing 61 of the connector 60.

A process in which the plugging apparatus 200 fetches the connector from the jumper storage apparatus 300 is described as follows.

The swing arm 28 of the plugging apparatus 200 is adjusted to align an end of the screw rod of the connection head 29 of the plugging apparatus 200 with the third opening 6122 on the rear end face 612 of the connector 60. The connection head 29 is driven to move along the lifting track 27, so that the matching portion 292 moves toward the third opening 6122 and moves until the matching portion 292 is in contact with the inner wall of the third opening 6122. The motor is started to drive the revolving pair to rotate, so that the matching portion 292 is rotated. The matching portion 292 matches with internal threads in the accommodating space 615 of the housing 61 of the connector 60, the matching portion 292 moves into the accommodating space 615, and is fastened to the housing 61. In this case, the pluggable body 291 of the connection head 29 completely blocks the rear end face 612, and the pluggable body 291 also blocks the pressing surface 6172. Then, the connection head 29 moves along the lifting track 27, so that the connection head 29 drives the connector 60 to move out of the jumper storage apparatus 300.

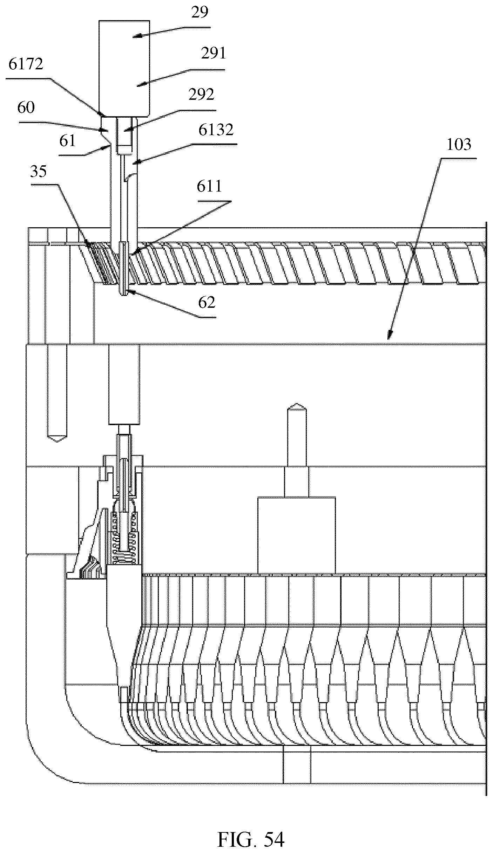

FIG. 54 to FIG. 60 illustrate a process in which the plugging apparatus 200 inserts a connector 60 into an adapter port on the distribution panel 103.

As shown in FIG. 54, the swing arm 28 of the plugging apparatus 200 is adjusted to align the connector 60, above the distribution panel 103, directly with one of the adapter ports. A bottom of the adapter port has been connected to a peer connector. In this state, the second opening 6132 of the housing 61 of the connector 60 faces toward a center of the distribution panel 103. That is, a cable outlet direction of the cable 63 of the connector 60 extending from the optical channel in the housing 61 faces toward the center of the distribution panel 103 (where the cable 63 is not shown in FIG. 54), and the pressing surface 6172 on the outer surface of the housing 61 is located on a side that is of the housing and that is adjacent to the elastic pressing member 35.

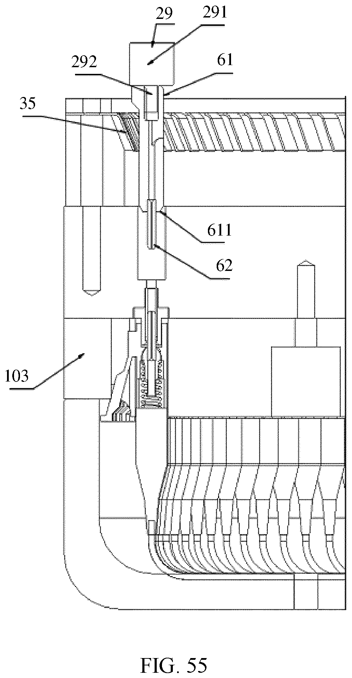

As shown in FIG. 55, the connection head 29 of the plugging apparatus 200 moves along the lifting track 27, so that the connection head 29 carrying the connector 60 moves downward (that is, moves towards the distribution panel 103). In this way, a portion that is of the ferrule 62 of the connector 60 and that is exposed outside the front end face 611 of the housing 61 moves into the adapter port. In this case, the front end face 611 of the housing 61 moves to the opening position of the adapter port.

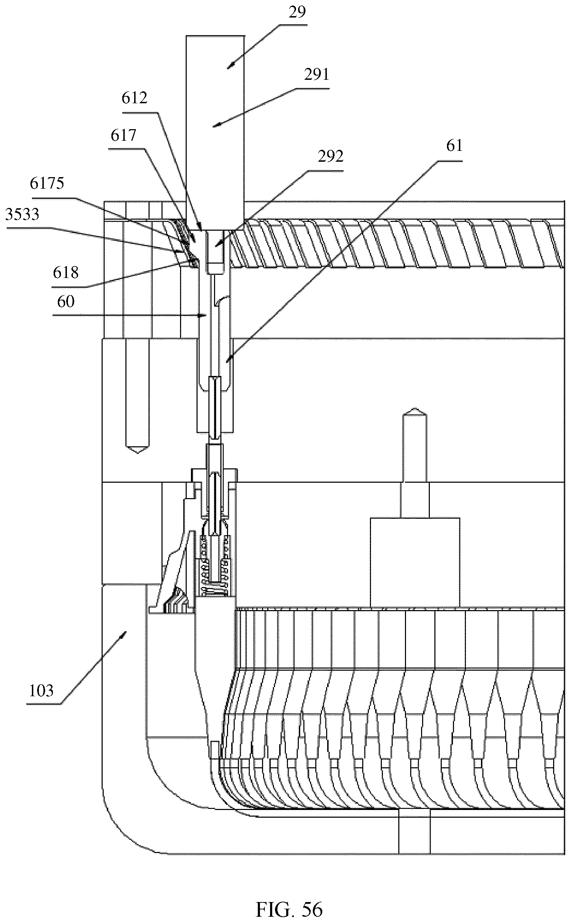

As shown in FIG. 56, the connection head 29 carrying the connector 60 continues to move downward, and a part of the housing 61 of the connector 60 enters the adapter port. In this case, the housing 61 is in contact with the elastic pressing member 35. Specifically, in this state, an edge that is of the third surface 6175 of the second section 617 of the housing 61 of the connector 60 and that away from the rear end face 612 (namely, the boundary line of the third surface 6175 and the inclined surface 618) is in contact with an intermediate position of the abutting portion 3533 of the spring sheet 353 of the elastic pressing member 35.

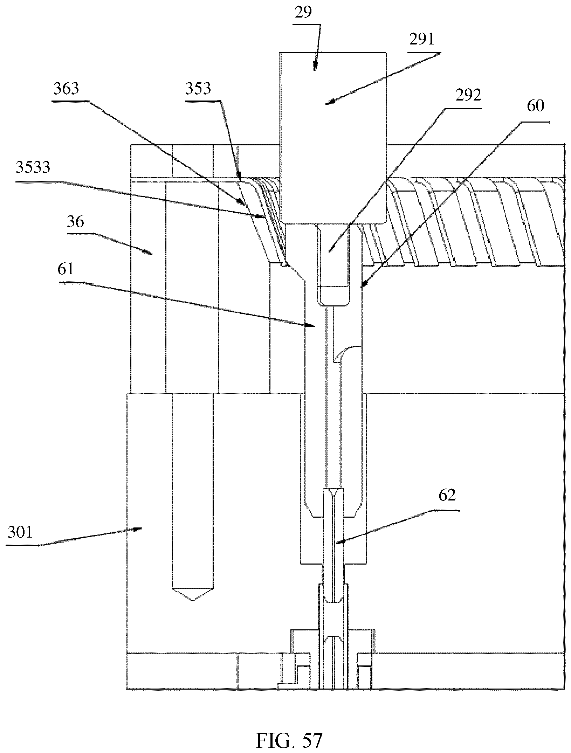

As shown in FIG. 57, the connection head 29 carrying the connector 60 continues to move downward, so that the housing 61 of the connector 60 moves along the abutting portion 3533 of the spring sheet 353 of the elastic pressing member 35. In this state, the housing 61 of the connector 60 is in contact with the end position of the abutting portion 3533 of the spring sheet 353. In a process from the state shown in FIG. 56 to the state shown in FIG. 57, the elastic pressing member 35 is squeezed by the housing 61 to generate elastic deformation. This may also be understood as: The abutting portion 3533 of the spring sheet 353 is pushed toward an inner side surface 363 of the support member 36 due to pushing force of the housing 61, and a gap between the abutting portion 3533 of the spring sheet 353 and the inner side surface 363 of the support member 36 is reduced.

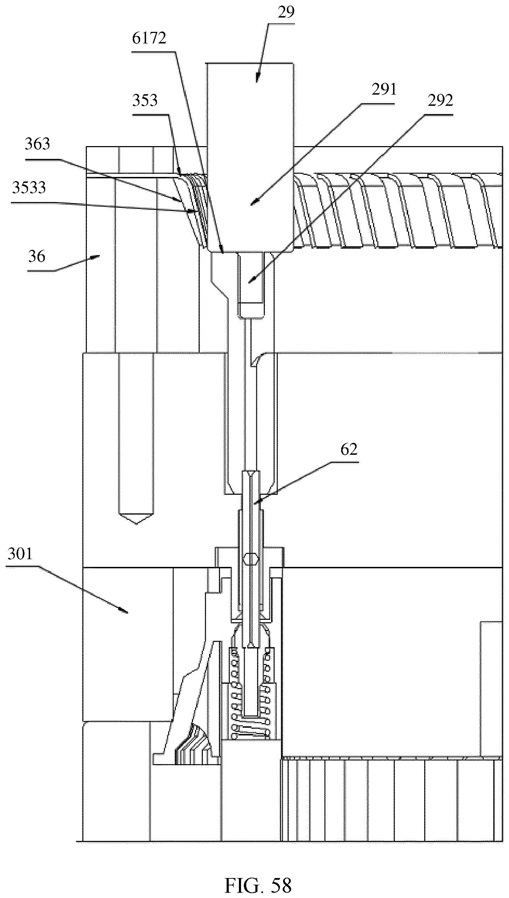

As shown in FIG. 58, the connection head 29 carrying the connector 60 continues to move downward, so that the connector 60 is completely inserted into the adapter port. In this case, a front end face of the ferrule 62 of the connector 60 is in contact with a ferrule of the peer connector. In this state, an end of the abutting portion 3533 of the spring sheet 353 of the elastic pressing member 35 is separated from (that is, is not in contact with) the housing 61 of the connector 60. The end of the abutting portion 3533 of the spring sheet 353 of the elastic pressing member 35 is in contact with the connection head 29 of the plugging apparatus 200.

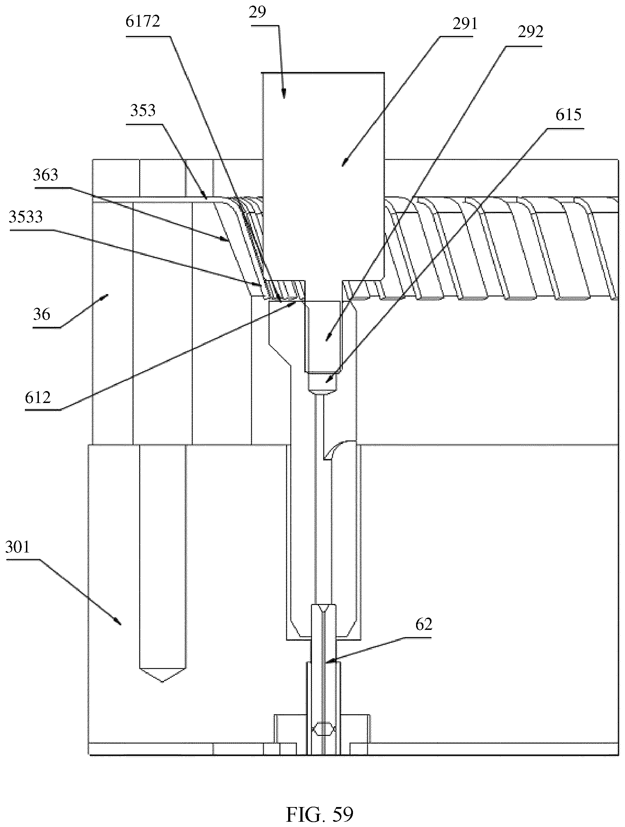

As shown in FIG. 59, the connection head 29 is rotated, so that the connection head 29 moves upward (where a moving speed needs to be controlled in this process, so that the connector 60 is kept in a pressed state in the adapter port, that is, in close contact with the ferrule of the peer connector 60). A part of the matching portion 292 of the connection head 29 moves out of the accommodating space 615 of the connector 60, and a gap is formed between the pluggable body 291 of the connection head 29 and the rear end face 612 of the housing 61 of the connector 60. In this state, due to the gap, the end of the abutting portion 3533 of the spring sheet 353 of the elastic pressing member 35 moves into the gap under elastic force of the spring sheet.

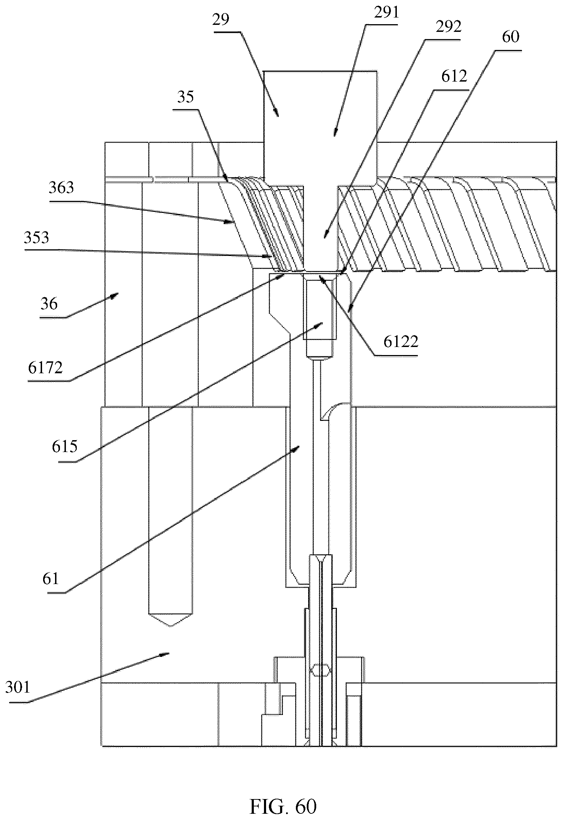

As shown in FIG. 60, in a process in which the connection head 29 moves upward, the gap between the pluggable body 291 of the connection head 29 and the rear end face 612 of the housing 61 of the connector 60 gradually increases. When the connection head 29 leaves the connector 60, the spring sheet 353 of the elastic pressing member 35 abuts against the pressing surface 6172, to lock the connector 60 to the adapter port.

For a process in which the plugging apparatus removes the connector from the adapter port, refer to FIG. 60 to FIG. 54 in reverse order. Specific descriptions are as follows: As shown in FIG. 60 and FIG. 59, when the connector 60 in the adapter port needs to be removed, the connection head 29 of the plugging apparatus 200 moves above the distribution panel 103, so that the end of the matching portion 292 of the connection head 29 is aligned with the third opening 6122 of the rear end face 612 of the housing 61 of the connector 60. The connection head 29 moves downward. When the matching portion 292 of the connection head 29 is in contact with the housing 61 at the third opening 6122, a rotating motor of the plugging apparatus 200 is started, so that the connection head 29 is rotated. During the rotation of the connection head 29, the connection head 29 moves downward while is rotated through the screw-thread fit of the matching portion 292 and the accommodating space 615. In addition, during the movement, the pluggable body 291 of the connection head 29 is in contact with the abutting portion 3533 of the spring sheet 353 of the elastic pressing member 35, and applies pushing force to the abutting portion 3533 of the spring sheet 353, so that the spring sheet 353 comes close to the inner side surface 363 of the support member 36. In this process, the end of the abutting portion 3533 of the spring sheet 353 moves on the pressing surface 6172 toward the edge of the pressing surface 6172.

As shown in FIG. 58, when the matching portion 292 completely enters the accommodating space 615, the end face of the pluggable body 291 of the connection head 29 is in contact with the rear end face 612 of the housing 61 of the connector 60. In this case, the pluggable body 291 completely blocks the pressing surface 6172. The end of the abutting portion 3533 of the spring sheet 353 is located outside the pressing surface 6172, and the end of the abutting portion 3833 of the spring sheet 353 is in contact with an outer edge of the pluggable body 291. Refer to FIG. 57, FIG. 56, FIG. 55, and FIG. 54 sequentially. The plugging apparatus 200 is operated, so that the connection head 29 carrying the connector 60 moves upward. In this way, the connector 60 gradually moves out of the adapter port, and the abutting portion 3533 of the spring sheet 353 automatically returns.

In this application, the avoidance in the insertion process and the automatic return in the insertion state are completed by using the elastic deformation of the elastic pressing member in the process of inserting the connector into the adapter port, to realize locking without additional operation of another locking or unlocking functional structure. It is necessary to only push the connector and the plugging apparatus to abut against the elastic pressing member in the process of inserting and removing the connector, to implement synchronous locking and synchronous unlocking in the insertion and removal process. This application has advantages of easy operation and low costs.

In the implementation shown in FIG. 41, the distribution panel further includes a fiber routing structure 17 and a pressing plate 38. Refer to FIG. 41, FIG. 42, and FIG. 45. The fiber routing structure 17 is protruded on the distribution surface 33. The fiber routing structure 17 is configured to wind a wire, and the connecting jumper bypasses the fiber routing structure 17. In an implementation, the fiber routing structure 17 is located in a central position of the distribution surface 33. One end of the fiber routing structure 17 is connected to the distribution surface 33, and the other end of the fiber routing structure 17 is away from the distribution surface 33, and extends in a direction perpendicular to the distribution surface.

Refer to FIG. 45. The pressing plate 38 is connected to the fiber routing structure 17, and accommodating space around the fiber routing structure 17 is formed between the pressing plate 38 and the distribution surface 33. The accommodating space is configured to accommodate a part of the connecting jumper. Specifically, the pressing plate 38 has a disk shape, and includes a flat plate-shaped pressing body 381, an edge portion 382 located at a periphery of the pressing body 381, and a fixing piece 383 located at a center of the pressing body 381. In an implementation, an outer edge of the pressing body 381 is circular, and the pressing body 381 may be parallel to the distribution surface 33. The edge portion 382 and the pressing body 381 are integrally constructed, and the edge portion 382 is tilted from the outer edge of the pressing body 381 in a direction away from the distribution surface 33. The fixing piece 383 is fastened to the fiber routing structure 17. In an implementation, the fixing piece 383 is provided with a through hole. The fiber routing structure 17 is in a column shape. The fiber routing structure 17 passes through the through hole of the fixing piece 383, or one end of the fiber routing structure 17 extends into the through hole. The fixing piece 383 may be fastened to the fiber routing structure 17 by using a bolt or a buckle.

In a process in which the plugging apparatus 200 inserts the standby jumper into the adapter port, the standby jumper enters the accommodating space and bypasses the fiber routing structure 17.

One standby jumper has two connectors. One of the connectors is inserted into the first port 11 in the sequence shown in FIG. 54 to FIG. 60, and the other connector needs to be inserted into the second port 12. In this way, a wiring process is completed. The standby jumper that has been inserted into the adapter ports is a connecting jumper. A process in which the plugging apparatus 200 removes and inserts a fiber for the other connector is specifically as follows.

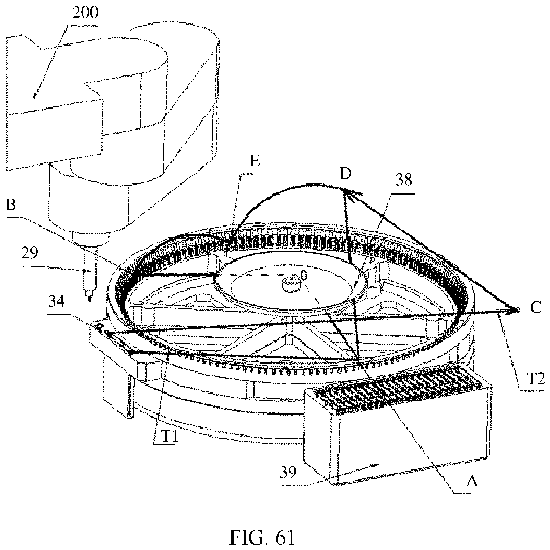

After fetching the other connector 60 from the jumper fetching window W of the jumper storage apparatus 300, the plugging apparatus 200 pulls the whole standby jumper out, that is, also pulls a cable of the standby jumper out of the jumper storage apparatus 300. In the process of inserting the connector 60 into the corresponding second port 12, the plugging apparatus 200 keeps a middle part of the cable straightened as much as possible. As shown in FIG. 61, in a process in which the plugging apparatus 200 inserts the connector 60 into a port A, the connection head 29 directly moves from the jumper storage apparatus 300 to the position A (along a first track T1). When the other connector needs to be inserted into a port B, the connector is first fetched from the jumper storage apparatus 300, and the connection head 29 drives the connector to move along a second track T2 to a point C, and moves to a point D. When the point D is arrived, a distance between the points A and D is approximately the same as a length of the standby jumper. In this case, with the point A as a center of a circle, the connection head 29 moves to a point E. Within the period of time, the cable of the standby jumper is nearly straightened, and the connection head 29 controls a distance between the connection head 29 and the pressing plate 38. Therefore, the cable is guided by the edge portion 382 (namely, the tilting structure at the edge) of the pressing plate 38, and is restrained into the area between the pressing plate 38 and the distribution surface 33. When the connection head 29 reaches the point E, the connection head 29 moves with O as the center to the target point B, and inserts the connector into the adapter port, so that wiring is completed once.

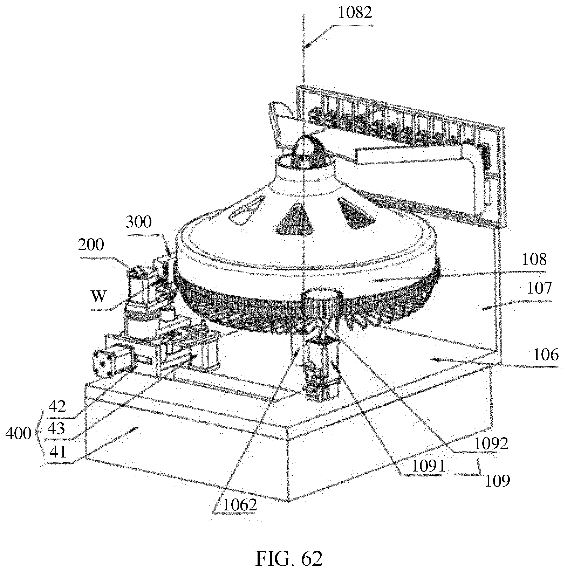

In an implementation, a distribution panel of the optical fiber distribution device provided in this application can rotate, and moving space of a plugging apparatus is reduced to an area at a corner of a periphery of the distribution panel. The optical fiber distribution device provided in this implementation has advantages of miniaturization and low costs. Refer to FIG. 62, FIG. 63, and FIG. 64. In this implementation, the optical fiber distribution device includes a base board 106 and a side plate 107. The base board 106 and the side plate 107 are perpendicular to each other, and an edge of the side plate 107 is connected to an edge of the base board 106 to form an L-shaped architecture. The base board 106 includes a top surface and a bottom surface that are oppositely disposed, and the side plate 107 is located on one side of the top surface. A distribution panel 108, a distribution panel driving structure 109, a transmission mechanism 42 of a jumper recycling apparatus 400, a jumper cutting mechanism 43, and a plugging apparatus 200 are mounted on the top surface of the base board 106, and a recycling box 41 of the jumper recycling apparatus 400 is disposed at a bottom of the base board 106. The jumper storage apparatus 300 is located on one side of the base board 106, and the jumper storage apparatus 300 and the side plate 107 are respectively located at adjacent side positions of the base board 106. The jumper storage apparatus 300 is close to the plugging apparatus 200 and the distribution panel 108, so that the plugging apparatus 200 fetches a standby jumper from the jumper storage apparatus 300 and inserts the standby jumper into a port of the distribution panel 108.

A stationary shaft 1062 is protruded on the top surface of the base board 106. An axial direction of the stationary shaft 1062 is perpendicular to the base board 106, and a bottom end face of the stationary shaft 1062 is fastened to the base board 106. The distribution panel 108 is rotatably connected to the stationary shaft 1062. The distribution panel 108 is opposite to the base board 106 by space. The distribution panel 108 is approximately disk-shaped, and a central position of the distribution panel 108 is rotatably connected to the stationary shaft 1062. It may be understood that a mounting hole may be disposed at the central position of the distribution panel 108, and the stationary shaft 1062 extends into the mounting hole. A rotational connection between the distribution panel 108 and the stationary shaft 1062 may be achieved by using a rotating bearing connection. A central axis of the stationary shaft 1062 is a rotating central axis 1082 of the distribution panel 108.

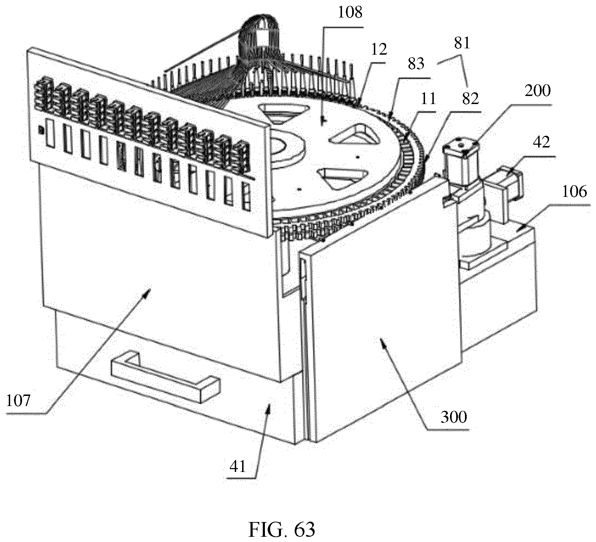

A distribution surface of the distribution panel 108 in FIG. 62 is blocked by a cover body. In FIG. 63, the cover body is removed, and the distribution surface of the distribution panel 108 can be seen. The distribution panel 108 includes a distribution body 81. The distribution body 81 is in a disk shape, a top surface of the distribution body 81 is the distribution surface 83, an outer side surface of the distribution body 81 is a cylindrical surface, and a tooth structure 82 is disposed on the outer side surface of the distribution body 81. A plurality of adapter ports are disposed on the distribution surface 83. The plurality of adapter ports are arranged as a rotational symmetry architecture. A rotation center of the rotational symmetry architecture is the rotating central axis 1082 of the distribution panel. The plurality of adapter ports include a plurality of first ports 11 and a plurality of second ports 12, and an arrangement structure of the first ports 11 and the second ports 12 on the distribution surface 83 may be the same as that in the implementation shown in FIG. 41. That is, the distribution surface 83 may also be divided into two areas. The first ports 11 are in one area, and the second ports 12 are in the other area. The first ports 11 and the second ports 12 may also be distributed on the distribution surface 83 in other manners. For example, a small-diameter port distribution circle (referred to as an inner ring) and a large-straight port distribution circle (referred to as an outer ring) may be disposed on the distribution surface 83. The first ports may be distributed to the inner ring, and the second ports may be distributed to the outer ring.

The optical path is implemented by inserting connectors at two ends of a connecting jumper into a corresponding first port 11 and a corresponding second port 12 respectively, and each connecting jumper bypasses the central axis 1082. This may be understood as follows: The first port 11, the central axis 1082, and the second port 12 jointly determine an extension path of the connecting jumper. A fiber routing structure may be disposed above the distribution surface 83 of the distribution panel 108. Specifically, in a distribution process, the connector is first inserted into the first port 11. In a process of inserting the other connector of the standby jumper into the second port 12, the plugging apparatus 200 carrying the other connector moves to a side that is of the fiber routing structure on the distribution surface and that is away from the first port 11, so that the cable bypasses a surface of the side of the fiber routing structure away from the first port 11 (where in this state, the cable bypasses the surface of the side of the fiber routing structure away from the first port 11 but does not necessarily be in contact with the surface of the fiber routing structure), and plugs the other connector into the second port 12. Because the port distribution manners in this implementation and the implementation shown in FIG. 41 are the same, and both are disk-shaped distribution architectures, for a specific position and structure of the fiber routing structure and a connection relationship between the fiber routing structure and the distribution panel in this implementation, refer to the implementations shown in FIG. 41 and FIG. 42.

In the implementation shown in FIG. 62, the tooth structure 82 on the outer surface of the distribution body 81 is distributed on a same circumference around the rotating central axis 1082 of the distribution panel 108. The distribution panel driving structure 109 is fastened to the top surface of the base board 106, and is located at the periphery of the distribution panel 108. The distribution panel driving structure 109 includes a drive motor 1091 and a rotating gear 1092. A bottom end of the drive motor 1091 is fastened to the base board 106, a motor shaft protrudes out of a top end of the drive motor 1091, the motor shaft is connected to the rotating gear 1092, and the drive motor 1091 is configured to drive the rotating gear 1092 to rotate. The rotating gear 1092 meshes with the tooth structure 82 on the distribution panel 108, so that the distribution panel 108 is driven to rotate by rotation of the rotating gear 1092.

Refer to FIG. 62, FIG. 63, and FIG. 64. The base board 106 includes a first side 1063. The jumper storage apparatus 300 is located outside the base board 106 and disposed close to the first side 1063. The plugging apparatus 200 is on the base board 106 and disposed close to the first side 1063. A jumper fetching window W of the jumper storage apparatus 300 faces toward the plugging apparatus 200. In this implementation, the jumper storage apparatus 300 includes only one jumper fetching window W. The plugging apparatus 200 is provided with a gripper, and a fiber is fetched from the jumper fetching window by using the gripper.

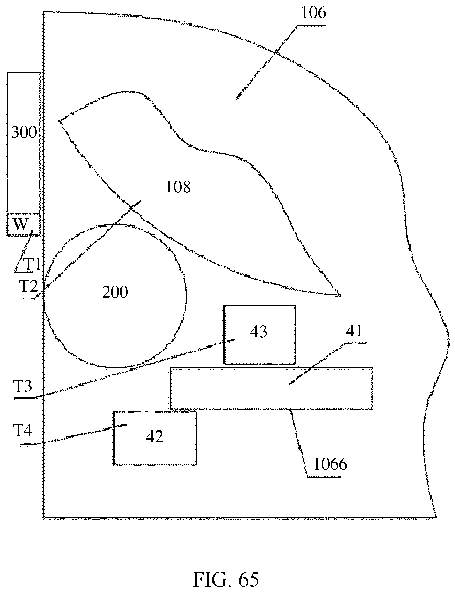

FIG. 65 schematically represents an arrangement at one corner of the base board, and schematically represents a positional relationship between parts. The jumper storage apparatus 300, the distribution panel 108, the jumper cutting mechanism 43, and the transmission mechanism 42 are disposed at different work stations around the plugging apparatus 200. Specifically, in this implementation, four work stations are disposed at the periphery of the plugging apparatus 200: a first work station T1 for the jumper storage apparatus 300 to fetch a fiber, a second work station T2 for the distribution panel 108 to insert the fiber, a third work station T3 for the jumper cutting mechanism 43 to cut the fiber, and a fourth work station T4 for the transmission mechanism 42 to transport a discarded jumper. At a position between the third work station T3 and the fourth work station T4, the base board 106 is provided with an opening 1066. The recycling box 41 is located below the opening 1066, and the opening 1066 is located between the third work station T3 and the fourth work station T4.

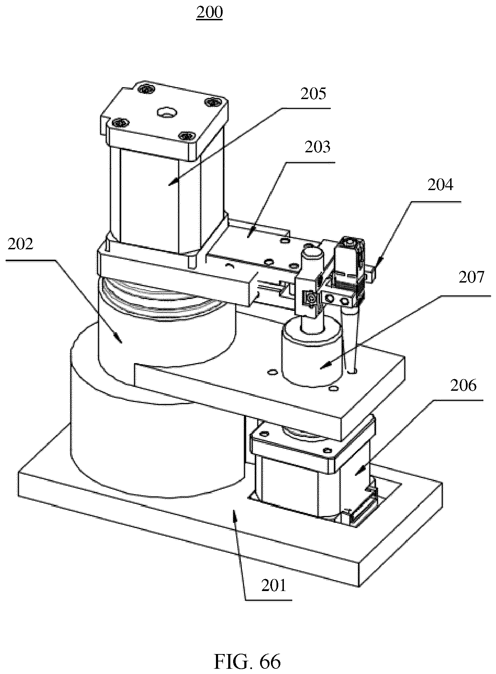

Refer to FIG. 66. The plugging apparatus 200 includes a triaxial driven mechanical arm system. The plugging apparatus 200 includes a seat body 201, a rotating shaft 202, a mechanical arm 203, and a gripper 204. The seat body 201 is configured to bear all components of the plugging apparatus 200, so that the plugging apparatus 200 forms an integrated modular apparatus. This facilitates installation and replacement. The seat body 201 is fastened to the base board 106, to position and mount the plugging apparatus 200 on the base board 106. The rotating shaft 202 is fastened to the seat body 201, one end of the mechanical arm 203 is rotatably connected to the rotating shaft 202, and the gripper 204 is disposed at the other end (which may be understood as a free end of the mechanical arm) of the mechanical arm 203. In an implementation, the first work station T1, the second work station T2, the third work station T3, and the fourth work station T4 are disposed on a same circumference around the rotating shaft. The plugging apparatus 200 includes three motors. The 1^{st} motor 205 is mounted on the rotating shaft 202, and is configured to drive the mechanical arm 203 to rotate around the rotating shaft 202, so that the gripper 204 reaches the different work stations separately, to fetch a fiber, remove/insert a connector, and discard a jumper. The 2^{nd} motor 206 is mounted on the seat body 201, and is configured to push the mechanical arm 203 to move up and down in the Z-axis direction (that is, move in a direction perpendicular to the base board 106), corresponding to posture positions such as removal and insertion. The 3^{rd} motor 207 is disposed adjacent to the gripper 204, so that the gripper 204 clamps/releases the optical fiber.

In this application, rotating, lifting, and clamping operations of the plugging apparatus 200 in combination with the rotating action of the distribution panel 108 implements distribution. When the optical fiber distribution device needs to connect to a new service port, for example, the target port A and the target port B on the distribution panel 108 need to be connected to implement an optical path, specific operations are as follows.

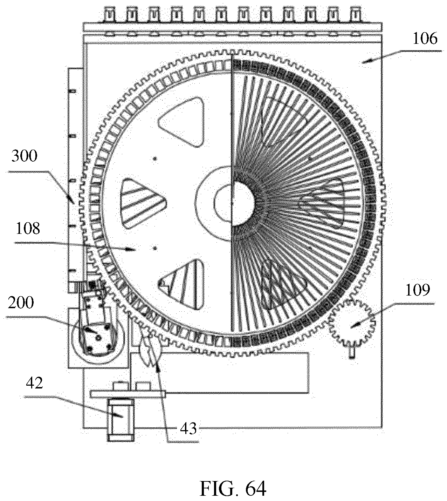

With reference to FIG. 64, FIG. 65, and FIG. 66, the mechanical arm of the plugging apparatus is rotated to the first work station T1, so that the mechanical arm 203 first fetches a connector at one end of the standby jumper from the jumper fetching window W of the jumper storage apparatus 300. The mechanical arm 203 is rotated, so that the gripper 204 of the plugging apparatus 200 clamps the connector, and moves to the second work station T2. The distribution panel 108 is rotated, so that the target port A on the distribution panel 108 moves to the second station T2. In this case, the target port A is aligned with the gripper 204, and the connector is inserted into the target port A. Then, the mechanical arm 203 is rotated back to the first work station T 1, so that the gripper 204 fetches a connector at the other end of the standby jumper from the jumper storage apparatus 300. The distribution panel 108 is operated, and is rotated until the target port B is aligned with the second work station T2. During the rotation of the distribution panel 108, it is necessary to ensure that a cable of the standby jumper bypasses the central axis of the distribution panel 108. A rotation range of the distribution panel 108 is greater than or equal to 180 degrees and less than or equal to 360 degrees. The mechanical arm 203 is rotated to the second work station T2, the target port B is aligned with the gripper 204, and the insertion action is completed. In this manner, an equal-length jumper may be used to complete the connection of the optical path between the two ports.

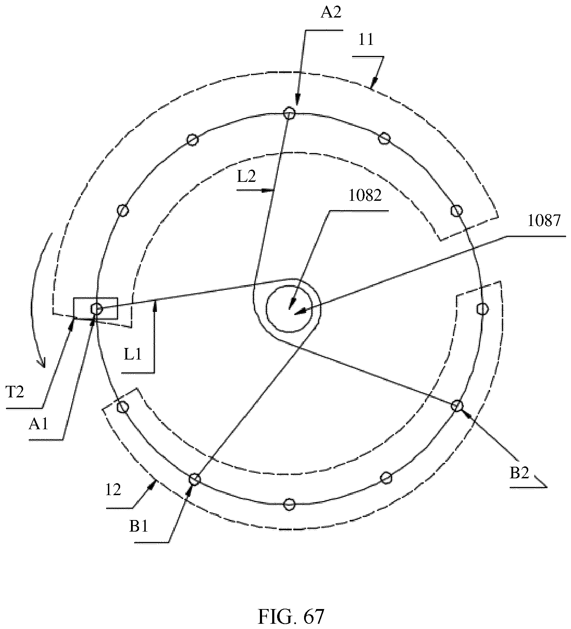

Refer to FIG. 67 to FIG. 70. The fiber routing structure 1087 at the position of the central axis 1082 of the distribution panel 108 is configured to bypass the connecting jumper. As shown in FIG. 67, the plurality of adapter ports are distributed on a same circumference, and are of a rotational symmetry architecture with the central axis as the center. FIG. 67 schematically shows 12 adapter ports, including six first ports 11 and six second ports 12. In FIG. 67, the six first ports are circled by dashed-line boxes, and the dashed-line box is marked as 11, indicating that the adapter port is the first port. Similarly, the six second ports are also circled by dashed-line boxes, and the dashed-line box is marked as 12, indicating that the adapter port is the second port. The fiber routing structure 1087 is disposed at the central axis 1082. Two connecting jumpers L1 and L2 are schematically shown in the figure. The following describes in detail a rotation manner of the distribution panel 108 in a distribution process of the two connecting jumpers L1 and L2. In FIG. 67, a rectangular block indicates the second work station T2 of the plugging apparatus 200 of the optical fiber distribution device.

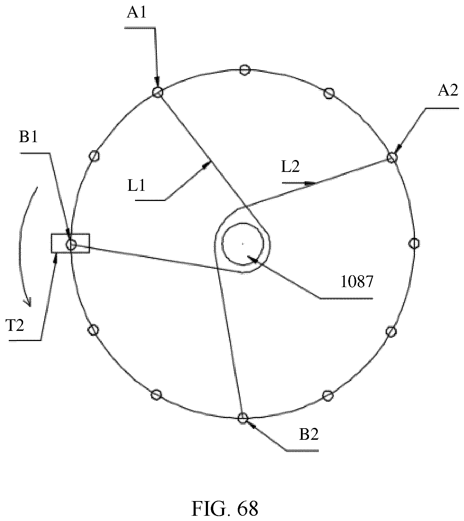

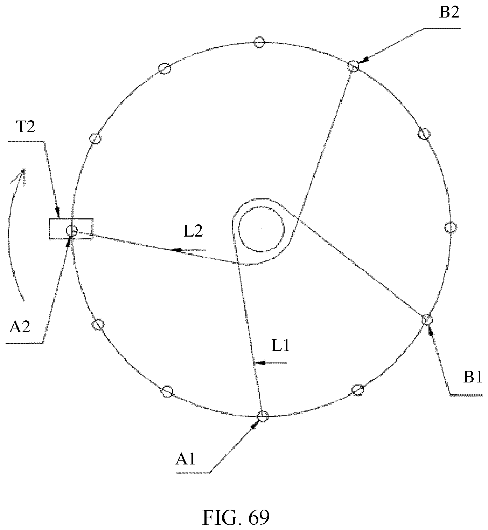

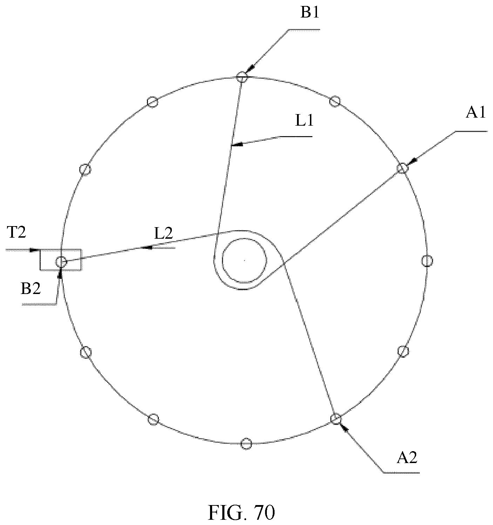

When a first connecting jumper L1 needs to be connected to a first port A1 and a second port B1, after the plugging apparatus 200 inserts one connector of the first connecting jumper L1 into the first port A1, the distribution panel 108 is rotated in a direction of an arrow shown in FIG. 67, that is, the distribution panel 108 is rotated counterclockwise, and a rotation angle of the distribution panel 108 is greater than 180 degrees, so that the second port B1 is rotated to the second work station T2. As shown in FIG. 68, during the rotation of the distribution panel 108, a cable of the first connecting jumper L1 bypasses the fiber routing structure 1087. In this state, the other connector of the first connecting jumper L1 is inserted into the second port B 1, to complete distribution of the first connecting jumper L 1. On the basis of FIG. 68, when a second connecting jumper L2 needs to be connected to a first port A2 and a second port B2, the first port A2 needs to be rotated to the second work station first. As shown in FIG. 68, the distribution panel may still be rotated counterclockwise. Certainly, in this case, the distribution panel may alternatively be rotated clockwise. Any rotating direction may be allowed provided that the first port A2 is rotated to the second work station T2. As shown in FIG. 69, in this case, the first port A2 is rotated to the second work station T2. After one connector of the second connecting jumper L2 is inserted into the first port A2, the distribution panel needs to be rotated clockwise (in a direction of the arrow shown in FIG. 69) until the second port B2 is rotated to the second work station T2 (as shown in FIG. 70). Similarly, during the rotation of the distribution panel, a cable of the second connecting jumper L2 bypasses the fiber routing structure 1087. In this case, the other connector of the second connecting jumper L2 is inserted into the second port B2, to complete distribution of the second connecting jumper L2.

In general, in a process of distribution by rotating the distribution panel 108 in combination with the operation of the plugging apparatus 200, a rotation direction of the distribution panel 1008 is determined based on positions of the first port 11 and the second port 12 on the circumference. As long as it is ensured that the rotation angle of the distribution panel 108 is greater than or equal to 180 degrees and less than or equal to 360 degrees, the cable of the standby jumper can bypass the fiber routing structure 1087 at the central axis of the distribution panel 108 in the rotation process.

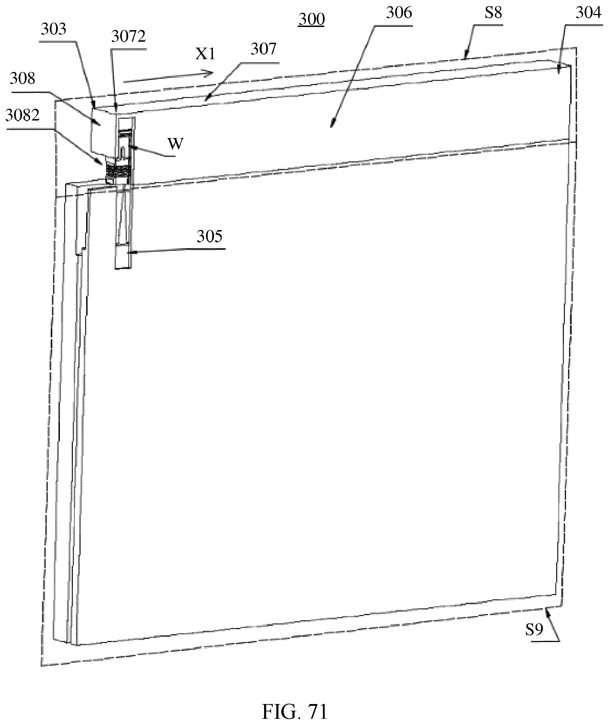

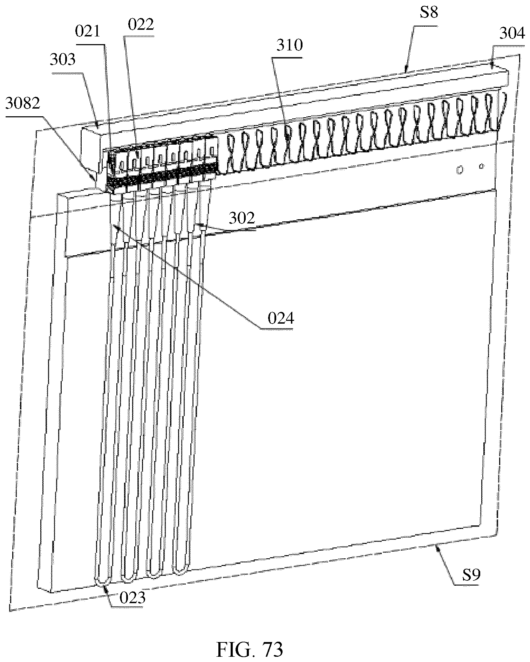

In an implementation, for a specific structure of a fiber storage structure 300 of the optical fiber distribution device, refer to FIG. 71, FIG. 72, and FIG. 73. As shown in FIG. 73, the jumper storage apparatus 300 is configured to accommodate a plurality of standby jumpers 302, and each standby jumper 302 includes connectors 021 and 022 at two ends and a cable 023 connected between the two connectors 021 and 022. A tail sleeve 024 is disposed at a joint between the cable 023 and the connector 021. The jumper storage apparatus 300 includes a first area S8 and a second area S9. As shown in FIG. 71 and FIG. 73, a long-strip-shaped dashed line box on a top of the jumper storage apparatus 300 indicates the first area S8, and a large quadrilateral dashed line box below the first area S8 indicates the second area S9. Specifically, the first area S8 is in a long strip shape and extends in a first direction X1, the second area S9 is adjacent to the first area S8, and internal space of the first area S8 communicates with internal space of the second area S9. In the extension direction of the first area S8, the first area S8 includes a first end 303 and a second end 304 that are oppositely disposed. The first area S8 is provided with a jumper fetching window W, and the jumper fetching window W connects the internal space of the first area S8 to the outside. The jumper fetching window W is located at the first end 303. The second area S9 is provided with a fiber fetching opening 305 that connects the inner space of the second area S9 to the outside, and the fiber fetching opening 305 communicates with the jumper fetching window W. The first area S8 includes two strip-shaped first baffles 306 that are oppositely disposed at an interval, and space between the two first baffles 306 is configured to accommodate the connectors 021 and 022 of the standby jumpers. The first area S8 further includes a side plate 308 and a top plate 307 that is in a strip shape and that is connected between the tops of the two first baffles 306. The top plate 307 includes an edge portion 3072 extending to the outside of the first baffle 306, and the side plate 308 is connected to the edge portion 3072 of the top plate 307. A notch 3082 is disposed between the side plate 308 and the second area S9. One end of the side plate 308, the edge portion 3072, and the first baffles 306 jointly enclose the jumper fetching window W.

Refer to FIG. 73. The connectors 021 and 022 at two ends of the standby jumper 302 are accommodated in the first area S8, and are arranged in a linear array along the first direction X1. In the first area S8, the connectors 021 and 022 at two ends of the same standby jumper 302 are disposed adjacently. An elastic apparatus 310, such as a spring, is further disposed in the first area S8. The elastic apparatus 310 is located in internal accommodating space of the first area S8, and is elastically connected between the connector 022 and the second end 304 of the first area S8. The elastic apparatus 310 supports all the connectors 021 and 022, so that the connector 021 or 022 at the first end 303 is located in the jumper fetching window W. After the connector 021 or 022 in the jumper fetching window W is removed, the elastic apparatus 310 pushes a next connector 022 or 021 to the jumper fetching window W. The cable 023 connected between the connectors 021 and 022 at the two ends of the standby jumper 302 is accommodated in the second area S9. Specifically, the cable 023 of each standby jumper is arranged inside the second area S9 in a U shape.

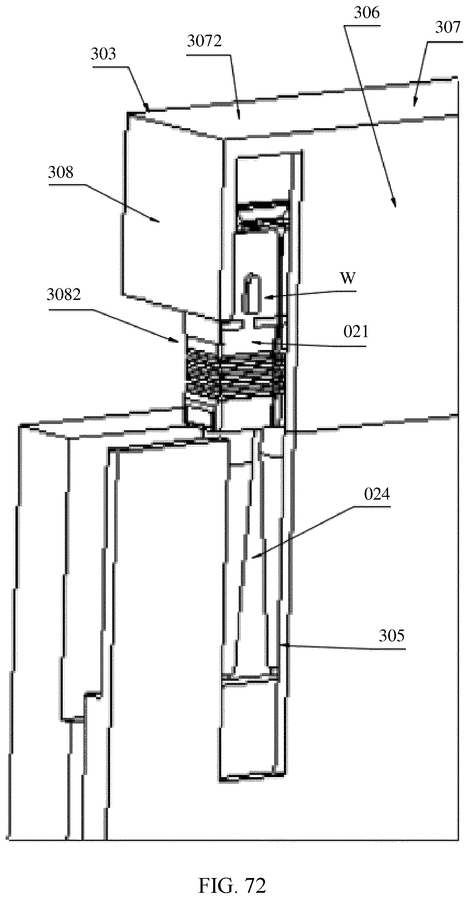

Refer to FIG. 72. One of the connectors 021 is accommodated in the jumper fetching window W, and the jumper fetching window W is a position at which the plugging apparatus 200 fetches the standby jumper 302 from the jumper storage apparatus 300. The plugging apparatus 200 can enter the jumper fetching window W from the notch 3082, clamp the connector 021, and move the connector 021 out of the jumper storage apparatus 300 from the jumper fetching window W in a direction perpendicular to the first baffle 306. In this process, the tail sleeve 024 that is of the standby jumper 302 and that is connected to the connector 021 in the second area S9 is moved out of the jumper storage apparatus 300 from the fiber fetching opening 305 of the second area S9.

In an implementation, the optical fiber distribution device further includes a control system. The control system can monitor consumption of the standby jumpers of the jumper storage apparatus 300, to remind of replacement of the jumper storage apparatus. For example, a counter may be disposed on the jumper storage apparatus. After one standby jumper is fetched, the control system controls the counter to perform a record, so that a quantity of jumpers used for illustration in the jumper storage apparatus can be clearly approached.

In each of the implementations shown in FIG. 41 and FIG. 62, the quantity of distribution panels is one. In addition, on the distribution panels, the adapter ports are arranged in the rotational symmetry architecture with one central axis as a rotation center. The distribution panel may be in a disc shape, and the rotation center is a central axis of the disc-shaped distribution panel.

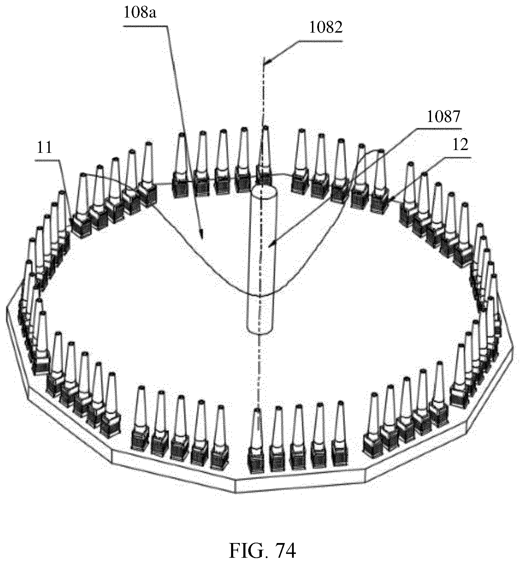

In this application, a shape of a distribution panel provided with the adapter ports that are arranged in a rotational symmetry architecture is not limited to a disc shape, and the distribution panel may alternatively be in another shape. For example, as shown in FIG. 74, a distribution panel 108a is in a polygon, and the polygon is also a rotational symmetry architecture. On a polylateral distribution surface, a plurality of adapter ports may be correspondingly disposed on each side. FIG. 74 schematically shows an architecture of the polylateral distribution panel 108a, and five adapter ports are disposed on each side. Distribution may still be performed by rotating the distribution panel 108a. Certainly, the distribution panel 108a may alternatively be of a fixed structure, and the distribution is performed only by moving the plugging apparatus. A fiber routing structure 1087 is also disposed on the distribution panel 108a shown in FIG. 74, and the fiber routing structure 1087 is located at a central axis 1082 of the rotational symmetry architecture. Some of the adapter ports on the distribution panel 108a are first ports 11, and some of the adapter ports are second ports 12. A connecting jumper connected between a corresponding first port 11 and a corresponding second port 12 bypasses the fiber routing structure 1087. FIG. 74 schematically depicts one connecting jumper. In this implementation, there is no excessive redundant length of the connecting jumper between the first port 11 and the second port 12. That is, a length of the connecting jumper is slightly greater than a diameter of the distribution panel, and the length of the connecting jumper may be specifically 1.2 times the diameter of the distribution panel. Alternatively, a distance between each adapter port and the central axis is R, and the length of the connecting jumper is slightly greater than 2R, for example, may be specifically greater than or equal to 2.2R and less than or equal to 2.5R.

The distribution panels shown in FIG. 41 and FIG. 73 each include a planar distribution surface (also referred to as an insertion surface), and a plurality of adapter ports are distributed on the distribution surface and face toward a same direction. In another implementation, the distribution surface of the distribution panel may alternatively be cylindrical. As shown in FIG. 74, adapter ports are distributed on the distribution surface, and all the adapter ports face toward a central position of the distribution panel. When the distribution panel is of a rotating structure, all the adapter ports face toward a rotation axis of the distribution panel. In another implementation, the distribution panel may alternatively include a cylindrical insertion surface, the plurality of ports are disposed on the insertion surface, and the ports face toward a direction away from the central axis.

In the implementations shown in FIG. 41 and FIG. 74, on a distribution surface of a distribution panel, a plurality of adapter ports are arranged as a row of port groups, and a port group arranged on a circumference around a central axis is referred to as a row of port groups, or may be referred to as a circle of port groups. In another implementation, a plurality of adapter port may alternatively be arranged as a two-row (two-circle) or multi-row (multi-circle) port group structure. For example, one row of port groups are arranged on a small circumference, and the other row of port groups are arranged on a large circumference. The two rows of ports may have a common central axis, and the adapter ports in the two rows of port groups may be misaligned in a circumferential direction.

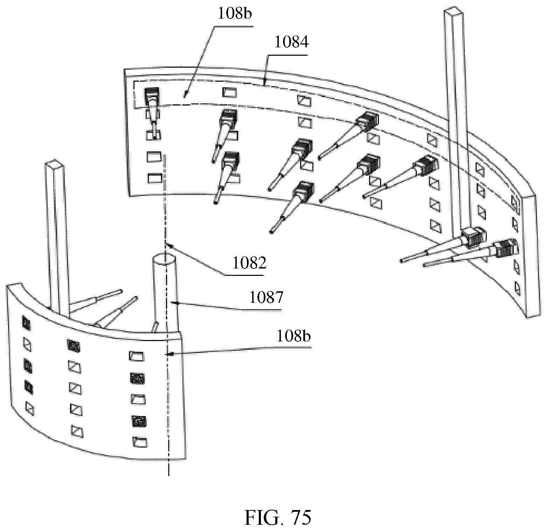

In another implementation, the multi-row port groups may alternatively be arranged in an axial direction. As shown in FIG. 75, in this implementation, a part of a distribution panel 108b is schematically drawn, and the distribution panel 108b is substantially cylindrical. A distribution surface of the distribution panel 108b is an inner surface of a cylindrical structure. On the distribution surface, five rows of port groups 1084 are disposed. Apart in a dashed line box in FIG. 75 is one row of port groups 1084. In this implementation, the plurality of rows of port groups 1084 are arranged in the axial direction. Specifically, the rows of port groups 1084 correspond to different axial positions of the central axis 1082, and radial distances between the rows of port groups 1084 and the central axis 1082 are the same. In another implementation, the rows of port groups 1084 may be designed as follows: Different port groups 1084 correspond to different axial positions of the central axis 1082, and radial distances between the port groups 1084 and the central axis 1082 are also different. Alternatively, the port groups 1084 correspond to a same axial position of the central axis 1082, and radial distances between the port groups 1084 and the central axis 1082 are different. Each row of port groups 1084 may be of a rotational symmetry architecture centered on the central axis 1082, and the one or more rows of port groups 1084 may have an angle of 360 degrees or less around the central axis.

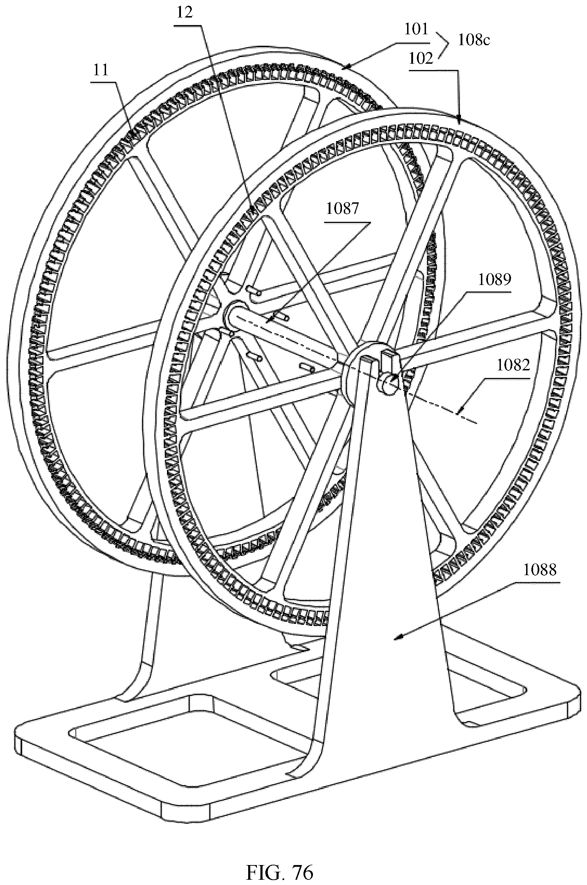

Refer to FIG. 76. In an implementation, the distribution panel 108c includes a first distribution panel 101 and a second distribution panel 102, and the first distribution panel 101 and the second distribution panel 102 are oppositely disposed at an interval. Specifically, in this implementation, the optical fiber distribution device includes a bracket 1088, connected between the first distribution panel 101 and the second distribution panel 102 by using a fiber routing structure 1087, and forms an integrated panel apparatus. Two sides of the integrated panel apparatus are provided with a pair of rotating connecting portions 1089. The pair of rotating connecting portions 1089 are distributed at a position of the central axis 1082 on a side of the first distribution panel 101 away from the second distribution panel 102, and at a position of the central axis 1082 on a side of the second distribution panel 102 away from the first distribution panel 101. The first distribution panel 101 and the second distribution panel 102 are rotatably connected to the bracket 1088 by using the rotating connecting portions 1089, so that the first distribution panel 101 and the second distribution panel 102 have a degree of freedom of rotation centered around the central axis 1082. In an implementation, the first distribution panel 101 is fastened to the second distribution panel 102 as a whole, and can rotate synchronously by using the central axis 1082 as the center. In another implementation, the first distribution panel 101 and the second distribution panel 102 may alternatively have a connection relationship of relative rotation. To be specific, the first distribution panel and the second distribution panel are not fastened on a same rotating shaft, but each has a rotating shaft. In a distribution process, the first distribution panel 101 and the second distribution panel 102 do not rotate at the same time. In this solution, the two distribution panels may be connected to a same drive motor, and the drive motor is connected between the two panels by using a clutch structure. The drive motor is connected to the first distribution panel 101 or the second distribution panel 102 by switching the clutch structure.

The plurality of first ports 11 are disposed on the first distribution panel 101, and the plurality of second ports 12 are disposed on the second distribution panel 102. The first ports 11 face toward the second ports 12. The first ports 11 are rotationally symmetrically distributed on the first distribution panel by using the central axis 1082 as the center, and the second ports 12 are rotationally symmetrically distributed on the second distribution panel 102 by using the central axis 1082 as the center. In an implementation, the fiber routing structure 1087 is located at the central axis 1082, and the fiber routing structure 1087 is configured to bypass the connecting jumper. A rotation range of the distribution panel 108c is greater than or equal to 180 degrees and less than or equal to 360 degrees. There may be one fiber routing structure 1087, disposed at the central axis 1082. Alternatively, there may be two or more fiber routing structures 1087, and the fiber routing structures 1087 may alternatively be disposed away from the central axis 1082.

In conclusion, this application provides a plurality of different optical fiber distribution devices, a plurality of different jumper recycling apparatuses, and a plurality of different jumper storage apparatuses. The jumper recycling apparatuses provided in different implementations may all be used in the different optical fiber distribution devices. For example, the jumper recycling apparatus shown in FIG. 18 may be used in the optical fiber distribution device shown in FIG. 25, or may be used in the optical fiber distribution device shown in FIG. 62. The transmission mechanism of the jumper recycling apparatus shown in FIG. 33 may be used in the optical fiber distribution device shown in FIG. 6 or used in the optical fiber distribution device shown in FIG. 62.

This application provides an optical fiber scheduling method, including the following steps.

A plugging apparatus fetches a standby jumper from a jumper storage apparatus.

The plugging apparatus inserts connectors at two ends of the standby jumper into a corresponding first port and second port respectively, to implement an optical path. Alternatively, the plugging apparatus removes the connectors at the two ends of the connecting jumper from the first port and the second port, and the plugging apparatus transports the discarded jumper to a jumper recycling apparatus.

Specifically, when the jumper storage apparatus of the optical fiber distribution device has only one jumper fetching window, in the optical fiber scheduling method provided in this application, a process of "the plugging apparatus fetches the standby jumper from the jumper storage apparatus" includes: The plugging apparatus fetches one connector of the to-be-fetched standby jumper from the jumper fetching window, and inserts the fetched connector into the first port. Then the plugging apparatus fetches the other connector of the to-be-fetched standby jumper from the jumper fetching window, and inserts the fetched connector into the second port.

When the jumper storage apparatus of the optical fiber distribution device includes two jumper fetching windows, in the optical fiber scheduling method provided in this application, a process of "the plugging apparatus fetches the standby jumper from the jumper storage apparatus" includes: The plugging apparatus fetches two connectors of the to-be-fetched standby jumper from the two jumper fetching windows, and inserts the two fetched connectors into the corresponding first port and second port respectively. Based on different architectures of the plugging apparatus, the fiber fetching processes may also be different. When the plugging apparatus is the implementation shown in FIG. 6, the plugging apparatus has only one mechanical arm 23, and the mechanical arm 23 first fetches one connector, and inserts the connector into the first port. Then, the mechanical arm 23 is started again to fetch the other connector, and insert the connector into the second port. When the plugging apparatus is the implementation shown in FIG. 25, there are two same plugging apparatuses in the optical fiber distribution device. The two plugging apparatuses may simultaneously fetch connectors from the two jumper fetching windows of the jumper storage apparatus, and synchronously insert the two connectors into the first port and the second port respectively.

In a specific implementation, a process in which the plugging apparatus transports the discarded jumper to the jumper recycling apparatus includes: The plugging apparatus transports the discarded jumper to the transmission mechanism, and starts the transmission mechanism to transport the discarded jumper to the recycling box by using the transmission mechanism. When the transmission mechanism is the pair of friction wheels shown in FIG. 18 and FIG. 19, and the plugging apparatus transports the connectors of the discarded jumper to the transmission mechanism, the transmission mechanism is started, so that the pair of friction wheels clamp the discarded jumper. Then, the plugging apparatus releases the connectors. The transmission mechanism is started to bring the discarded jumper into the recycling box through rotation of the friction wheels. When the transmission mechanism is the solution shown in FIG. 33, the plugging apparatus transports the connectors of the discarded jumper to the jumper fixing structure in the material discharging area of the transmission mechanism. The plugging apparatus fastens the connectors of the discarded jumper to the jumper fixing structure. Then, the plugging apparatus leaves the transmission mechanism, and starts the transmission mechanism, to transport the connectors of the discarded jumper to the material taking area of the transmission mechanism through movement of the conveyor belt. The plugging apparatus removes the connectors from the jumper fixing structure in the material taking area, and places the connectors on the conveyor belt. By reversing the conveyor belt, the discarded jumper falls into the recycling box.

When the size of the connector of the connecting jumper is large, and the connecting jumper is removed from the distribution panel by the plugging apparatus, the jumper becomes a discarded jumper. In a process in which the jumper recycling apparatus recycles the discarded jumper into the recycling box, one connector of the discarded jumper needs to be cut off. Therefore, in an implementation, in the optical fiber scheduling method provided in this application, before "the plugging apparatus transports the discarded jumper to the jumper recycling apparatus", the method includes: The plugging apparatus removes the first plug (one connector of the discarded jumper), and transports the first plug to the jumper cutting mechanism. The jumper cutting mechanism cuts off the first plug. The plugging apparatus removes the second plug (the other connector of the discarded jumper), and transports the second plug to the jumper recycling apparatus.

This application further provides an optical fiber scheduling system. The optical fiber scheduling system includes an optical fiber distribution device and a controller. The controller is configured to perform the optical fiber scheduling method provided in this application, to distribute cables to the optical fiber distribution device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical fiber distribution device, comprising:
a distribution area, comprising at least a first port and a second port, wherein two connectors of a same connecting jumper are respectively inserted into the first port and the second port to implement an optical path;
a storage area and/or a recycling area, wherein the storage area is configured to dispose a jumper storage apparatus, the jumper storage apparatus is configured to store standby jumpers, and the recycling area is configured to dispose a jumper recycling apparatus; and
a plugging apparatus, capable of moving between the distribution area and the storage area, and/or between the distribution area and the recycling area, wherein
the plugging apparatus is capable of fetching one of the standby jumpers from the jumper storage apparatus, and inserting two connectors of the standby jumper into the first port and the second port respectively to implement an optical path; and/or the plugging apparatus is configured to remove the two connectors of the connecting jumper from the first port and the second port respectively, and transport the removed connecting jumper to the jumper recycling apparatus.

2. The optical fiber distribution device according to claim 1, wherein the optical fiber distribution device comprises a first distribution panel and a second distribution panel, the first distribution panel and the second distribution panel are oppositely disposed at an interval, the first port is disposed on the first distribution panel, the second port is disposed on the second distribution panel, and the first port faces toward the second port.

3. The optical fiber distribution device according to claim 2, wherein the first distribution panel and the second distribution panel are securely disposed inside the optical fiber distribution device, and the plugging apparatus is capable of extending between the first distribution panel and the second distribution panel, and moving to the first port and the second port.

4. The optical fiber distribution device according to claim 2, wherein the first port is one of a plurality of ports that are rotationally symmetrically distributed on the first distribution panel by using a central axis as a center, the second port is one of a plurality of ports that are rotationally symmetrically distributed on the second distribution panel by using the central axis as a center, and the first distribution panel and the second distribution panel are capable of rotating by using the central axis as the center.

5. The optical fiber distribution device according to claim 1, wherein the optical fiber distribution device comprises an integrated distribution panel, a plurality of ports are disposed on the integrated distribution panel, and the plurality of ports comprise the first port and the second port.

6. The optical fiber distribution device according to claim 5, wherein the plurality of ports are rotationally symmetrically distributed on the integrated distribution panel by using a central axis as a center.

7. The optical fiber distribution device according to claim 6, wherein the integrated distribution panel is capable of rotating around the central axis, and the integrated distribution panel is rotated to implement insertion of the standby jumper or removal of the connecting jumper by the plugging apparatus at a fixed position.

8. The optical fiber distribution device according to claim 7, wherein a rotation range of the integrated distribution panel is greater than or equal to 180 degrees and less than or equal to 360 degrees.

9. The optical fiber distribution device according to claim 8, wherein a first distribution area and a second distribution area are disposed on the integrated distribution panel, the first distribution area and the second distribution area are symmetrically distributed on two sides of a symmetry axis, the symmetry axis intersects the central axis, the first port is located in the first distribution area, and the second port is located in the second distribution area.

10. The optical fiber distribution device according to any one of claims 5 to 9, wherein lengths of all the connecting jumpers are equal, lengths of all the standby jumpers are equal, and the lengths of the connecting jumpers and the lengths of the standby jumpers are equal.

11. The optical fiber distribution device according to claim 1, wherein the jumper storage apparatus comprises a first area and a second area, the second area is adjacent to the first area, interior space of the first area communicates with interior space of the second area, connectors of the standby jumpers are located in the first area, cables of the standby jumpers are located in the second area, the first area is provided with a jumper fetching window, the jumper fetching window is configured to accommodate connectors of one of the standby jumpers, and the jumper fetching window is a position at which the plugging apparatus fetches the standby jumper from the jumper storage apparatus.

12. The optical fiber distribution device according to claim 11, wherein the first area is in a long strip shape, and the connectors of the standby jumpers are arranged in a linear array along an extension direction of the first area.

13. The optical fiber distribution device according to claim 12, wherein there is one first area, there is one jumper fetching window, and connectors at two ends of a same standby jumper are disposed adjacently in the first area.

14. The optical fiber distribution device according to claim 12, wherein there are two first areas, each of the first areas has one jumper fetching window, the second area is located between the two first areas, and connectors at two ends of a same standby jumper are respectively located in the different first areas.

15. The optical fiber distribution device according to claim 11, wherein the optical fiber distribution device further comprises a control system, the control system is capable of monitoring consumption of the standby jumpers of the jumper storage apparatus, to remind of replacement of the jumper storage apparatus.

16. The optical fiber distribution device according to claim 1, wherein the jumper recycling apparatus comprises a transmission mechanism and a recycling box, the plugging apparatus is configured to transport the removed connecting jumper to the transmission mechanism, and the transmission mechanism is configured to transport the removed connecting jumper to the recycling box.

17. The optical fiber distribution device according to claim 16, wherein the jumper recycling apparatus further comprises a jumper cutting mechanism, the jumper cutting mechanism is configured to cut off one connector of the removed connecting jumper, and the plugging apparatus is configured to transport the other connector of the removed connecting jumper to the jumper recycling apparatus.

18. An optical fiber scheduling method, applied to the optical fiber distribution device according to any one of claims 1 to 17, wherein the method comprises:
fetching, by the plugging apparatus, the standby jumper from the jumper storage apparatus, and inserting connectors at two ends of the standby jumper into the corresponding first port and second port respectively to implement an optical path; or
removing, by the plugging apparatus, connectors at two ends of the connecting jumper from the first port and the second port, and transporting the removed connecting jumper to the jumper recycling apparatus.

19. The optical fiber scheduling method according to claim 18, wherein a process in which the plugging apparatus fetches the standby jumper from the jumper storage apparatus specifically comprises: fetching, by the plugging apparatus, one of the connectors of the standby jumper first from the jumper fetching window, inserting the fetched connector into the first port, then fetching the other connector of the standby jumper from the jumper fetching window, and inserting the fetched connector into the second port.

20. The optical fiber scheduling method according to claim 18, wherein a process in which the plugging apparatus fetches the standby jumper from the jumper storage apparatus specifically comprises: fetching, by the plugging apparatus, the two connectors of the to-be-fetched standby jumper respectively from the two jumper fetching windows.

21. The optical fiber scheduling method according to any one of claims 18 to 20, wherein a process in which the plugging apparatus transports the removed connecting jumper to the jumper recycling apparatus specifically comprises: transporting, by the plugging apparatus, the removed connecting jumper to the transmission mechanism, starting the transmission mechanism, and transporting the removed connecting jumper to the recycling box by using the transmission mechanism.

22. The optical fiber scheduling method according to claim 21, wherein the two connectors of the connecting jumper removed by the plugging apparatus are respectively a first plug and a second plug; and
before the plugging apparatus transports the removed connecting jumper to the transmission mechanism, the optical fiber scheduling method further comprises: removing, by the plugging apparatus, the first plug, and transporting the first plug to the jumper cutting mechanism; cutting off, by the jumper cutting mechanism, the first plug; and removing, by the plugging apparatus, the second plug, and transporting the second plug to the transmission mechanism.

23. An optical fiber scheduling system, wherein the system comprises a controller and the optical fiber distribution device according to any one of claims 1 to 17, and the controller is configured to perform the optical fiber scheduling method according to any one of claims 18 to 22.
